# EUROPEAN PATENT SPECIFICATION

(11) **EP 0 303 510 B1**
(45) Date of publication and mention of the grant of the patent: **26.10.1994**
(21) Application number: 88307505.3
(22) Date of filing: 12.08.1988
(51) Int. Cl.: G09G 3/36

(54) **Liquid crystal display device**
Flüssigkristall-Anzeigegerät
Dispositif d'affichage à cristaux liquides

(30) Priority: 13.08.1987 JP 202154/87; 09.02.1988 JP 27922/88; 09.02.1988 JP 27923/88; 09.02.1988 JP 27924/88
(43) Date of publication of application: 15.02.1989
(73) Proprietor: SEIKO EPSON CORPORATION, Shinjuku-ku Tokyo-to (JP)
(72) Inventor: Yamazaki, Katsunori, Suwa-shi Nagano-ken (JP); Nagata, Mitsuo, Suwa-shi Nagano-ken (JP)
(74) Representative: Miller, Joseph

(56) References cited:
- EP-A- 0 162 969
- EP-A- 0 175 417
- GB-A- 2 020 875
- JP-A- 6 231 826

## Description

This invention relates to a liquid crystal display device.

Liquid crystal display devices are conventionally electrically driven by what is known as "voltage standard means". More specifically, the liquid crystal display devices are such that their display is turned ON or OFF in dependence upon whether an ON voltage or an OFF voltage is applied to a segment electrode when a selective voltage is applied to a common electrode on which display dots are provided. In the known method of electrically driving the liquid crystal display devices, a uniform rectangular waveform is in fact not applied to the display dots. There are two reasons for this, and the first reason is that each display dot has an electrical capacity based on its area, the thickness of the liquid crystal layer, the dielectric constant of the liquid crystal materials and so on. The second reason is that the common electrode and the segment electrode are both formed of transparent conductive film having a base resistance of about several tens of ohms, and naturally both of the common electrode and the segment electrode include a fixed electrical resistance. Thus, even if a uniform rectangular waveform is applied from a driving circuit, the waveform which is applied to the display dots in fact results in a deformation of the waveform. This causes a problem in generating the difference of effective voltage waveform which is applied to each display dot, thereby generating a required contrast crosstalk.

The above problem has been known from early on in the life of liquid crystal display devices. It is also known to prevent the problem by the method of reversing the polarity of the voltage which is applied to a liquid crystal panel in the liquid crystal device a number of times per frame, see for example Japanese Laid Open Patent Applications Nos. JP-A-6231825, JP-A-6019195 and JP-A-6019196. This method of reversing the polarity of the voltage is hereinafter referred to as a line reverse driving method.

The line reverse driving method applies, however, only to a first mode of crosstalk which will be described in more detail hereinbelow. Thus the crosstalk of the display contrast is not completely removed.

As a result of a study of the contrast cross-talk in a conventional liquid crystal display device, we have discovered the following two things. Firstly, the deformation of the voltage waveform which is applied to the display dots depends upon the pattern of the characters or drawings which are displayed on the liquid crystal display device. Secondly, a change of the effective voltage based on the deformation of the voltage waveform which is applied to the display dots, causes the contrast crosstalk.

Based on these discoveries, we have found that the occurrence of the contrast crosstalk may be prevented if the rule included into the patterns displayed in the liquid crystal display device are extracted quantitatively, and compensation is accomplished to the applied voltage waveform in accordance with the extracted quantity. It then depends upon which pattern rule causes the deformation of the applied voltage waveform crosstalk or the contrast crosstalk. GB-A-2 020 875 discloses counting the number of pixels in the ON state a single row or column of a liquid crystal display and modifying the relationship between the ON and OFF potentials for that row or column.

Up to now, we have discovered four modes in the contrast crosstalk, namely a first mode hereinafter referred to as a zebra crosstalk, a second mode hereinafter referred to as a horizontal crosstalk, a third mode hereinafter referred to as a vertical crosstalk, and a fourth mode hereinafter referred to as an inversion crosstalk. These four modes thus relate to the mechanism by which the contrast crosstalk occurs in a display in accordance with the change of the voltage waveform. The contrast crosstalk of the display occurs in response to the rule of the display content.

The present invention aims to provide an improved liquid crystal display device, wherein the rule of the display content is extracted quantitatively, so that the compensation corresponds to the extraction in order to provide an improved liquid crystal display device having an uniform display without any contrast crosstalk.

The present invention is based upon the observation that a deformation of voltage waveform, for example the curved or spike shape in the common voltage waveform for adding to the common electrode and the segment voltage waveform for adding to the segment electrode, generates based on a predetermined rule possessed by the pattern of drawings or characters for forming the display of the liquid crystal display device. This generates the difference in the effective voltage which should be added to each display element, and thereby generates the crosstalk of display contrast. The present invention provides the difference that at least one of the common voltage waveform or segment voltage waveform is made to be transformed based on the rule possessed by the pattern of drawings or characters for forming the display of the liquid crystal display device, whereby the difference of the effective voltage which should be added to each display dot is compensated, thereby enabling the provision of an improved display without any crosstalk of the display contrast.

According to one aspect of the present invention, there is provided a matrix liquid crystal display device for displaying characters or a pattern comprising: a first substrate; a plurality of common electrodes being formed on said first substrate; a second substrate; a plurality of segment electrodes being formed on said second substrate; a liquid crystal layer sandwiched between said first substrate and said second substrate; multiplex driving means for providing a common voltage waveform including a selected voltage or a non-selected voltage to said plurality of common electrodes and providing a segment voltage waveform including an ON voltage or an OFF voltage to said plurality of segment electrodes; and compensation means for compensating at least one of said common voltage waveform or said segmented voltage waveform based upon said pattern or said characters displayed by said liquid crystal display device. These patterns or characters are determined by the means specified in Claims 1-4.

Embodiments of the invention will now be described solely by way of example and with reference to the accompanying drawings, in which:-
Figure 1 is a block diagram of a liquid crystal display device according to one embodiment of the present invention;
Figure 2 shows a structure of the liquid crystal unit;
Figure 3 is a timing chart showing the control signal and the data signal;
Figure 4 is a block diagram showing a compensation circuit of Figure 1;
Figure 5 is a view showing the structure of the power circuit of Figure 1;
Figure 6 is a perspective view of a liquid crystal panel wherein one display pattern is displayed;
Figures 7 (A), (B) and (C) show the applied voltage waveform at the time of forming the pattern shown in Figure 6;
Figure 8 is an exploded view of the portion surrounded with a circle in Figure 7 (B);
Figure 9 is a block diagram showing the construction described in Example 2;
Figure 10 is a block diagram showing the construction of the compensation circuit of Figure 9;
Figure 11 illustrates the power circuit of Figure 9;
Figures 12 (A), (B) and (C) show the applied voltage waveform at the time of forming the pattern shown in Figure 6;
Figure 13 is an exploded view of the portion surrounded with a circle in Figure 12 (B);
Figure 14 is a block diagram showing the construction described in Example 3;
Figure 15 is a view showing the construction of the power circuit of Figure 14;
Figure 16 is a block diagram showing the construction described in Example 4;
Figure 17 is a view showing the construction of the power circuit of Figure 16;
Figure 18 is a view showing a potential function waveform;
Figure 19 is a view showing a triangular voltage waveform;
Figure 20 is a view showing the construction of the function waveform generating circuit;
Figure 21 is a block diagram showing the construction described in Example 5;
Figure 22 is a view showing the construction of the power source of Figure 21;
Figures 23 (A), (B) and (C) show the applied voltage waveform at the time of forming the pattern shown in Figure 6;
Figure 24 is a block diagram showing the construction described in Example 7;
Figure 25 is a block diagram showing the construction of the compensation circuit in Figure 24;
Figure 26 is a view showing the construction of the power circuit of Figure 24;
Figure 27 is a perspective view of the liquid crystal panel in which another display pattern is displayed;
Figures 28 (A), (B) and (C), and Figures 29 (A), (B) and (C) are the waveforms of the voltage applied to the liquid crystal panel for forming the display pattern of Figure 27;
Figure 30 is an exploded view of the portion surrounded with a circle in Figure 28 (B);
Figure 31 is an exploded view of the portion surrounded with a circle in Figure 29 (B);
Figure 32 is a block diagram showing the construction described in Example 10;
Figure 33 is a block diagram showing the construction of the compensation circuit of Figure 32;
Figure 34 is a block diagram showing the construction of the power circuit of Figure 32;
Figure 35 is a perspective view of the liquid crystal panel wherein another display pattern is displayed;
Figures 36 (A), (B) and (C) are the waveforms of the voltage applied to the liquid crystal panel for forming the display pattern shown in Figure 35;
Figure 37 is a block diagram showing the construction described in Example 12;
Figure 38 is a block diagram showing the construction of the compensation circuit;
Figure 39 is a perspective view of the liquid crystal panel wherein another display pattern is displayed;
Figures 40 (A), (B) and (C) are waveforms of the voltage applied to the liquid crystal panel;
Figure 41 is an exploded view of the portion surrounded with a circle in Figure 40 (B);
Figure 42 is a perspective view of the liquid crystal panel wherein another display pattern is displayed;
Figures 43 (A), (B) and (C) are perspective views of the waveform applied to the liquid crystal panel for forming the display pattern of Figure 42;
Figure 44 is an exploded view of the portion surrounded with a circle in Figure 43 (B);
Figure 45 is a block diagram showing the construction described in Example 14;
Figure 46 is a block diagram showing the construction of the compensation circuit of Figure 45;
Figure 47 shows a perspective view of the liquid crystal panel wherein another display pattern is displayed;
Figure 48 is a view showing the display condition at the time of forming the display pattern of Figure 47;
Figures 49 and 50 are voltage waveforms at the time when the common electrodes are changed from the non-selective voltage to the selective voltages respectively;
Figure 51 is a block diagram showing the construction described in Example 16;
Figure 52 is a block diagram showing the construction of the compensation circuit of Figure 51;
Figure 53 is a view showing the construction of the power circuit;
Figure 54 is a perspective view wherein another display pattern is displayed;
Figures 55 (A), (B) and (C) and Figures 56 (A), (B) and (C) are ideal waveforms of the voltage applied to the liquid crystal panel at the time of forming the display pattern of Figure 54;
Figure 57 is a perspective view of the liquid crystal panel wherein the display pattern of Figure 54 is formed;
Figures 58 (A), (B) and (C) and Figure 59 (A), (B) and (C) are waveforms of the voltage actually applied to the liquid crystal panel at the time of forming the display pattern of Figure 54;
Figure 60 is a perspective view of the liquid crystal panel wherein another display pattern is formed;
Figure 61 is a view showing the display condition when the display pattern of Figure 60 is formed;
Figures 62 (A), (B) and (C) and Figures 63 (A), (B) and (C) are waveforms of the voltage actually applied to the liquid crystal panel at the time of forming the display pattern of Figure 60;
Figure 64 is a perspective view of the liquid crystal panel wherein another display pattern is formed;
Figure 65 is a view showing the display condition when the display pattern of Figure 64 is formed;
Figures 66 (A), (B) and (C) and Figures 67 (A), (B) and (C) are waveforms of the voltage actually applied to the liquid crystal panel at the time of forming the display pattern of Figure 64;
Figure 68 is a perspective view of the liquid crystal panel wherein another display pattern is displayed;
Figure 69 is a view showing the display condition when the display pattern of Figure 68 is formed;
Figures 70 (A), (B) and (C) and Figures 71 (A), (B) and (C) are waveforms of the voltage actually applied to the liquid crystal panel at the time of forming the display pattern of Figure 68;
Figure 72 is a perspective view of the liquid crystal panel wherein another display pattern is displayed;
Figure 73 is a view showing the display condition when the display pattern of Figure 72 is formed;
Figures 74 (A), (B) and (C) and Figure 75 are waveforms of the voltage actually applied to the liquid crystal panel at the time of forming the display pattern of Figure 72;
Figure 76 is a perspective view of the liquid crystal panel wherein another display pattern is displayed;
Figure 77 is a view showing the display condition when the display pattern of Figure 76 is formed; and
Figures 78 (A), (B) and (C) and Figure 79 are waveforms of the voltage actually applied to the liquid crystal panel at the time of forming the display pattern of Figure 76.

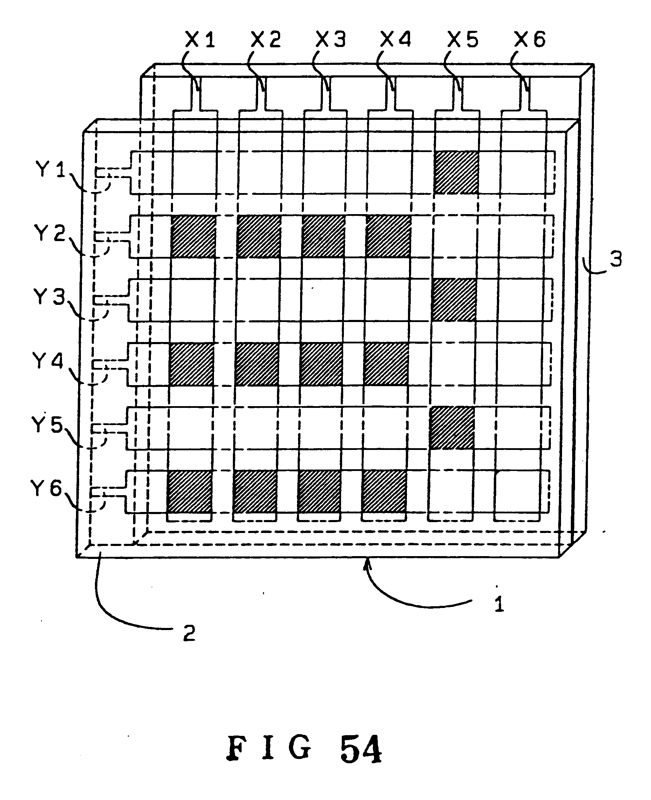

Referring now to the drawings, an explanation will first be given of the conventional driving method illustrated by Figures 54 to 56. Figure 54 shows a liquid crystal panel structure and the display contents thereof. A liquid crystal panel 1 comprises a liquid crystal layer and a pair of substrates 2 and 3 for sandwiching the liquid crystal layer. Common electrodes Y1 to Y6 are oriented in the substrate 2 to the horizontal direction and the segment electrodes X1 to X6 are formed in the substrate 3. Each crossed portion of the common electrodes Y1 to Y6 and the segment electrodes X1 to X6 forms a display dot. In Figure 54, the display dots marked by the hatching show the ON state, and the other dots show the OFF state. The number of dots in the liquid crystal panel shown in Figure 54 is 6 x 6, but it is to be appreciated that Figure 54 has been given for ease of explanation and the actual dot number may be much larger than this.

A selective voltage or non-selective voltage is applied to each of the common electrodes Y1 to Y6 successively. The period required to apply the successive selective voltage or non-selective voltage to all of the common electrodes Y1 to Y6 is referred to as one frame.

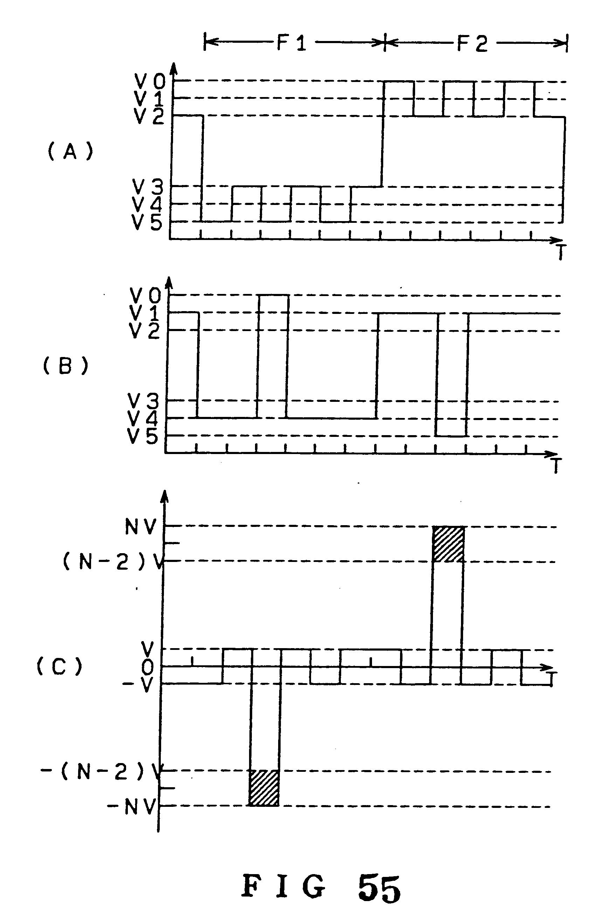

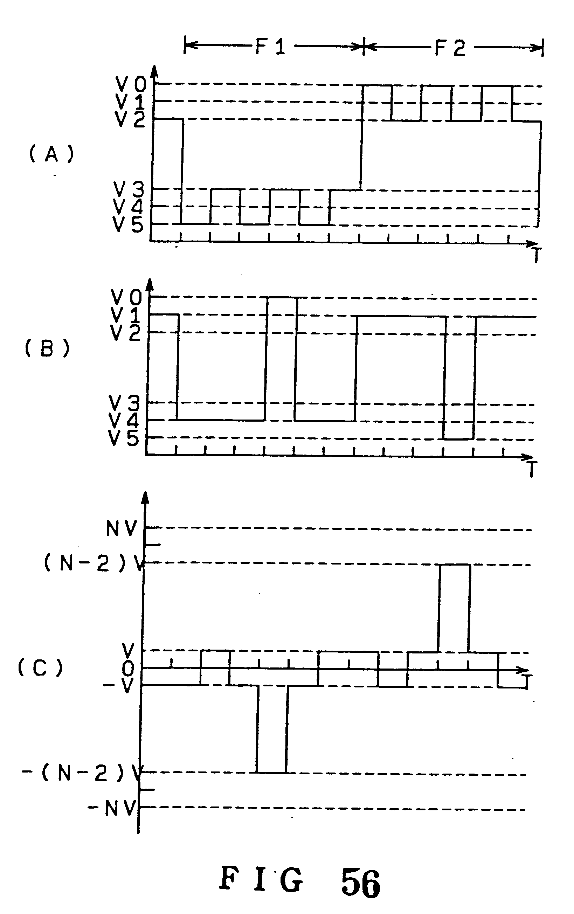

When the selective voltage or non-selective voltage is applied successively to each of the common electrodes Y1 to Y6, simultaneously the ON voltage or OFF voltage is applied to each of the segment electrodes X1 to X6. If the display dot in which one common electrode and one segment electrode cross each other is to be turned on, the ON voltage is applied to the segment electrode when the common electrode is selected. If the display dot is to be turned off, the OFF voltage is applied thereto. One example of the actual driving waveform (i.e. the waveform of the applied voltage) is shown in Figures 55 and 56.

Figure 55 (A) shows the segment voltage waveform added to the segment electrode X5 of Figure 54. Figure 55 (B) shows the common electrode waveform added to the common electrode Y3. Figure 55 (C) shows the voltage waveform applied to the display dot (ON state) where the segment electrode X5 and the common electrode Y3 cross each other.

Figure 56 (A) shows the segment voltage waveform added to the segment electrode X5. Figure 56 (B) shows the common voltage waveform added to the common electrode Y4. Figure 56 (C) shows the voltage waveform applied to the display dot (OFF state) where the segment electrode X5 and the common electrode Y4 cross each other.

In Figures 55 and 56, F1 and F2 indicate the frame period.

In the frame period F1,

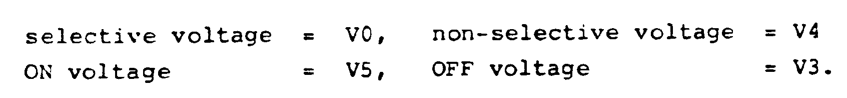

In the frame period F2, 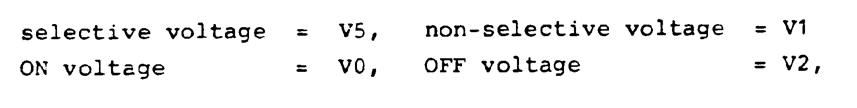
wherein:
V0 - V1 = V1 - V2 = V
V3 - V4 = V4 - V5 = V
V0 - V5 = n.V (n is a constant).
As mentioned above, by changing the polarity of the voltage which is applied to the display dots in the frame periods F1 and F2, the alternating driving is accomplished.

As can be seen from a comparison of Figures 55 and 56, whether the display dot is turned on or off depends whether the ON voltage or OFF voltage is applied to the segment electrode when the selective voltage is applied to the common electrode on which the display dots exist. This driving method is that which is referred to as the "voltage standard means" used in the prior art.

When the display is driven by the conventional voltage standard means, in fact, the uniform rectangular waveform as shown in Figures 55 and 56, is not applied to the display dots. There are two reasons for this, and the first reason is that each display dot has an electrical capacity based on the area of the display dot, the thickness of the liquid crystal layer, the dielectric constant of the liquid crystal materials and so on. The second reason is that the common electrode and the segment electrode are both formed of transparent conductive film having a base resistance of about several tens of ohms, and naturally both of the common electrode and the segment electrode include a fixed electrical resistance.

Therefore, even if a uniform rectangular waveform such as shown in Figures 55 and 56 is applied from the driving circuit, the waveform which is applied to the display dots in fact results in some deformation of the waveform. As a result, a problem occurs in generating the difference of effective voltage of waveform which is applied to each display dot, thereby generating the contrast crosstalk. As mentioned above, this problem is well known and the prevention of the problem by the method of reversing the polarity of voltage which is applied to the liquid crystal panel a number of times per one frame (i.e. a line reverse driving method) has been proposed in Japanese Laid Open Patents Nos. 31825/87, 19195/85 and 19196/85.

However, the line reverse driving method applies only to a first mode crosstalk and so the crosstalk of the display contrast is not completely removed.

Based on the discoveries mentioned in the introduction, we have found that the occurrence of the contrast crosstalk may be prevented in the following four modes of contrast crosstalk.

### 1. The first mode (hereinafter referred to as a zebra crosstalk)

The first mode is explained with reference to Figures 54, 57, 58 and 59. For ease of explanation, the common electrodes Y1 to Y6 are selected successively from the first common electrode Y1 to the sixth common electrode Y6, again returning to the first common electrode Y1. With respect to the liquid crystal panel, there is shown a so-called positive display, wherein the more the effective voltage is applied to the display dots, the darker the display becomes. These same conditions are used hereinafter.

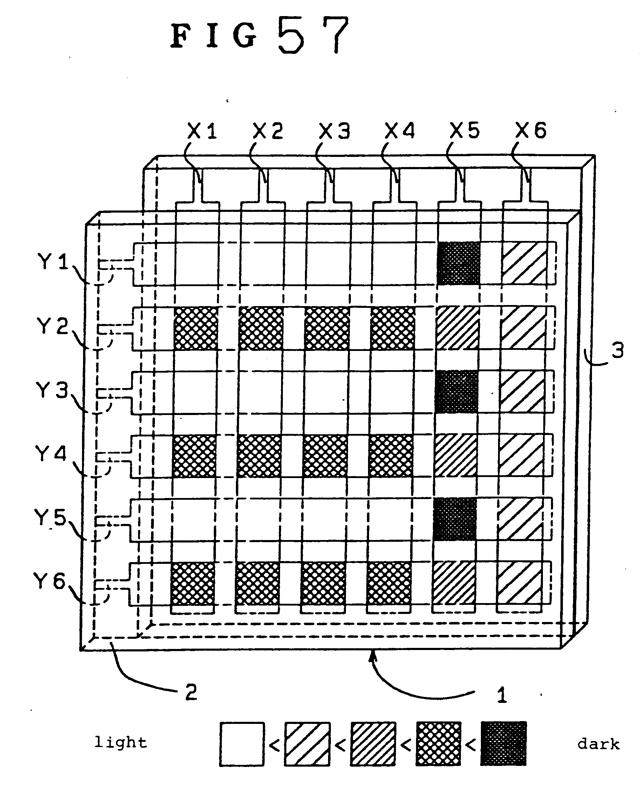

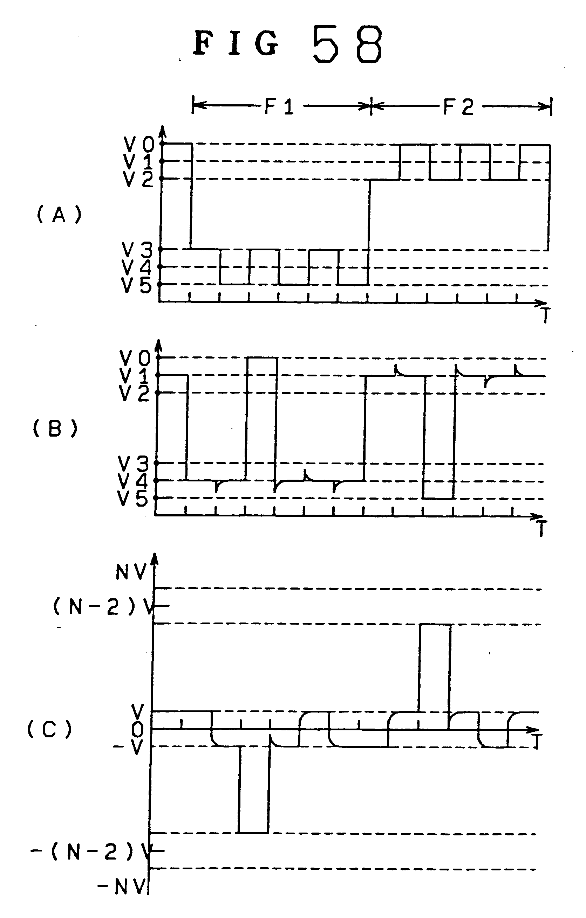

If the display is achieved as shown in Figure 54, the crosstalk of the display contrast as shown in Figure 57 actually occurs in the liquid crystal display device. At this time, the segment voltage waveform (X1 to X4 have the same waveform) at the display dots portion of the segment electrodes X1 to X4 is as shown in Figure 58 (A), the common voltage waveform at the display dot portion of the common electrode Y3 is as shown in Figure 58 (B), and the voltage waveform added to the display dot in which the segment electrodes X1 to X4 and the common electrode Y3 cross each other is shown in Figure 58 (C). Strictly speaking, the voltage waveforms which are applied to the four display dots are slightly different from each other, but this slight difference can be ignored. A spike shaped deformation of the voltage occurs at the non-selective voltage level of the common voltage waveform as shown in Figure 58 (B). The relation between the direction and the size of occurrence of the spike shaped voltage and the display pattern is as follows.

Generally, when the selection moves from the n-th common electrode to the (n+1)-th common electrode, it is defined that the number of the segment electrodes to which the ON voltage is added successively is a, the number of segment electrodes to which the OFF voltage is added successively is b, the number of the segment electrodes to which the voltage is added by switching from the ON voltage to OFF voltage is c, and the number of segment electrodes to which the voltage is added by switching from the OFF voltage to ON voltage is d.

The number of ON dots on the n-th common electrode is N_{ON}, the number of OFF dots thereon is N_{OFF}, and the number of ON dots on the (n+1)-th common electrode is M_{ON}, and the number of OFF dots thereon is M_{OFF}. The relationship between the above is as follows: 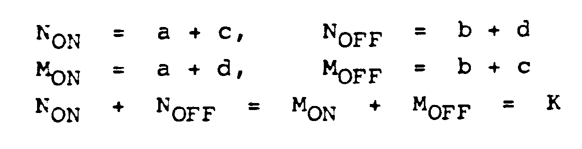
(wherein K is a constant and equal to the total of the display dots on the each common electrode).

If the value of I is: 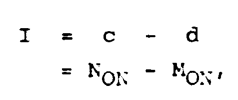
then where the value of I is negative, the direction of occurrence of the spike shaped voltage is at the side of the ON voltage. On the other hand, where the value of I is positive, the direction of occurrence of the spike shaped voltage is at the side of the OFF voltage. The size of the spike increases in accordance with the absolute value of I.

In other words, when the number d of segment electrodes in which the applied voltage switches from the OFF voltage to ON voltage is larger than the number of segment electrodes c in which the applied voltage switches from the ON voltage to OFF voltage, the spike shaped voltage occurs on the common voltage waveform at the side of the ON voltage. In contrast, when the sign of I which is the difference between c and d changes, the spike shaped voltage occurs at the side of OFF voltage. Additionally, the value of the spike shaped voltage corresponds to the absolute value of I.

As shown in Figures 58 (A) and (B), where the relation between the change of the segment voltage waveform and the direction of the spike shaped voltage of the common voltage waveform on the non-selective voltage is in-phase, a curved portion occurs in the voltage waveform as shown in Figure 58 (C) added to the display dots. The longer the in-phase period, the smaller the effective value. Thus, the displayed colour becomes very light.

Reference will now be made to the case where the change of the segment voltage waveform and the direction of the spike on the common voltage waveform is in anti-phase.

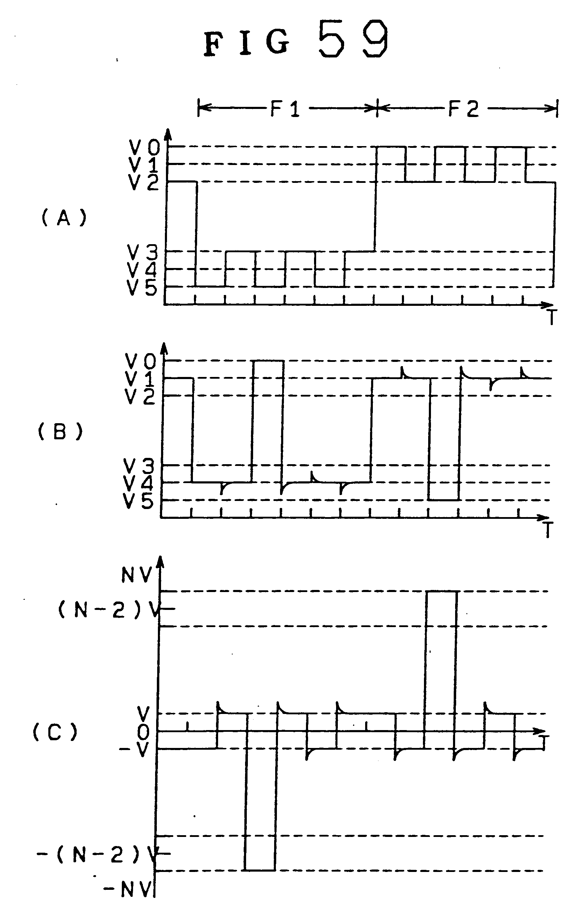

Figure 59 (A) shows the segment voltage waveform at the display dot portion of the segment electrode X5 of Figure 54, Figure 59 (B) shows the common voltage waveform at the display dot portion of the common electrode Y3, and Figure 59 (C) shows the voltage waveform which is added to the display dot in which the segment electrode X5 and the common electrode Y3 cross each other.

As shown in Figures 59 (A) and (B), where the relation between change of the segment voltage waveform and the direction of the spike shaped voltage of the common voltage waveform on the non-selective voltage are in anti-phase, the spike shaped voltage generates in the voltage waveform added to the display dots, thereby increasing the effective value. The longer the anti-phase period, the larger the effective value. As a result, the displayed colour becomes dark. Therefore, the display dots on the segment electrodes X1 to X4 become light, and the display dots on the segment electrode X5 become dark regardless of whether the ON state or the OFF state exists. The degree of darkness of the display dots on the segment electrode X6 is intermediate the above two.

### 2. The second mode (hereinafter referred to as a horizontal crosstalk)

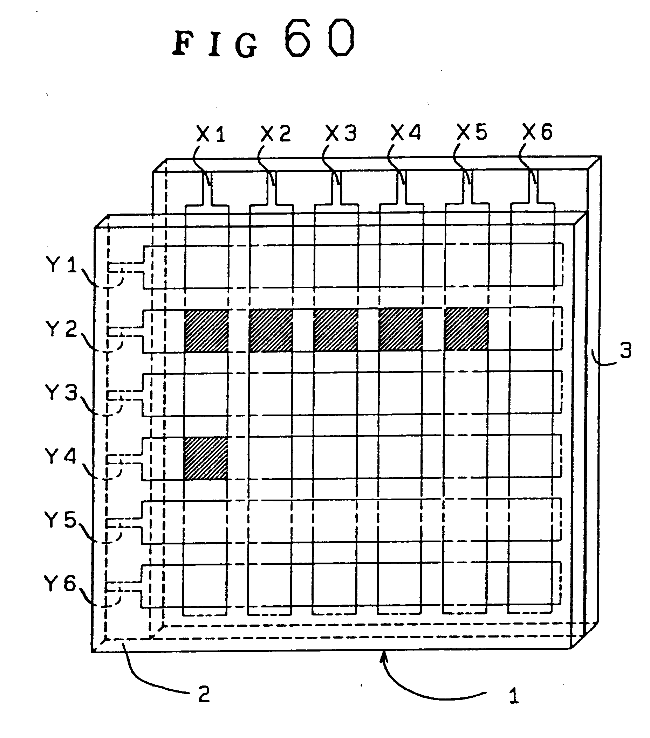

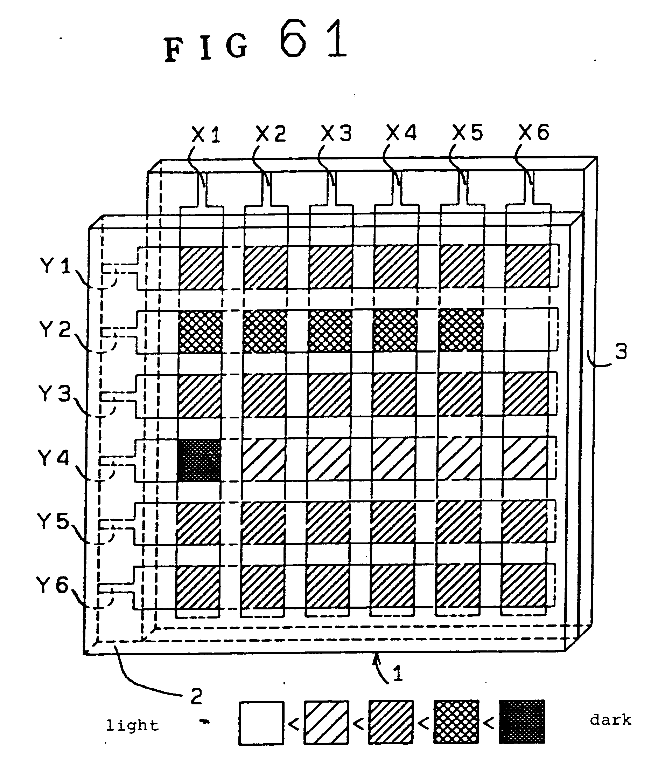

Figure 60 shows the display of another pattern on the same liquid crystal panel as that of Figure 54. The contrast crosstalk generated from this display of pattern is shown in Figure 61. The reason why is explained as follows.

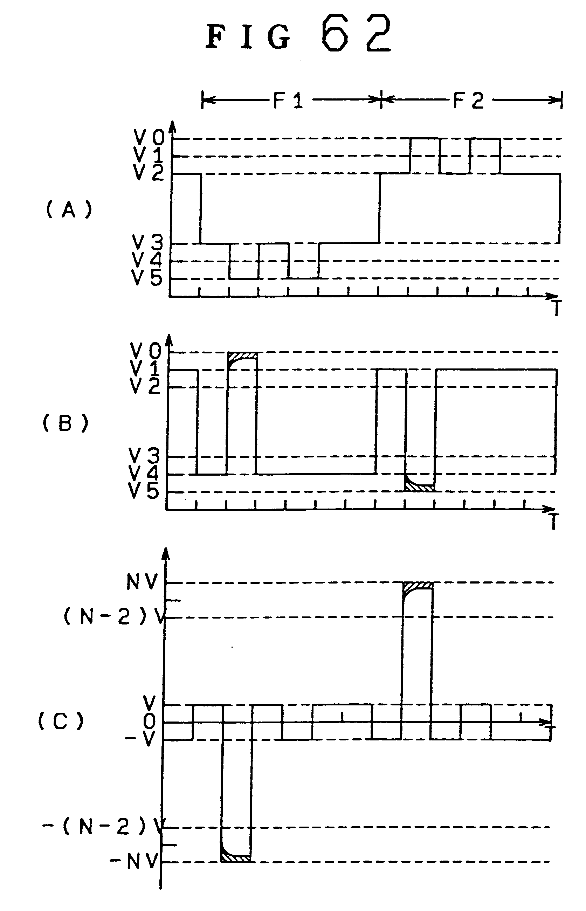

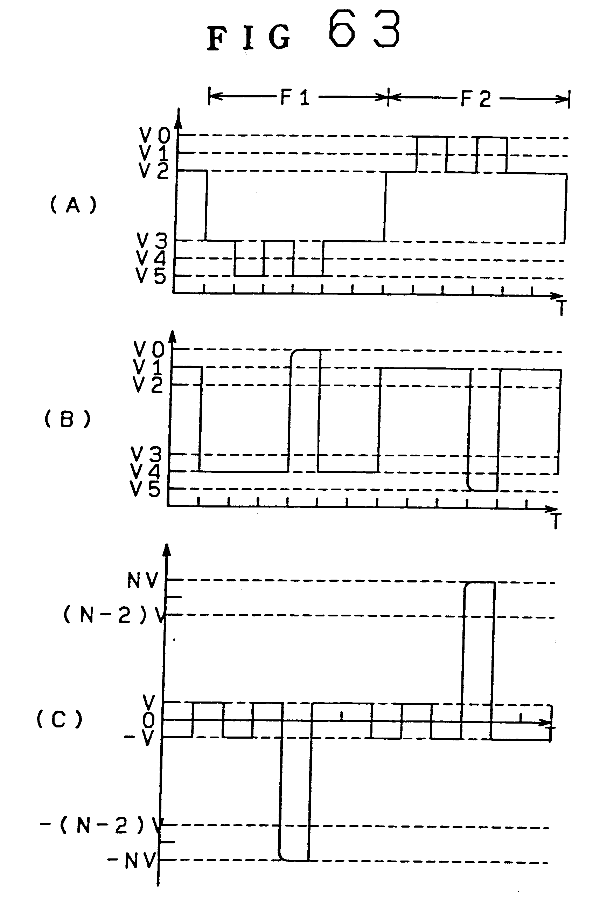

The display dot is a capacitor in view of the equivalent circuit. The capacity of this capacitor has a different value in the ON state than in the OFF state. The value of the capacity in the ON state is larger than the value in the OFF state. This is because the liquid crystal material has a dielectric anisotropy, and because on alignment change occurs in the ON state and the OFF state. Accordingly, the capacity of all dots on the common electrode Y2 having a lot of ON dots is larger than that on the common electrode Y4 having fewer ON dots. Since the common electrodes have the same circuit resistance, the curved portion generated in the voltage waveform of the common electrode Y2 becomes larger. This is shown in Figures 62 and 63.

Figure 62 (A) shows the segment voltage waveform at the display dot portion on the segment electrode X1 of Figure 60. Figure 62 (B) shows the common electrode waveform at the display dot portion on the common electrode Y2. Figure 62 (C) shows the voltage waveform applied to the dot where the segment electrode X1 and the common electrode Y2 cross each other.

Figure 63 (A) shows the segment voltage waveform at the display dot portion on the segment electrode X1 of Figure 60. Figure 63 (B) shows the common voltage waveform at the display dot portion on the common electrode Y4. Figure 63 (C) shows the voltage waveform which is applied to the dot where the segment electrode X1 and the common electrode Y4 cross each other.

As can be seen from a comparison between Figure 62 (B) and Figure 63 (B), the common electrode Y2 having a lot of ON dots is curved when it moves from the non-selective voltage to selective voltage for the area marked by the oblique line in Figure 62 (B). If Figure 62 (C) is compared with Figure 63 (C), the voltage effective value of the waveform which is applied to the dots on the common electrode Y2 is decreased for the area marked by the oblique line of Figure 62 (C). Accordingly, the colour of display dots on the common electrode Y2 having a lot of ON dots in Figure 61 becomes very light. Thus, if the number of ON dots on each common electrode is shown by Z, the larger the value of Z of the common electrode, the lighter is the displayed colour.

### 3. The third mode (hereinafter referred to as a vertical crosstalk)

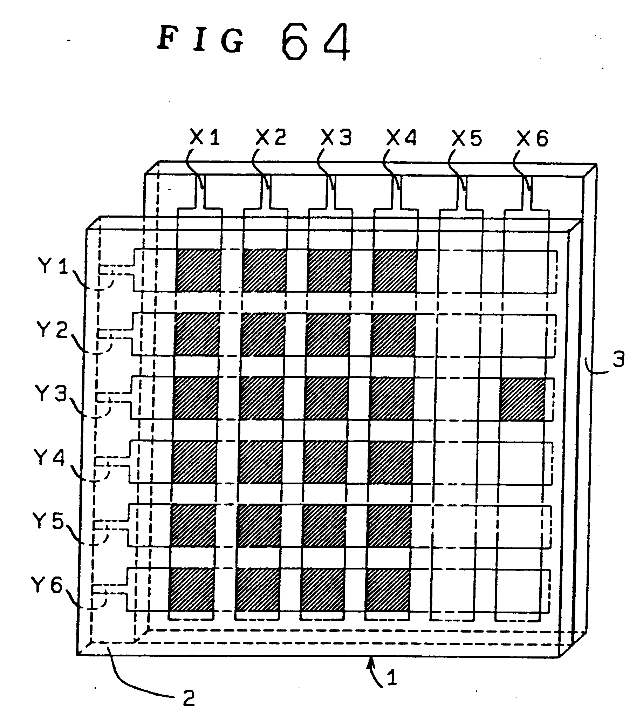

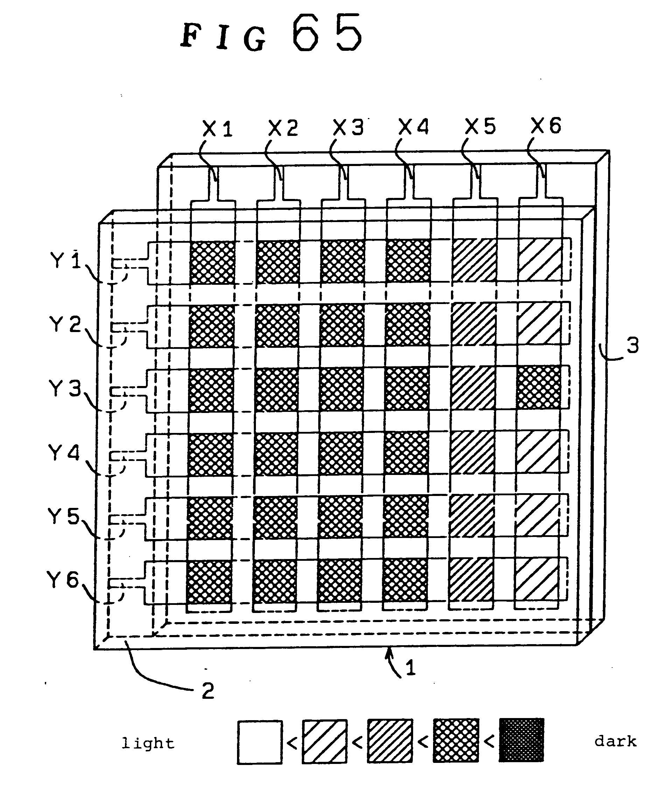

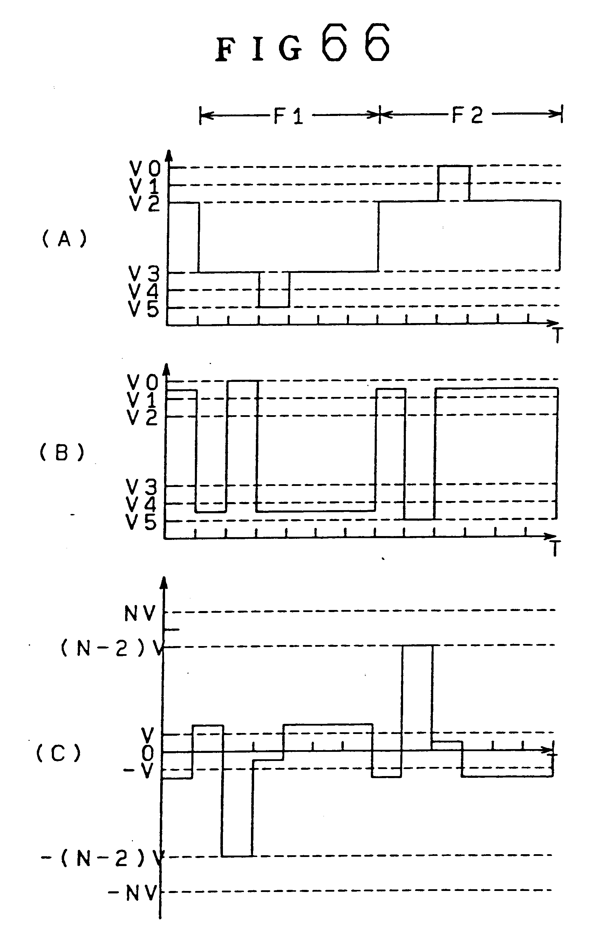

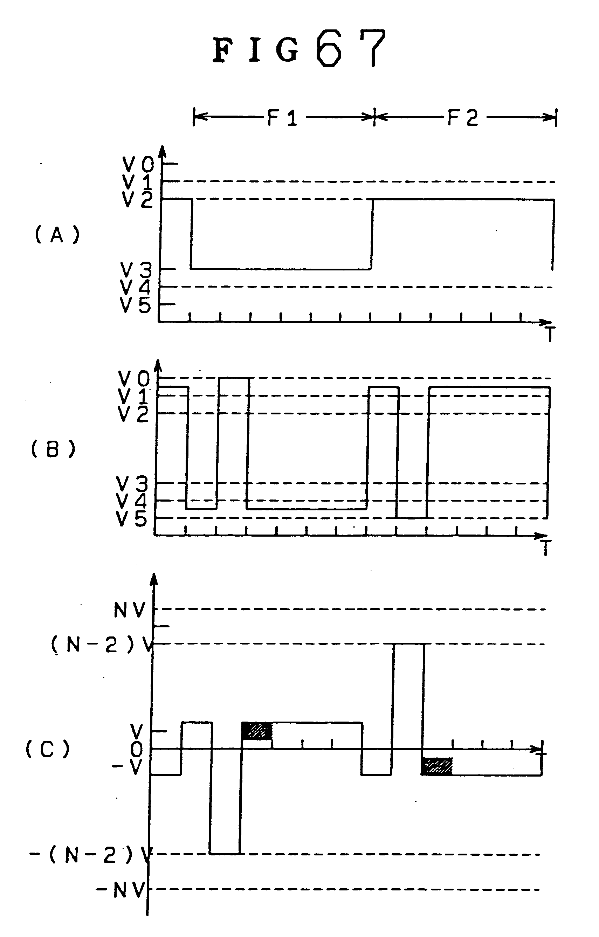

There is shown in Figure 65, the display crosstalk at the time when the pattern shown in Figure 64 is displayed. Figure 66 (A) shows the segment voltage waveform at the display dot portion on the segment electrode X6, Figure 66 (B) shows the common voltage waveform at the display dot portion on the common electrode Y2, and Figure 66 (C) shows the voltage waveform which is applied to the display dot where the segment electrode X6 and the common electrode Y2 cross each other. Further, Figures 67 (A) to (C) show each voltage waveform on the segment electrode X5 and the common electrode Y2 and the voltage waveform which is added to the display dot where the segment electrode X5 and the common electrode Y2 cross each other.

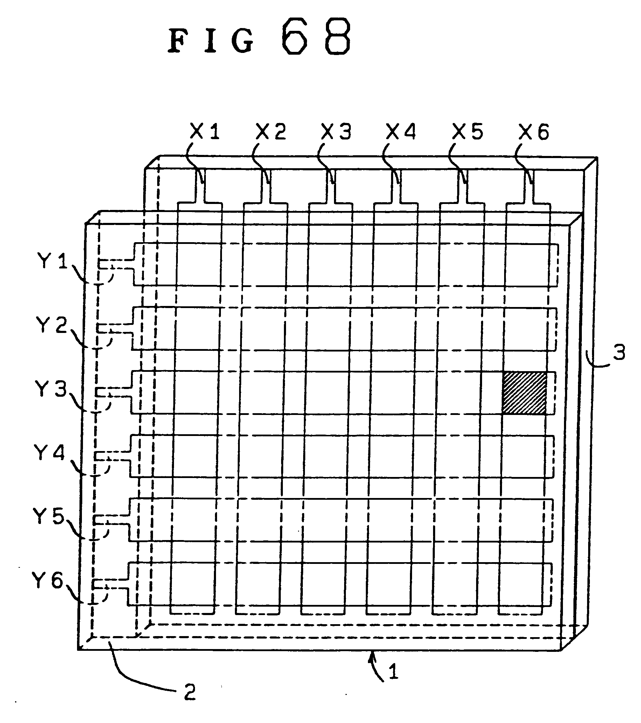

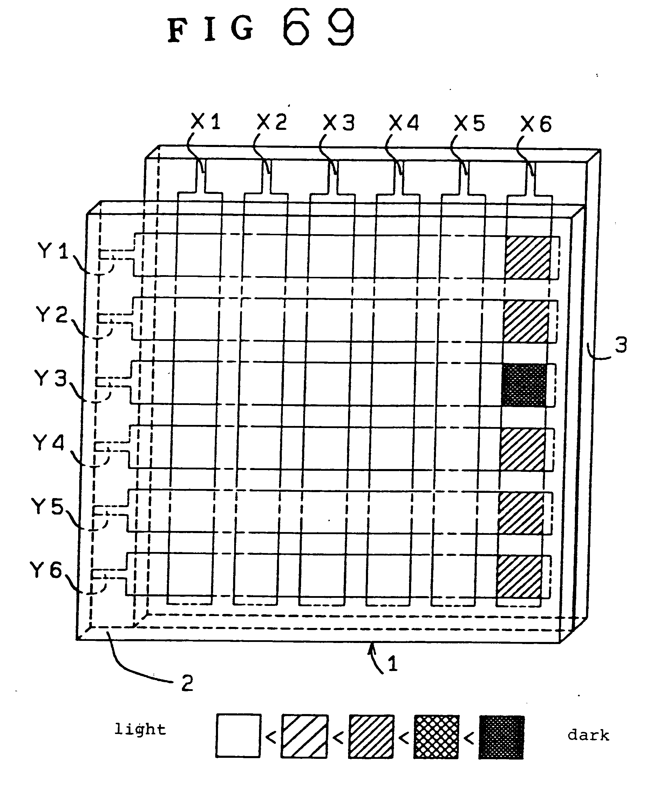

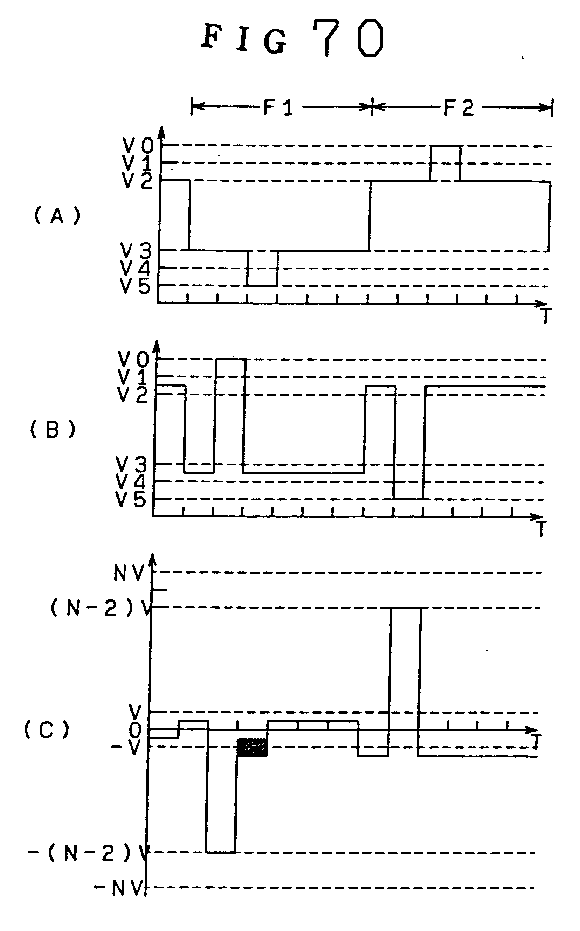

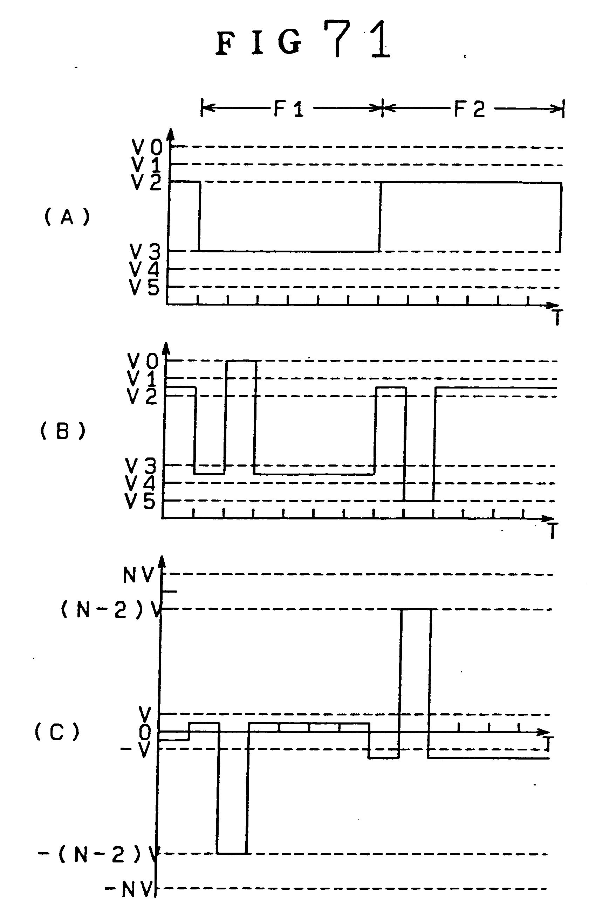

Figure 69 shows the display crosstalk at the time of displaying the pattern shown in Figure 68. Figure 70 (A) shows the segment voltage waveform at the display dot portion on the segment electrode X6. Figure 70 (B) shows the common voltage waveform at the display dot portion on the common electrode Y2. Figure 70 (C) shows the voltage waveform which is applied to the display dot where the segment electrode X6 and the common electrode Y2 cross each other. Figures 71 (A) to (C) show each voltage waveform on the segment electrode X5 and on the common electrode Y2 and the voltage waveform which is added to the display dot where the segment electrode X5 and the common electrode Y2 cross each other.

The non-selective voltage level of the common voltage waveform at the time of displaying the same pattern as that having a lot of ON dots in Figure 64 varies to the ON voltage side as shown in Figure 66 (B). The non-selective voltage level of the common voltage waveform at the time of displaying the pattern having a few ON dots in Figure 68 varies to the OFF voltage side as shown in Figure 70 (B). This variation is because, where there are so many ON dots, each of the common electrodes Y1 to Y6 is very well connected to the segment electrode to which the ON voltage is applied through the condenser of display dots and is not so well connected to the segment electrode to which the OFF voltage is applied.

The reason why this phenomenon occurs is not totally clear, but it perhaps occurs due to a lack of sufficient output impedance of the power circuit relative to the load of the liquid crystal panel. There will now be explained the kinds of rule which generate the voltage shift.

In all the display dots of Figures 64 and 68, it is defined that the number of ON dots is T and the number of OFF dots is L. When the value of T′ calculated from the formula T′ = T - L is a positive value, then the non-selective voltage level varies to the ON voltage side. On the other hand, if the above value of T′ is a negative value, then the non-selective voltage level varies to the OFF voltage side. The size of the variation increases in accordance with the absolute value of T′.

With a display having a lot of ON dots as shown in Figure 64, the difference between the OFF voltage and the non-selective voltage becomes large, and the difference between the ON voltage and the non-selective voltage becomes small. Therefore, comparing the voltage waveform shown in Figure 67 which is added to the display dots on the segment electrode X5 having no ON dot as shown in Figure 65, and the voltage waveform shown in Figure 66 which is added to the display dots on the segment electrode X6 including the ON dots, there results an effective voltage which is added to the display dots on the segment electrode X5 and which is larger for the portion marked by the oblique line in Figure 67 (C), thereby making the display dots on the segment electrode X5 dark.

Similarly, with a display having only a few ON dots as shown in Figure 68, the difference between the ON voltage and the non-selective voltage becomes large, and the difference between the OFF voltage and the non-selective voltage becomes small. Therefore, comparing the voltage waveform shown in Figure 70 which is added to the display dots on the segment electrode X6 including the ON dot, and the voltage waveform shown in Figure 71 which is added to the display dots on the segment electrode X5 without the ON dot, the effective voltage which is added to the display dots on the segment electrode X6 is larger for the portion marked by the oblique line in Figure 70, thereby making the display dot on the segment electrode X6 dark.

### 4. The fourth mode (hereinafter referred to as an inversion crosstalk)

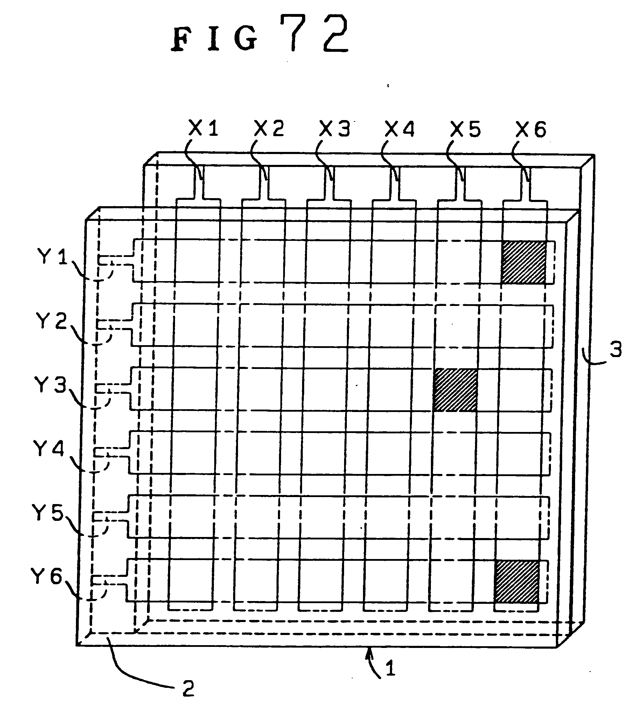

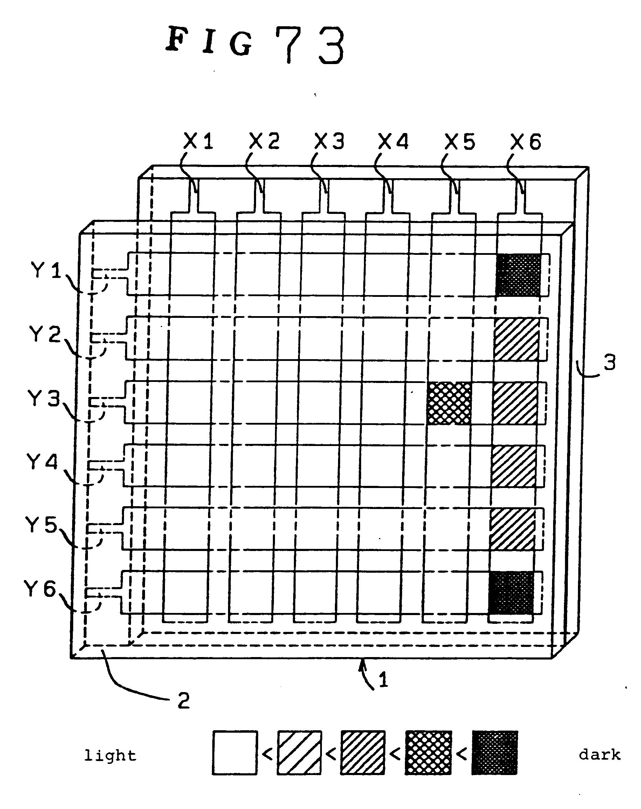

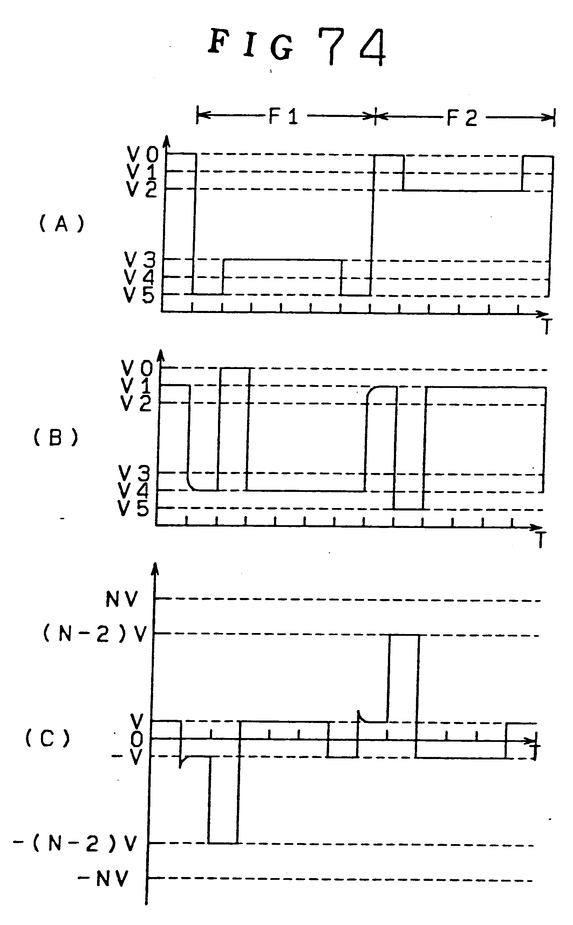

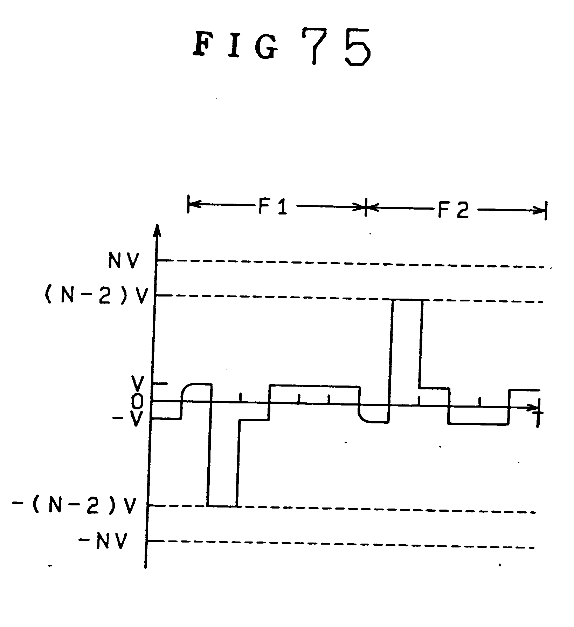

Figure 73 shows the display crosstalk when the pattern of Figure 72 is displayed. Figure 74 (A) shows the segment voltage waveform at the display dot portion on the segment electrode X6. Figure 74 (B) shows the common voltage waveform at the display dot portion on the common electrode Y2. Figure 74 (C) shows the voltage waveform which is added to the display dot where the segment electrode X6 and the common electrode Y2 cross each other. Figure 75 shows the voltage waveform added to the display dot where the segment electrode X5 and the common electrode Y2 cross each other.

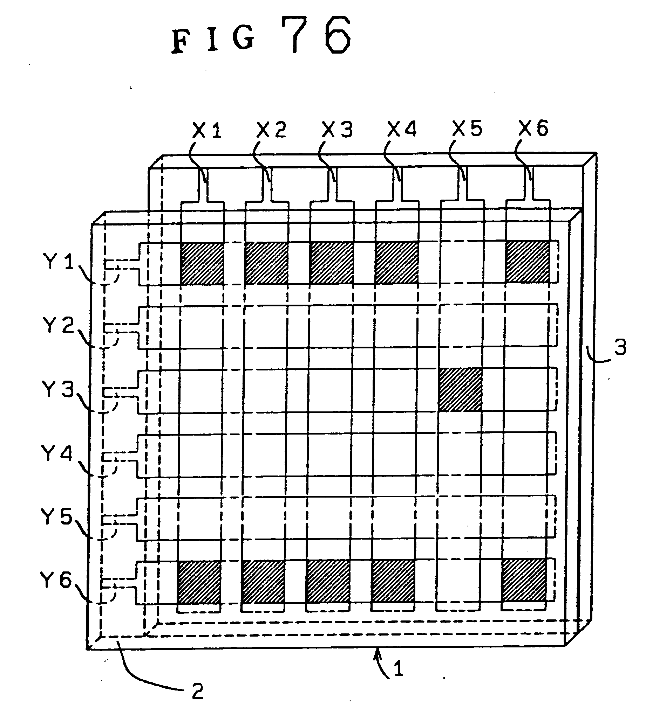

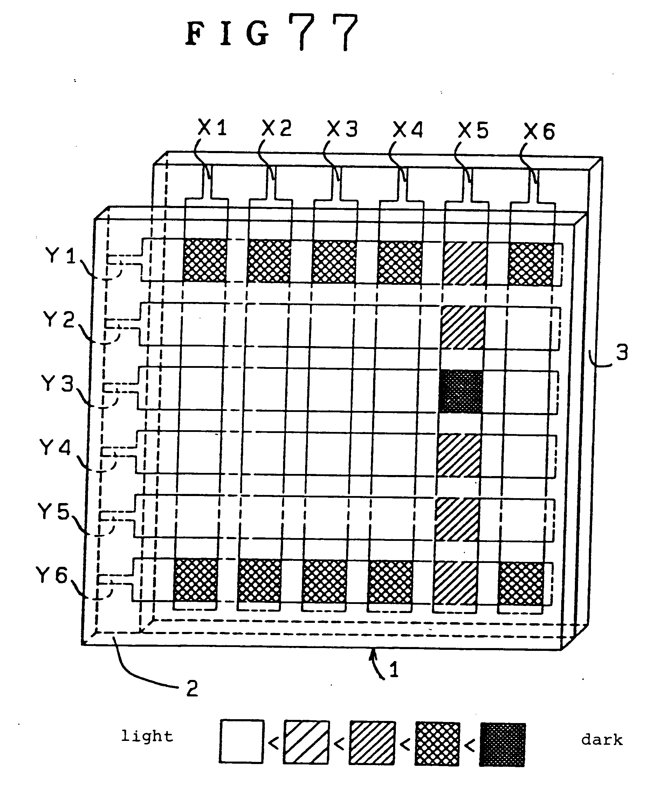

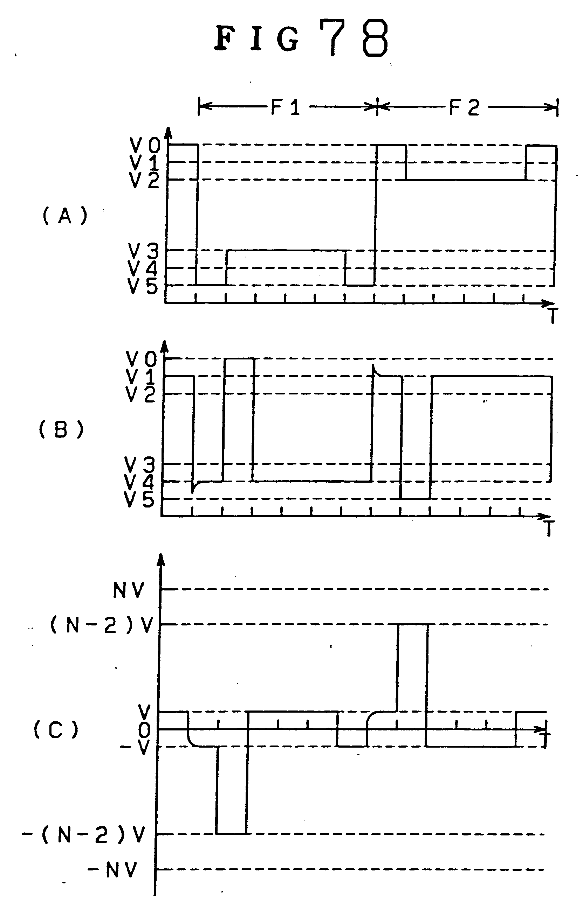

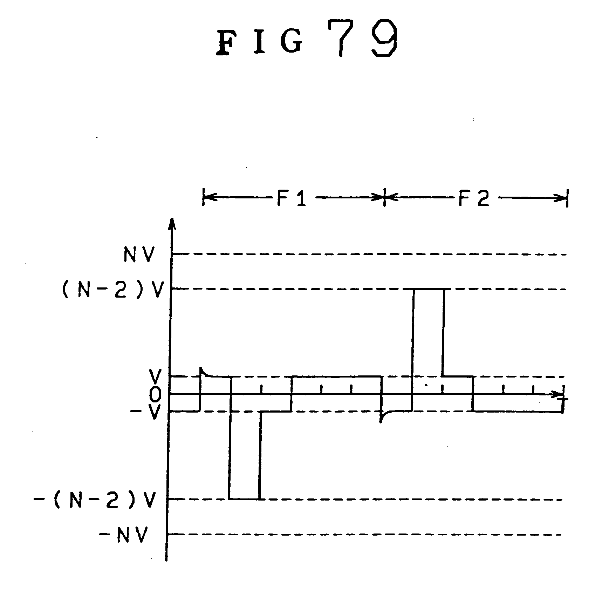

Figure 77 shows the display crosstalk when the pattern of Figure 76 is displayed. Figure 78 (A) shows the segment voltage waveform at the display dot portion on the segment electrode X6. Figure 78 (B) shows the common voltage waveform at the display dot portion on the common electrode Y2. Figure 78 (C) shows the voltage waveform which is added to the display dot where the segment electrode X6 and the common electrode Y2 cross each other. Figure 79 shows the voltage waveform added to the display dot where the segment electrode X5 and the common electrode Y2 cross each other.

Figures 74 and 78 illustrate the switching time of a frame period, before or after switching from F1 to F2 (hereinafter referred to as an inversion). As shown in Figure 72, when the number of the segment electrodes in which the voltage applied to the segment electrodes is ON voltage before and after the inversion (only one sixth segment electrode X6 in Figure 72) is smaller than the number of the segment electrodes in which the voltage applied to the segment electrodes is OFF voltage before and after the inversion (the five segment electrodes X1 to X5 in Figure 72), the curved portion as shown in Figure 74 (B) occurs at the time of inversion.

Conversely, as shown in Figure 76, when the number of the segment electrodes in which the voltage applied to the segment electrodes is ON voltage before and after inversion (the five electrodes of the segment electrodes X1, X2, X3, X4 and X6 in Figure 76) is larger than the number of the segment electrodes in which the voltage applied to the segment electrodes is ON voltage before and after the inversion (only one segment electrode X5 in Figure 76), the spike shaped voltage as shown in Figure 78 occurs at the time of inversion.

Therefore, when the pattern as shown in Figure 72 is displayed, the curved portion occurs in the common voltage waveform as shown in Figure 74 (B) at the time of inversion.

At this time, in the voltage waveform of Figure 74 (A), added to the display dots on the segment electrode X6 for changing from ON voltage to ON voltage before and after the inversion, the spike shaped voltage shown in Figure 74 (C) generates. This increases the effective voltage, thereby further making the display dark. On the other hand, in the voltage waveform which is added to the display dots of the segment electrodes X1 to X5 for changing from OFF voltage to OFF voltage before and after the inversion, the curved portion shown in Figure 75 occurs. This decreases the effective voltage, thereby further making the display light.

Conversely, in the display shown in Figure 76, the spike shaped voltage generates in the common voltage waveform shown in Figure 78 (B) at the time of inversion. At this time, in the voltage waveform which is added to the display dots on the segment electrodes X1, X2, X3, X4 and X6, wherein the segment voltage waveform switches from ON voltage to ON voltage before and after the inversion, the curved portion shown in Figure 78 (C) generates, thereby making the effective voltage small and thereby further making the display light. In the voltage waveform which is added to the display dots on the segment electrode X5, wherein the segment voltage waveform switches from OFF voltage to OFF voltage before and after the inversion, the spike shaped voltage shown in Figure 79 generates, thereby increasing the effective voltage and thus further making the display dark.

The above mentioned effects may be generalised as follows. It is defined that the number of segment electrodes for switching from ON voltage to ON voltage at the time of inversion is a, the number of segment electrodes for switching from OFF voltage to OFF voltage is b, the number of segment electrodes for switching from ON voltage to OFF voltage is c, and the number of segment electrodes for switching from OFF voltage to ON voltage is d. Further, the number of ON dots on the common electrode (common electrode Y6 in Figures 72 and 76) which is selected just before the inversion is N_{ON}, the number of OFF dots is N_{OFF}, the number of ON dots on the common electrode (the common electrode Y1 in Figures 72 and 76) which is selected just after the inversion is M_{ON}, and the number of OFF dots is M_{OFF}.

At this time, the relation is as follows. 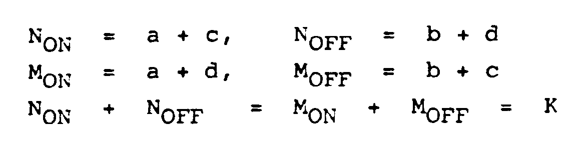
(wherein K is a constant and shows the number display dots on each common electrode).

Also, 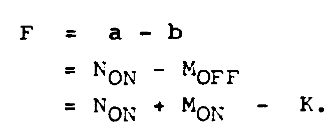
If the value of F is negative, at the time of the inversion, the curved portion occurs when the non-selective voltage changes on the common electrode. Conversely, if the value of F is positive, the spike shaped voltage occurs at the side of ON voltage. The value of voltage is increased in accordance with the absolute value of F. This introduces the display crosstalk as mentioned above.

There thus exist the above mentioned four modes of contrast crosstalk and the related change of the voltage waveform. There may be other modes of contrast crosstalk. The contrast crosstalk of the display may generate in response to the rule of the display content.

The present invention provides an improved liquid crystal display device, wherein the rule of the display content is extracted quantitatively, so that the compensation corresponds to the extraction, thereby realising an improved liquid crystal display device having an uniform display without any contrast crosstalk. More specifically, and as indicated above, the present invention provides a liquid crystal display device comprising: a group of common electrodes formed on one substrate of a pair of substrates for sandwiching a liquid crystal layer; a group of segment electrodes formed on the other substrate of the pair of substrates; wherein a common voltage waveform comprising a selective voltage and a non-selective voltage is applied to the group of common electrodes, and the segment voltage waveform comprising the ON voltage and OFF voltage is applied to the group of segment electrodes, thereby changing at least one of the common voltage waveform and the segment voltage waveform in accordance with the pattern of drawings or characters for being displayed in the liquid crystal display device derived by the multiplex by means of the voltage standard means.

With regard to the change of effective voltage generated by the deformation of the common voltage waveform and by the segment voltage waveform occurring within the liquid crystal panel by the pattern of drawings or characters displayed in the liquid crystal display device, at least one of the common voltage waveform and/or the segment voltage waveform is caused to be changed. This compensates for the shift of the effective voltage added to each display dot, thereby further providing the improved display without any crosstalk.

To facilitate a better understanding of the above broad explanation of the invention, reference will now be made to the following Examples and the stated Figures of the drawings.

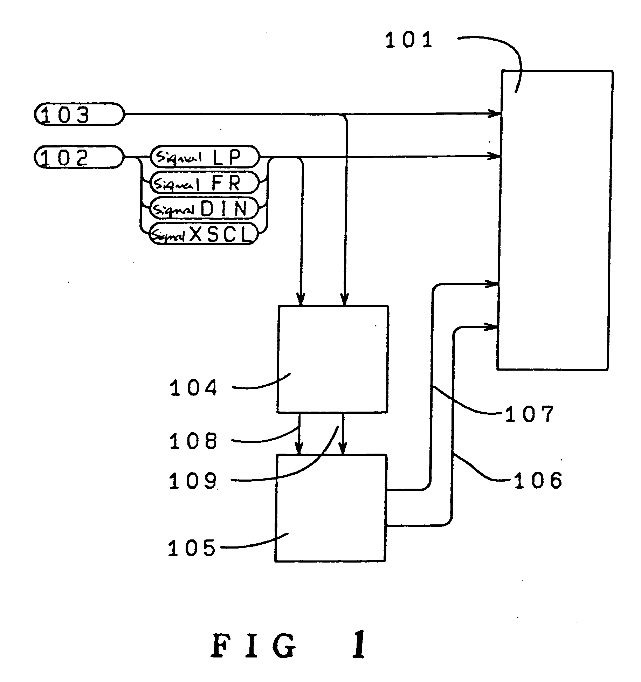

### EXAMPLE 1 (Figures 1 to 8)

This Example deals with zebra crosstalk. As mentioned above, the degree of zebra crosstalk depends on the difference I (I = N_{ON} - M_{ON}) between the number of ON dots M_{ON} on the common electrode which has been already selected and the number of the ON dots N_{ON} on the common electrode which is to be selected next. Accordingly, at the time of operation of the liquid crystal display device, the waveform compensation in accordance with the value of I while calculating the value of I has only to be accomplished. This compensation can be made by the liquid crystal display device shown in Figure 1.

In Figure 1, a liquid crystal unit 101 is composed of a liquid crystal panel and a driving circuit. A series of control signals 102 for controlling the motion of the liquid crystal display device is composed of a latch signal LP, a frame signal FR, a data-in signal DIN, an X driver shift clock signal XSCL and others. Also shown in Figure 1 is a data signal 103, a waveform compensation signal generating circuit 104 (hereinafter referred to as a compensation circuit) and a power circuit 105.

The compensation circuit 104 calculates the value of I and at the same time, transmits a sign signal 108 for transmitting the sign of I and a strength signal 109 for transmitting the absolute value of I to the power circuit 105 as a compensation signal. The above strength signal 109 is in the active condition for the period corresponding to the absolute value of I.

The power circuit 105 provides the common electrode driving power source (hereinafter referred to as Y power source) 106 for supplying the voltage to the liquid crystal unit 101 in accordance with the sign signal 108 and the strength signal 109, and the segment electrode driving power source (hereinafter referred to as X power source) 107. The power circuit 105 also provides the voltage compensation of the Y power source 106.

The basic operation of Figure 1 is as follows. The compensation circuit 104 firstly receives the data signal 103 when one common electrode is selected, and then calculates the number of ON dots M on the common electrode which is next selected. Next, the value of I is calculated, which is the difference between the number of the ON dots N_{ON} on the common electrode which has been already selected and the above M_{ON}. When the selection switches, the resulting sign and the absolute value are output as the sign signal 108 and the strength signal 109, respectively. At the same time, M_{ON} is stored as the number of the ON dots N_{ON} on the common electrode which has been already selected. The power circuit 105 performs the required compensation to the voltage of the Y power source 106 in accordance with the sign signal 108 and the strength signal 109.

Display unevenness due to zebra crosstalk on the liquid crystal panel can be prevented. Compensation is effected by applying the predetermined voltage to the spike shaped noise generated in the driving waveform applied to the liquid crystal panel to the direction of cancelling the noise, for a period corresponding to the strength of the noise. Determining the direction of the predetermined voltage is the sign signal 108, and determining the applied time is the strength signal 109.

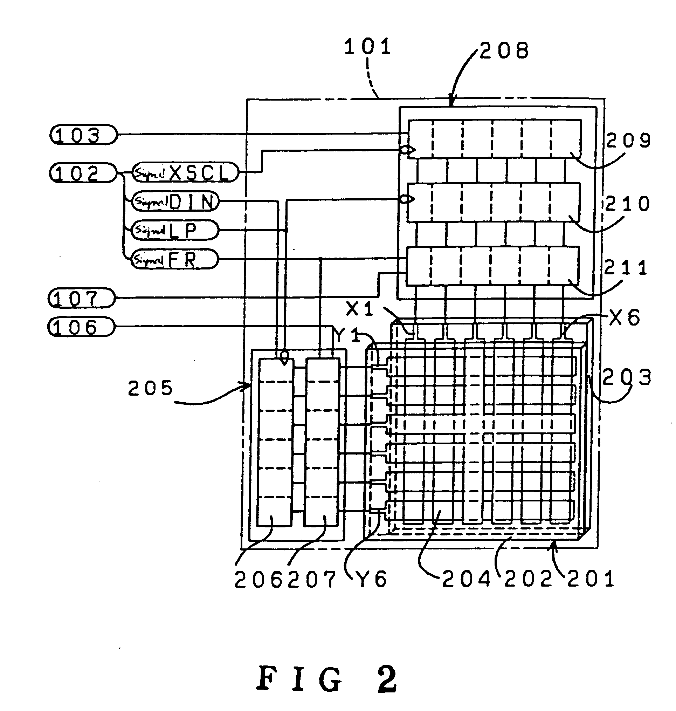

Figures 2 to 5 show the detailed components of Figure 1. Figure 2 shows one example of a structure for the liquid crystal unit 101.

In Figure 2, there is shown a liquid crystal panel 201, wherein the common electrodes Y1 to Y6 are horizontally oriented on the one substrate 202, the segment electrodes X1 to X6 are vertically oriented on the other substrate 203, and the pair of substrates 202 and 203 sandwich the liquid crystal layer therebetween. The common electrodes Y1 to Y6 and the segment electrodes X1 to X6 cross each other, thereby forming the display dot 204. For ease of explanation, the liquid crystal panel has a 6 x 6 dot structure, but it is to be appreciated that the liquid crystal panel is not limited to this 6 x 6 dot structure.

A common electrode driving circuit 205 comprises a shift register circuit 206 and a level shifter circuit 207. The output from the level shifter circuit 207 is introduced to each common electrode Y1 to Y6 of the liquid crystal panel 201.

A segment electrode driving circuit 208 comprises a shift register circuit 209, a latch circuit 210 and a level shifter circuit 211. The output from the level shifter circuit 208 is introduced to each segment electrode X1 to X6 of the liquid crystal panel 201.

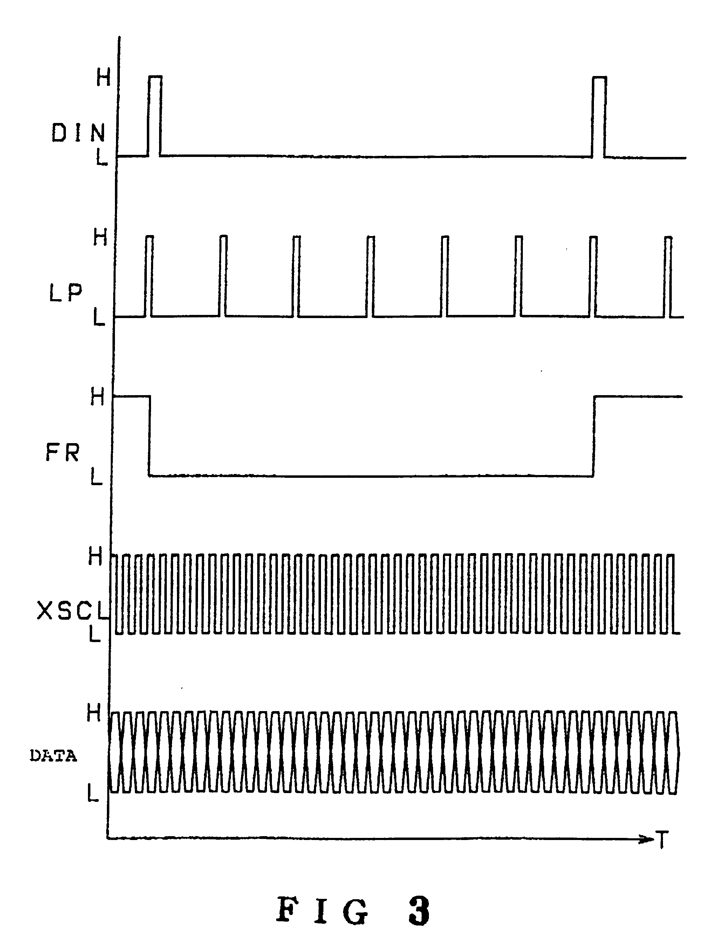

Figure 3 is a timing chart showing signals DIN, LP, FR, XSCL of the control signal 102 and the data signal 103.

The signals DIN and LP act as data and shift clock respectively, relative to the shift register circuit 206 of the common electrode driving circuit 205 in Figure 2. The signal DIN is received in the shift register circuit 206 by the falling or trailing edge of the signal LP, and the signal DIN is transmitted.

The signal DIN has "H" as an active element, "active" meaning the state of the signal generated. Since the signal DIN outputs at the interval of the number of the common electrodes Y1 to Y6 of the liquid crystal panel 201 or the number of the signal LP larger than the common electrodes in the normal case, the data of "H" passes through the shift register circuit 206, and the data of "L" passes through the others. In accordance with the content of the shift register circuit 206, in the active case, the selective voltage is supplied to the common electrodes Y1 to Y6 by the level shifter circuit 207. In the non-active case, the non-selective voltage is supplied to the common electrodes Y1 to Y6. The selective voltage and the non-selective voltage are supplied from the Y power source 106.

The data signal 103 and the signals XSCL and LP act as the data and shift clock of the shift register circuit 209 of the segment electrode driving circuit 208, and the latch clock of the latch circuit 210. In Figure 3, the data signal 103 indicates the ON state, wherein "H" is defined as an active element. The data signal 103 acts as a signal for determining whether the display dot 204 on the next common electrode is ON or OFF during the one common electrode of the liquid crystal panel 201 is selected. The data signal 103 is received in the shift register circuit 209 at the time of falling edge of the signal XSCL, as the signal corresponds to the display dots on the common electrode which is selected next when the common electrode is selected. When the receipt of the data signal 103 in accordance with the signal XSCL is terminated, the contents of the shift register circuit 209 are received in the latch circuit 210 at the time of the falling edge of the signal LP. Then, in the active case, the ON voltage is supplied to the segment electrodes X1 to X6 from the shift register circuit 211 in accordance with the resulting contents. In the non-active case, the OFF voltage is supplied to the segment electrodes X1 to X6. The ON voltage and OFF voltage are supplied by the X power source 107.

Further, the frame signal FR is connected to the driving circuits 205, 208 in order to achieve the alternating driving of the liquid crystal panel 201. The signal FR switches in response to the falling edge of the signal LP, and switches the selection of potential of the driving voltage. The driving voltage includes two sets of the following selective and non-selective voltages, and ON and OFF voltages, which are switched by the frame signal FR.

The illustrated structure of the liquid crystal unit 101 and the driving method therefor are only examples for explaining the present invention, and it is to be appreciated that the invention is not limited to the illustrated structure of the liquid crystal unit 101.

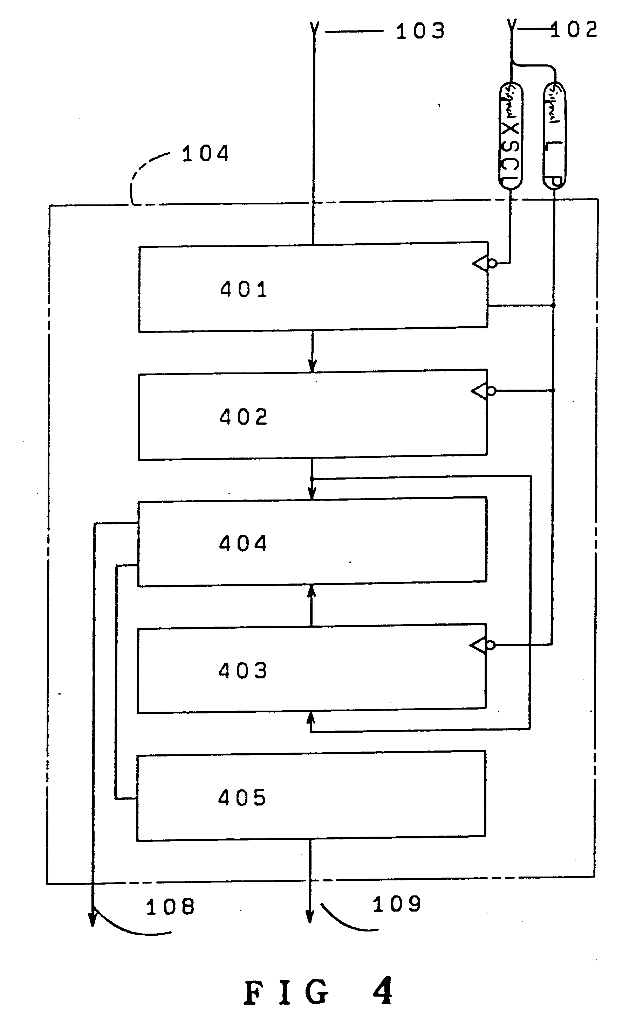

Figure 4 is a block diagram showing an example of a structure for the compensation circuit 104 in Figure 1. In Figure 4, there are shown a count circuit 401, a first count holding circuit 402, a second count holding circuit 403, a numerically arithmetic circuit 404, and a pulse width control circuit 405.

The count circuit 401 counts the number of ON dots within the display dots on the (n+1)-th common electrode when the n-th common electrode of the liquid crystal panel 201 of Figure 2 is selected. The counter circuit 401 counts the number of ON dots on the (n+1)-th common electrode by counting the number of dots from the falling edge of the signal LP of the control signal 102 to the falling edge of the next signal LP only where the data signal 103 is active at the time of falling edge of the signal XSCL. The count value of the counter circuit 401 is re-set to 0. The discrete value is output to the first counter holding circuit 402 at the time of falling edge of the signal LP. Then the counting starts again, and repeats successively. With regard to the counting, it is not necessary to perform it strictly up to one dot unit if circumstances require, for example if the number of the segment electrodes X1 to X6 is about 640, there is no inconvenience even if the counting error is defined as ± 16 dots.

Next, the first counter holding circuit 402 receives the count value just before the count value of the counter circuit 401 becomes 0 at the time of falling edge of the signal LP, and the second counter holding circuit 403 receives the count value from the first counter holding circuit 402, wherein the discrete value is just before the first counter holding circuit 402 receives the next count value from the counter circuit 401 at the time of falling edge of the signal LP. Accordingly, when the first counter holding circuit 402 receives the number of ON dot M_{ON} of the display dots on the (n+1)-th common electrode, the second counter holding circuit 403 is such that it receives the number of ON dot N_{ON} of the display dots on the n-th common electrode, and outputs the values of M_{ON} and N_{ON} to the numerically arithmetic circuit 404 respectively.

The numerically arithmetic circuit 404 calculates the difference between the value of M_{ON} and N_{ON} produced from the first and second counter holding circuits 402 and 403, namely I = N_{ON} - M_{ON}, and outputs the sign of the value I as the sign signal 108. At the same time, the absolute value of I is output to the pulse width control circuit 405.

The pulse width control circuit 405 outputs the active signal for the period of the absolute value of I which is input from the numerically arithmetic circuit 404 in response to the falling edge of the signal LP of the control signal 102 as the strength signal 109. However, the above signal is not output at the time of the falling edge of the signal LP when the signal FR changes.

Relative to the absolute value of I, the width W of the control signal 102 has the increment function shown by${\text{W = Σa}}_{\text{K}} {\text{x I}}^{\text{K}} {\text{+ Σb}}_{\text{K}} {\text{x I}}^{\text{1/K}} \text{,}$
wherein a_{K} and b_{K} are the constants and K is 0, 1, 2, 3, etc. The width W can be differentiated by the positive or negative value of I. In this embodiment, W = a₁ x I is defined regardless of whether the value of I is positive or negative. In the above mentioned operation and function of the compensation circuit 104, the precise circuit structure of the components 401 to 405 has been omitted for ease of explanation.

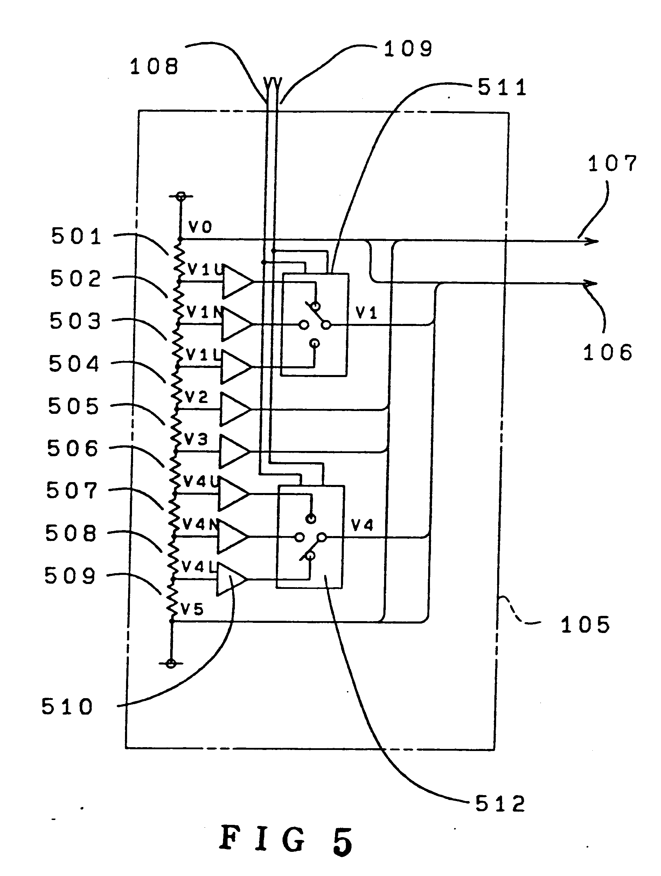

Figure 5 shows one example of the structure of the voltage power circuit 105 of Figure 1. In Figure 5, the resistors 501 to 509 are connected in series and the voltage VO and the voltage V5 are supplied to both ends thereof. If the resistance values of each of the resistors 501 to 509 are defined as R1 to R9 respectively, the relation is:
R1 = R9, R2 = R8
R3 = R7, R4 = R6
and: 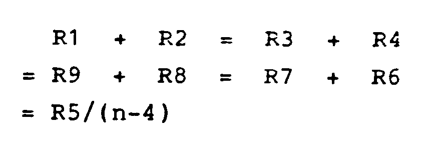
(wherein n is a constant).

Therefore, if the voltages at the ends of each of the resistors 501 to 509 are defined as VO, V1U, V1N, V1L, V2, V3, V4U, V4N, V4L and V5 respectively as shown in Figure 5, the following relation occurs: 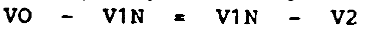 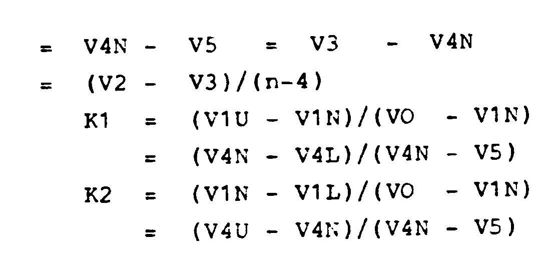
wherein the resistance values of each resistors 501 to 509 are set so that the relation of K1 and K2 satisfies the condition of 0 < K2, K1 ≦ 1.

A voltage stabilising circuit 501 is for stabilising the divided voltages V1U, V1N, V1L, V2, V3, V4U, V4N and V4L formed by each of the resistors 501 to 509. The voltage, the same as the input voltage, is output having a low impedance. The voltage stabilising circuit 510 is constructed by the voltage follower circuit owing to the operational amplifier.

The switches 511 and 512 are switched by the sign signal 108 and the strength signal 109 from the compensation circuit 104. More specifically, where the strength signal 109 is active and the sign signal 108 is positive, the switches 511 and 512 are switched to the voltage V1U and the voltage V4L respectively. Where the strength signal 109 is active and the sign signal 108 is positive, the switches 511 and 512 are switched to the voltage V1L and the voltage V4U respectively. When the strength signal 109 is non-active, the switches 511 and 512 are switched to the voltage V1N and the voltage V4N respectively. Each voltage is output from the switches 511 and 512 as the output voltage V1 and V4. The voltage V1 and V4 and the voltage V0 and V5 is output as the Y power source 106 of Figure 1. Additionally, the voltages V0, V2, V3 and V5 are output as the X power source 107 of Figure 1.

Accordingly, the Y power source 106 has the voltages VO, V1, V4 and V5 of Figure 5, the X power source 107 has the voltages VO, V2, V3 and V5 of Figure 5, and then the above voltages are output to the liquid crystal unit 101 in the form of the combination of the two groups of voltages. One group of voltages is thus as follows:
The voltage VO of Y power source 106 (selective voltage)
The voltage V4 of Y power source 106 (non-selective voltage)
The voltage V5 of X power source 107 (ON voltage)
The voltage V3 of X power source 107 (OFF voltage).

The other group of voltages is thus as follows:
The voltage V5 of Y power source 106 (selective voltage)
The voltage V1 of Y power source 106 (non-selective voltage)
The voltage VO of X power source 107 (ON voltage)
The voltage V2 of X power source 107 (OFF voltage).

The above two groups of voltages are switched by the signal FR of control signal 102 in the common electrode driving circuit 205 and the segment electrode driving circuit 208 periodically.

According to the above structure, when, as for the common electrodes Y1 to Y6 of the liquid crystal panel 201, the selection moves from n-th to (n+1)-th, in case of the value of I being positive, the Y power source 106 outputs the voltages V1U and V4L for the time in accordance with the absolute value of I to the liquid crystal unit 101 as the voltages V1 and V4 of Figure 5. In case of the value of I being negative, the Y power source 106 outputs the voltages of V1L and V4U for the time in accordance with the absolute value of I to the liquid crystal unit 101 as the voltages V1 and V4.

Further, the voltages V1N and V4N are output as the voltages V1 and V4 in case of where the strength signal is non-active including the value of I is 0.

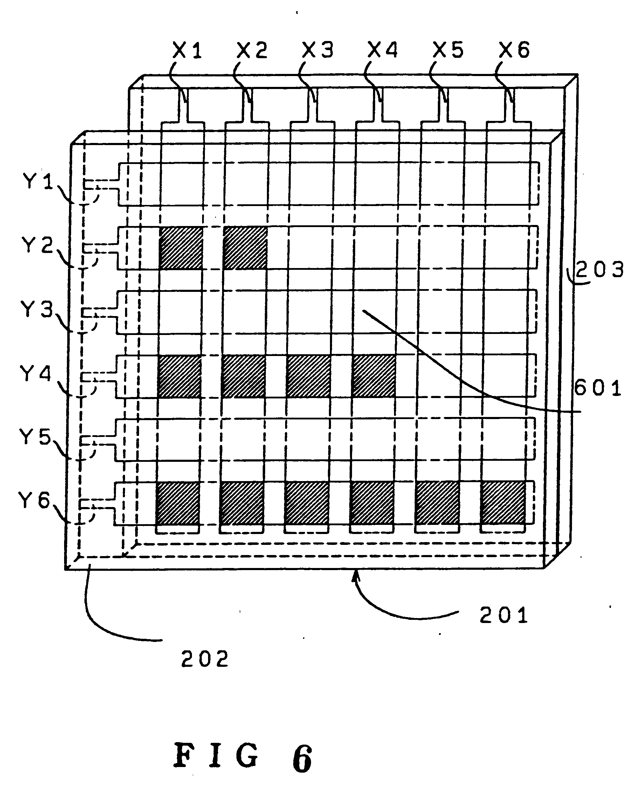

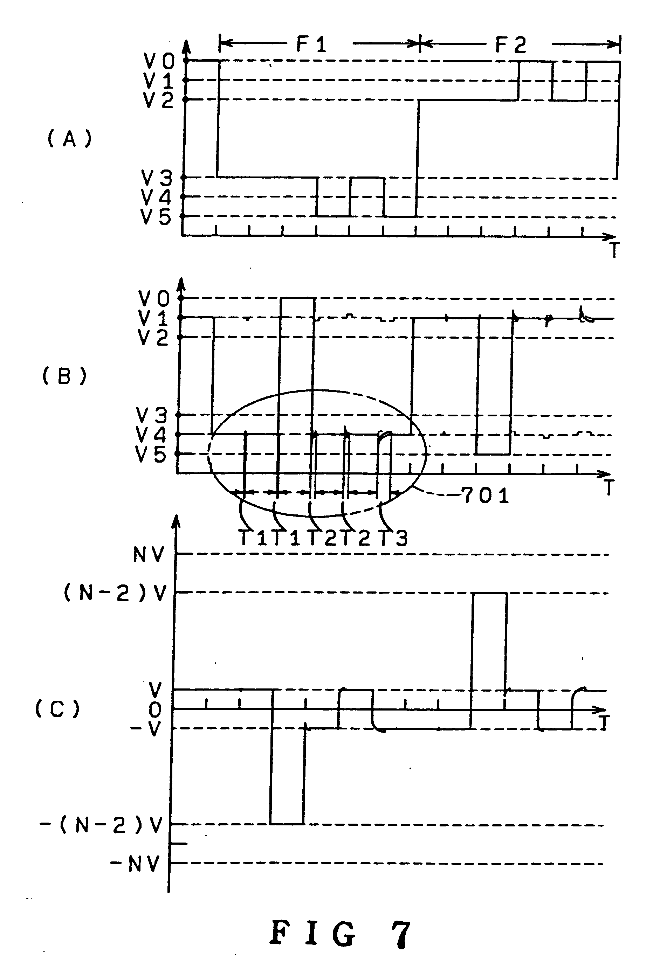

The above operation is explained precisely using an example in which the pattern as shown in Figure 6 is displayed. Thus, Figure 7 shows the example of the applied voltage waveform at the time of when the pattern shown in Figure 6 is displayed. Figure 7 (A) shows the voltage waveform which is applied to the segment electrode X4 for forming the display dot 601 of Figure 6. Figure 7 (B) shows the voltage waveform which is applied to the common electrode Y3 for forming the display dot 601. Figure 7 (C) shows the voltage waveform which is added to the display dot 601.

The voltage shown by the oblique line in Figures 7 (A) and (B) indicates the voltages VO, V2, V3 and V5 of the X power source 107 of Figure 1 and the voltages VO, V1, V4 and V5 of the Y power source 106.

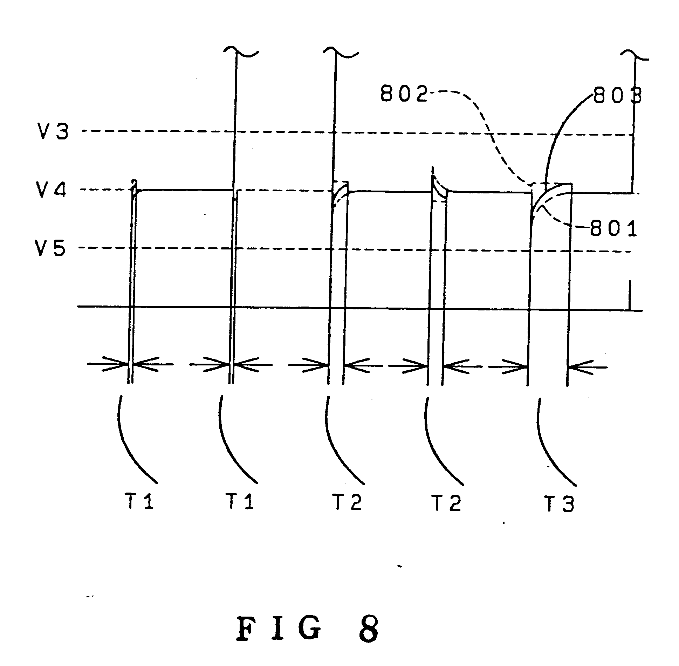

The portion surrounded by the circled portion 701 in Figure 7 (B) is enlarged, and is shown in Figure 8. In Figure 8, there is shown a spike shaped noise voltage 801 which tends to occur in the common electrode, a changeable non-selective voltage 802 formed by Y power source 106, and a voltage 803 which is composed of the voltages 801 and 802.

When the pattern of Figure 6 is displayed, the difference I between the number of ON dot N_{ON} on the n-th common electrode and the number of ON dot M_{ON} on the (n+1)-th common electrode at the time of changing the selection from n-th common electrode to (n+1)-th common electrode is as follows:
when the selection moves from the first common electrode Y1 to the second common electrode Y2 ..... I = -2
when the selection moves from the second common electrode Y2 to the third common electrode Y3.....I = 2
when the selection moves from the third common electrode Y3 to the fourth common electrode Y4 ..... I = -4
when the selection moves from the fourth common electrode Y4 to the fifth common electrode Y5 ... I = 4
when the selection moves from the fifth common electrode Y5 to the sixth common electrode Y6 ..... I = -6
when the selection moves from the sixth common electrode Y6 to the first common electrode Y1 ..... I = 6.

Thus, in accordance with the change from first to second, second to third, third to fourth, etc. the noise voltage 801 of Figure 8 increases. However, the period during which the non-selective voltage 802 changes to the reverse direction of the noise voltage 801, increases from T1 to T3 and the composed voltage 803 is compensated. Therefore, the voltage applied to the display dot 601 of Figure 7 (C) is compensated, thereby providing an improved display without zebra crosstalk.

As mentioned above, when the selection moves from n-th common electrode to (n+1)-th common electrode of the liquid crystal panel 201, the non-selective voltage of Y power source 106 is changed for the period in accordance with the difference I between the number of ON dots on the n-th common electrode and the number of ON dots on the (n+1)-th common electrode, thereby providing an improved display without zebra crosstalk.

The present Example provides a structure in which the period for changing the voltage of the non-selective voltage is increased or decreased to perform the compensation. This is hereinafter referred to as a time base compensation of the non-selective voltage.

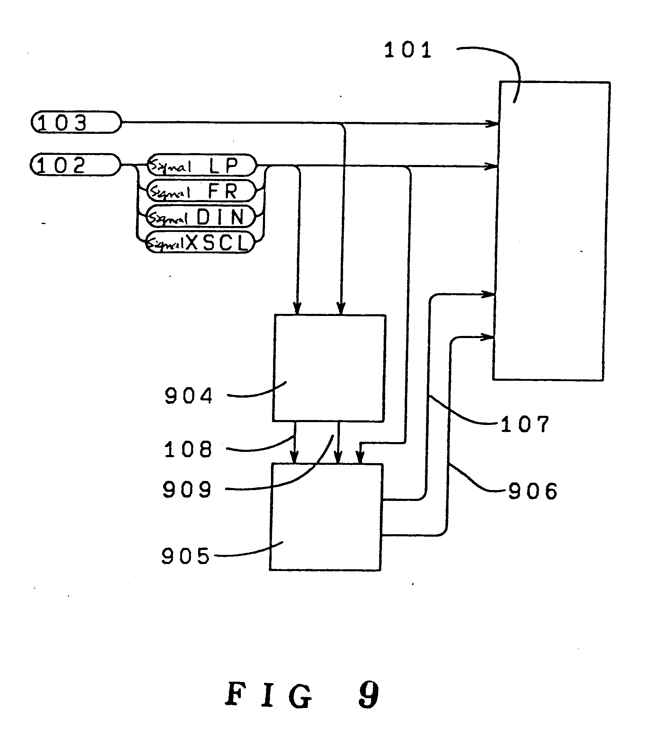

### EXAMPLE 2 (FIGURES 9 to 13)

Reference is now made to another embodiment of the invention to provide an improved display without zebra crosstalk.

As mentioned above, Example 1 shows a way of providing an improved display without zebra crosstalk by the time base compensation of the non-selective voltage. The same effect can be obtained even though the non-selective voltage is changed for the voltage width corresponding to the difference I for a predetermined period. Figure 9 shows an example of a precise structure of a device for achieving this compensation.

In Figure 9, there are shown a compensation circuit 904 and a power circuit 905. The other components are the same as in Example 1, and they have been given the same reference numerals to avoid duplication of description.

The compensation circuit 904 counts the value of I the same as in Example 1. The value of I is transmitted to the power circuit 905, wherein the sign thereof is the sign signal 108, and the absolute value of I is as the strength signal 909. The power circuit 905 changes the non-selective voltage of Y power source 906, for being entered into the liquid crystal unit 101 to the direction corresponding to the sign signal 108 and for the voltage width in accordance with the strength signal 909 for a predetermined period.

According to the above method, the non-selective voltage is changed for the voltage width corresponding to the noise strength for a predetermined period to the direction of cancelling the spike shaped noise generated on the electrode of the liquid crystal panel 201. This provides the improved display without zebra crosstalk. The sign signal 108 is to determine the direction of the change and the strength signal 109 is to determine the width of the voltage.

The precise structure and operation of various components of the present invention will now be given.

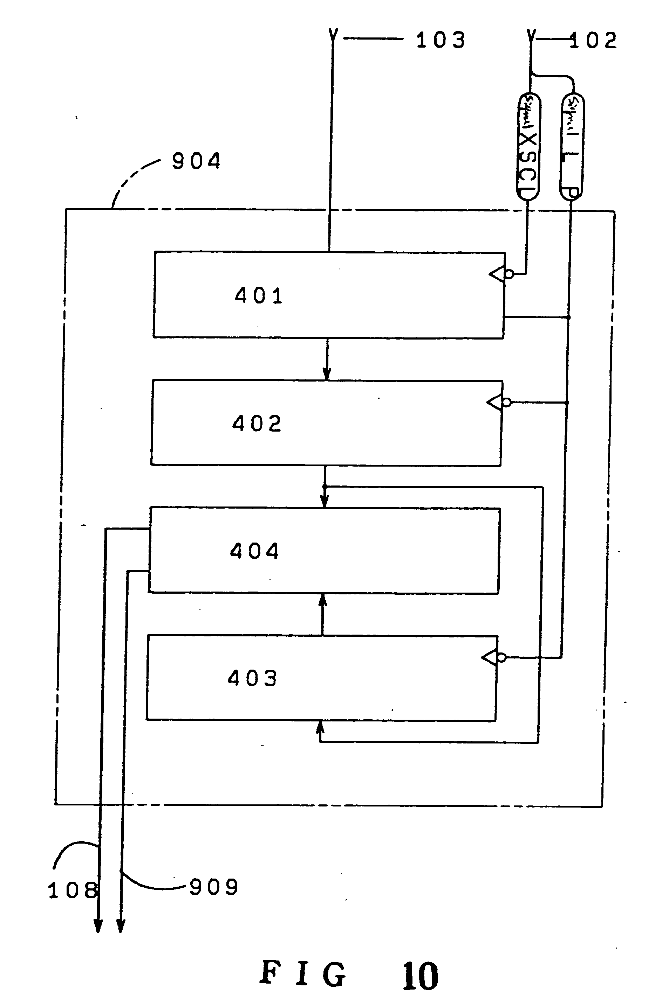

Figure 10 shows the structure of the compensation circuit 904. In Figure 10 there are shown a counter circuit 401, a first counter holding circuit 402, a second counter holding circuit 403 and a numerically arithmetic circuit 404 which are all the same as those in Figure 4 and which act similarly. Thus, the counter circuit 401 counts the number of ON dots by the data signal 103. The first counter holding circuit 402 and the second counter holding circuit 403 hold the number of ON dots M_{ON} and N_{ON} on the (n+1)-th and the n-th common electrodes 202 respectively, whereby the numerically arithmetic circuit 403 calculates the value of I. The sign signal 108 and the strength signal 909 showing the absolute value of I are output in response to the signal LP of the control signal 102.

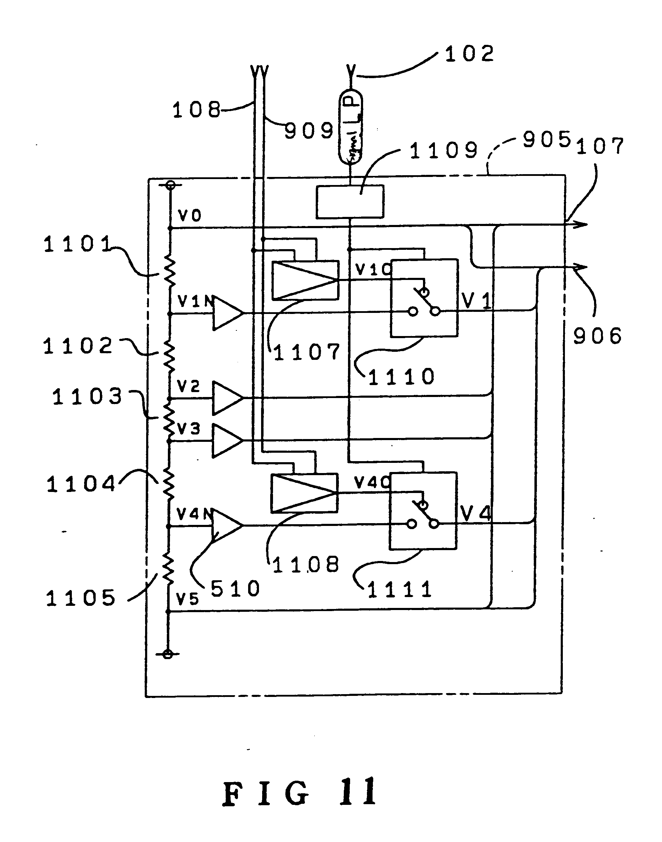

Figure 11 shows the structure of the power circuit 905. In Figure 11, there are shown resistors 1101 to 1105 connected in series, and the voltages V0 and V5 are applied to both ends thereof.

When the resistance value of each of the resistors 1101 to 1105 is r0, r1, r2, r3 and r4 respectively, the following relation occurs:$\text{r0 = r1 = r3 = r4}$$\text{(n-4) x r0 = r2.}$

When the divided voltage applied to the end portions of each of the resistors 1101 to 1105 is VO, V1N, V2, V3, V4N and V5, the following relation occurs: 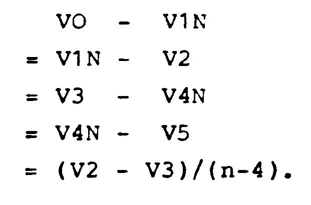
Each divided voltage is output by stabilising with the voltage stabilising circuit 510 the same as in Figure 5.

Voltage generating circuits 1107, 1108 are for generating a voltage in accordance with the sign signal 108 and the strength signal 909, which is constructed by a digital to analog converter.

When the sign signal 108 shows a positive value, the voltage generating circuit 1107 generates a voltage N1C in which the value of the voltage shifts to the voltage V0 side for the voltage width in accordance with the absolute value of I which is shown by the strength signal 909 relative to the voltage V1N. Similarly, the voltage generating circuit 1108 generates a voltage V4C in which the value of the voltage shifts to the voltage V5 side for the voltage width in accordance with the absolute value of I shown by the strength signal 909 relative to the voltage V4N.

When the sign signal 108 shows a negative value, the voltage generating circuits 1107 and 1108 each generates the voltages V1C and V4C respectively, in which the each value of the voltage shifts to each side of voltage V2 and V3 for the voltage width in accordance with the absolute value of I which is shown by the strength signal 909.

The size of the above voltage width, for varying in accordance with the absolute value of I shown by the strength signal 909, can be changed in the positive case and negative case of the value I shown by the sign signal 108.

A pulse width generating circuit 1109 is for generating the signal which becomes the active state only for a predetermined period. The signal is output in response to the signal LP of the control signal 102. However, the above signal is not output when the signal FR of the control signal 102 is switched.

A switch 1110 is for switching the voltages V1N and V1C. A switch 1111 is for switching the voltages V4N and V4C. Additionally, each switch 1110 and 1111 is switched by the signal output from the pulse width generating circuit 1109. Thus, each switch 1110 and 1111 selects the voltages V1C and V4C respectively, for a predetermined period in accordance with the pulse width when the signal which is output from the pulse width generating circuit 1109 is in the active state. When the signal which is output from the pulse width generating circuit 1109 is in the non-active state, each voltage is switched to the voltage V1N and the voltage V4N respectively, and finally each voltage is output as the voltages of V1 and V4 respectively. Accordingly, the voltages V1 and V4 output from the switches 1110 and 1111 change by the value of I for a predetermined period, the direction of change being in accordance with the sign of I, and the size of the change being in accordance with the absolute value of I.

The power circuit 905 outputs the voltages V1 and V4 and the voltages V0 and V5 as the Y power source 906, and outputs the voltages V0, V2, V3 and V5 as the X power source 107.

The Y power source 906 and X power source 107 output the following two groups of voltages to the liquid crystal unit 101. Namely, one group of voltages is:
the voltage V0 of Y power source 906 (selective voltage)
the voltage V4 of Y power source 906 (non-selective voltage)
the voltage V5 of X power source 107 (ON voltage)
the voltage V3 of X power source 107 (OFF voltage), and the other group of voltages is:
the voltage V5 of Y power source 906 (selective voltage)
the voltage V1 of Y power source 906 (non-selective voltage)
the voltage V0 of X power source 107 (ON voltage)
the voltage V2 of X power source 107 (OFF voltage).

The non-selective voltage varies in accordance with the value of I for a predetermined period in view of the direction and size of the value. This operation is explained using an example in which the pattern shown in Figure 6 is displayed.

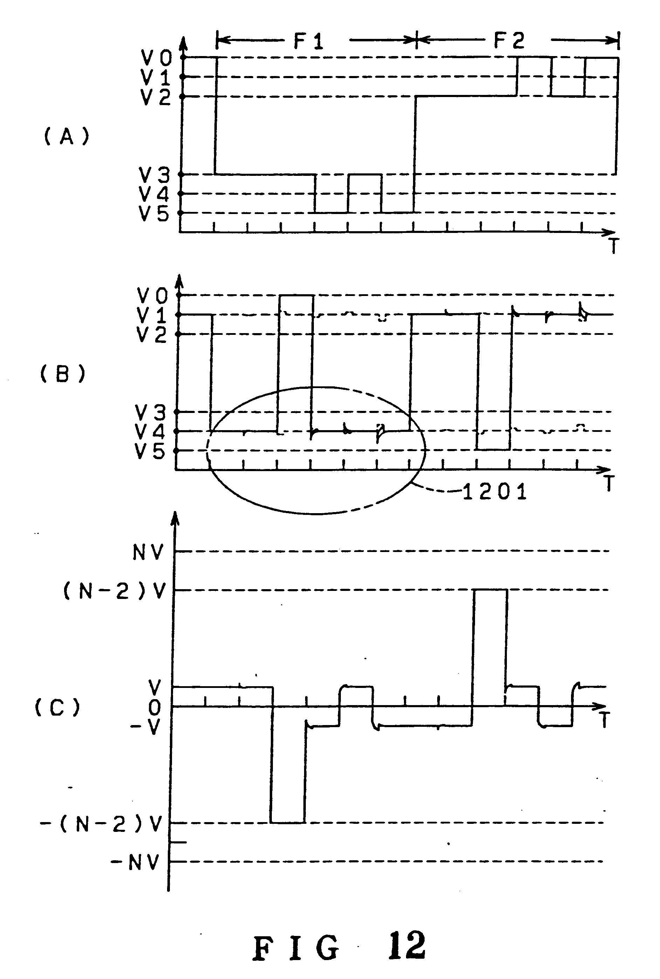

Figure 12 shows an example of the applied voltage waveform. Figure 12 (A) shows the segment voltage waveform added on the segment electrode X4 for forming the display dot 601 in Figure 6. Figure 12 (B) shows the voltage waveform added to the common electrode Y3 for forming the display dot 601. Figure 12 (C) shows the voltage waveform added to the display dot 601.

The voltages marked by the oblique lines of Figures 12 (A) and (B) show the voltages of V0, V2, V3 and V5 of X power source 107 and the voltages V0, V1, V4 and V5 of Y power source 906.

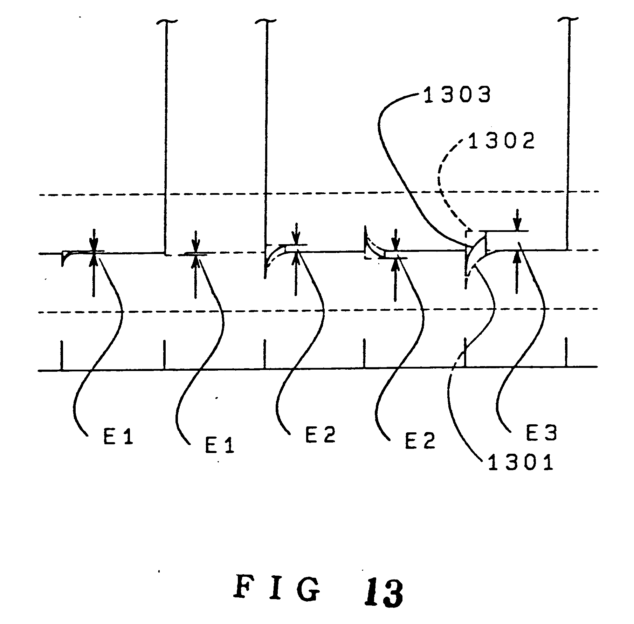

The encircled portion 1201 in Figure 12 (B) is shown in an enlarged form in Figure 13. In Figure 13, there are shown a spike shaped noise voltage 1301 for being generated in the common electrode, a changeable non-selective voltage 1302 formed by Y power source 906 and voltage widths E1 to E3 for changing. Also shown in Figure 13 is a voltage 1303 which is composed of the above voltages 1301 and 1302.

The difference I between the number of ON dots on the n-th common electrode and the number of ON dots on the (n+1)-th common electrode at the time when the selection moves from n-th common electrode to (n+1)-th common electrode when the display as shown in Figure 6 is performed, is as follows;
from first to second ..... I = -2
from second to third ..... I = 2
from third to fourth ..... I = -4
from fourth to fifth ..... I = 4
from fifth to sixth ..... I = -6
from sixth to first ..... I = 6.

With the movement from first to second, second to third, third to fourth, etc., the noise voltage 1301 shown in Figure 13 increases. The width of the non-selective voltages, for changing to the reverse direction of generating the noise voltage 1301 for a predetermined period from E1 to E3, also increase and thus compensate the voltage 1303. Thus, the voltage added to the display dot 601 of Figure 12 (C) is compensated, thereby providing an improved display without zebra crosstalk.

When the selection moves from the n-th common electrode of the liquid crystal panel 201 to (n+1)-th common electrode, the non-selective voltage of Y power source 906 is changed for a predetermined period for the voltage in accordance with the difference I between the number of ON dot on n-th common electrode of the liquid crystal panel 201 and (n+1)-th common electrode. This provides the improved display without zebra crosstalk.

Accordingly, in the present Example, the non-selective voltage is changed for a predetermined period for the voltage width in accordance with the value of I, thereby achieve a compensation which is hereinafter referred to as a voltage base compensation of the non-selective voltage.

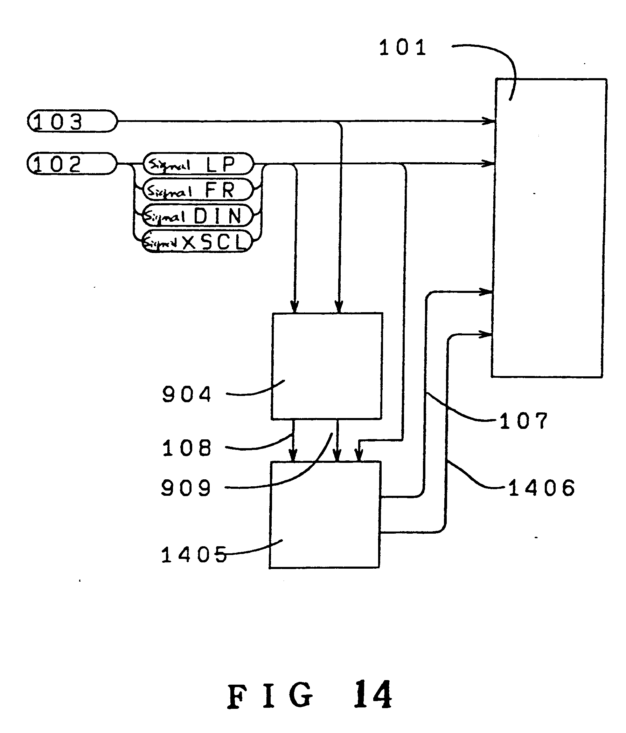

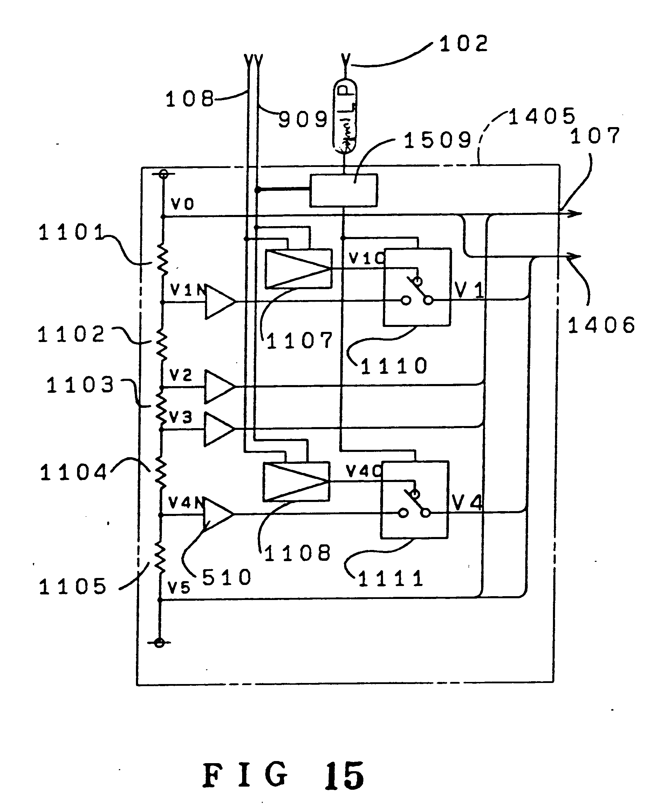

### EXAMPLE 3 (Figures 14 and 15)

This Example describes another way of providing an improved display without zebra crosstalk.

Examples 1 and 2 show a method of compensating the non-selective voltage by either time or voltage in accordance with the value of I. However, both the time and voltage are compensated in accordance with the value of I, thereby also obtaining the same effect. Figure 14 shows one example of a precise structure of a device for compensating as above.

In Figure 14, the structure and operation except for the power circuit 1405 and the Y power source 1406 formed by the power circuit 1405 are the same as that in Figure 9.

Figure 15 shows a precise structure of the power circuit 1405, and the structure and operation except for the pulse width control circuit 1509 are the same as that in Figure 11.

The pulse width control circuit 1509 outputs an active signal for the period in accordance with the value of the strength signal 909 in response to the falling edge of the signal LP of the control signal 102. However, the signal is not output when the signal FR of control signal 102 is switched. The signal from the pulse width control circuit 1509 controls the switches 1110 and 1111, and switches the switches 1110 and 1111 for the period in accordance with the value of I.

According to the above structure, the non-selective voltage of the Y power source 1406 is changed by the period and the voltage width in accordance with the value of I, thereby compensating the noise voltage generated in the liquid crystal panel 201. Thereby, the improved display without zebra crosstalk can be provided, the same as in Examples 1 and 2.

In the present Example 3, the non-selective voltage is compensated by both of period and voltage in accordance with the value of I, and this is hereinafter referred to as a time voltage base compensation.

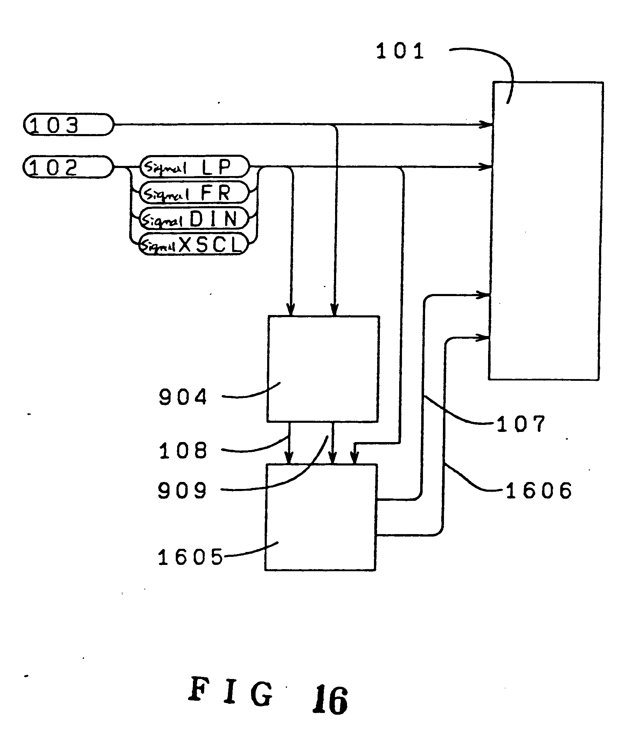

### EXAMPLE 4 (Figures 16 to 20)

In the circuits of Examples 1 to 3, a square shaped waveform is applied to the common electrodes in order to compensate a spike shaped noise waveform which is generated on the common electrodes of the liquid crystal panel 201. The generated noise waveform is spike shaped, rather than square shaped. (The generated noise waveform is a waveform of the voltage generated from a differentiating circuit and is indicated by an exponential function, the differentiating circuit comprising the resistors of the common and segment electrodes of the liquid crystal panel 201 and a capacitor of the liquid crystal layer). In order to compensate the voltage waveform more accurately, the voltage waveform having a peak value according to the value I and having a shape similar to the generated noise waveform, is applied to the non-selective voltage. This makes it possible to provide an improved display quality without zebra crosstalk.

Referring now to Figure 16, there is shown a circuit diagram for compensating such voltage waveforms. In Figure 16, all the constituents operate in the same way as in Figure 9, except the power source circuit 1605 and the Y power source 1601 generated from the power circuit 1605.

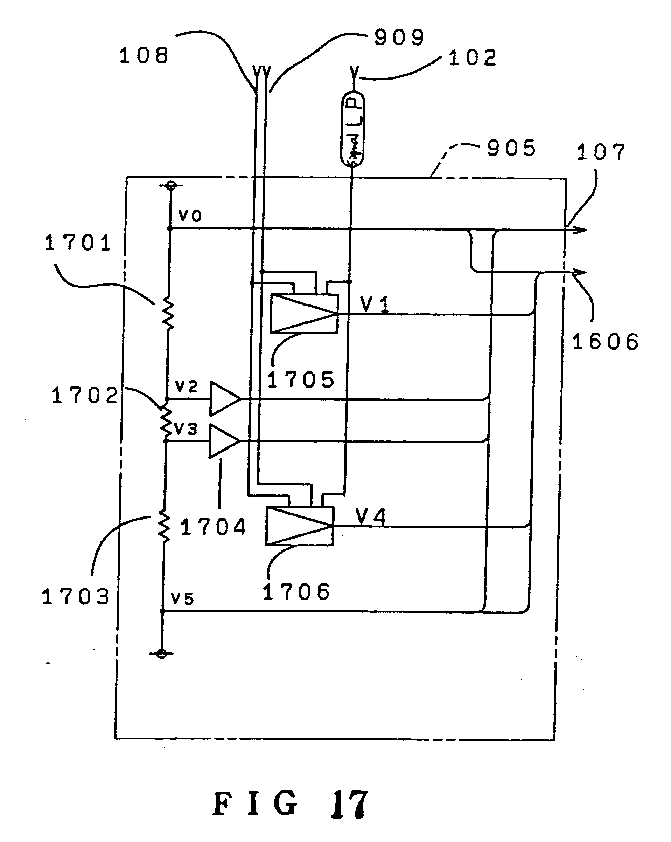

Figure 17 shows a construction of the power source 1605, in detail. In Figure 17, respective resistors 1701 to 1703 are connected in order and in series, and the resistance values r1, r2 and r3 of the respective resistors 1701 to 1703 are expressed by the following equations;$\text{r1/2 = r2/2 = r3/(n-4).}$
Further, the voltages V0 and the voltages V5 are applied to both ends of the resistors 1701 to 1703.
(Voltage V0> Voltage V5). As shown in Figure 17, V0, V2, V3 and V5 are the voltages at the ends of the resistors 1701 to 1703 respectively, and are expressed by the following equations: 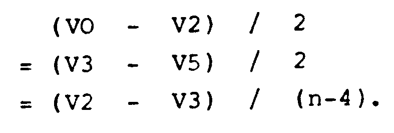
The voltages V2 and V3 are stabilised by a voltage stabilising circuit 1704 in a similar manner to the voltage stabilising circuit 510 shown in Figure 5.

The voltages V1N and V4N are defined as follows:$\text{V1N = (VO - V2) /2 + V2}$$\text{V4N = (V3 - V5) /2 + V5.}$
The voltage V1N is an intermediate value between the voltages V0 and V2, and the voltage V4N is an intermediate value between the voltages V3 and V5.

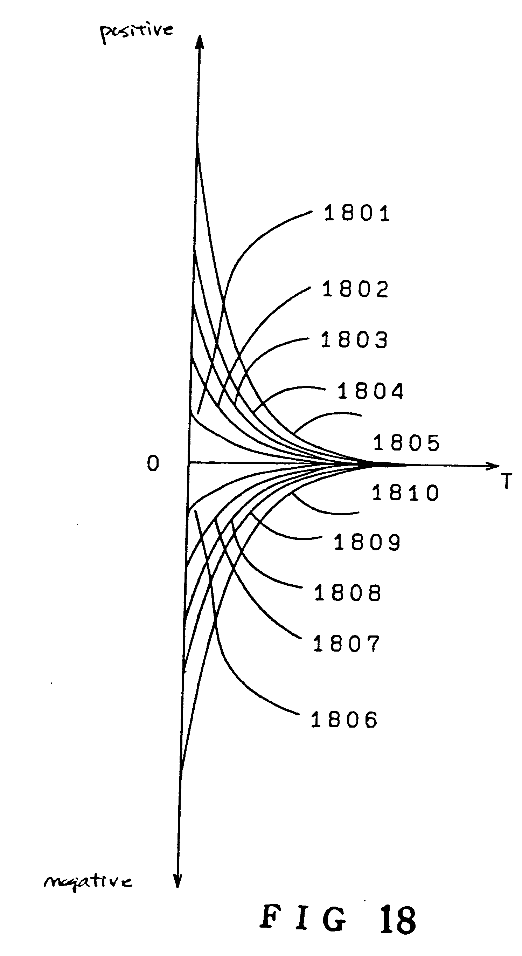

In Figure 17, function waveform generating circuits 1705 and 1706 are provided to generate function waveform voltages of which the direction and the peak value is changed by a sign signal 108 and a strength signal 109. The function waveform circuit 1705 outputs the compensation voltage V1 comprising the voltage E having a potential function waveform shown in Figure 18 and the voltage V1N. In this case, the voltage E having the exponential function waveform is expressed by the following equation:$\text{E = α X exp (- β X T)}$
wherein α and β are constants, and T is time. Similarly, the function waveform circuit 1706 outputs the compensation voltage V4 comprising the voltage E having an exponential function waveform E (shown in Figure 18) and the voltage V4N. Also similarly, the voltage E is expressed by the following equation:$\text{E = - α X exp (- β X T).}$

The sign of α corresponds to the signal which the sign signal 108 indicates. Upon the sign signal, the direction where the voltage is applied is switched. The absolute value of α is changed according to the strength signal 909, thereby making it possible to change the peak value of the waveforms.

When the sign signal 108 is plus and the value of the strength signal 909 is gradually increased, the waveforms 1801, 1802, 1803 etc. are generally generated from the function waveform generating circuit 1705, as shown in Figure 18. When the sign signal 108 is minus, the waveforms 1806, 1807, 1808, etc. are generated.

When the sign signal 108 is plus and the value of the strength signal 909 is gradually increased, the waveforms 1806, 1807, 1808, etc. are gradually generated from the function waveform generating circuit 1706, as shown in Figure 18. When the sign signal 108 is minus, the waveforms 1801, 1802, 1803, etc. are generated.

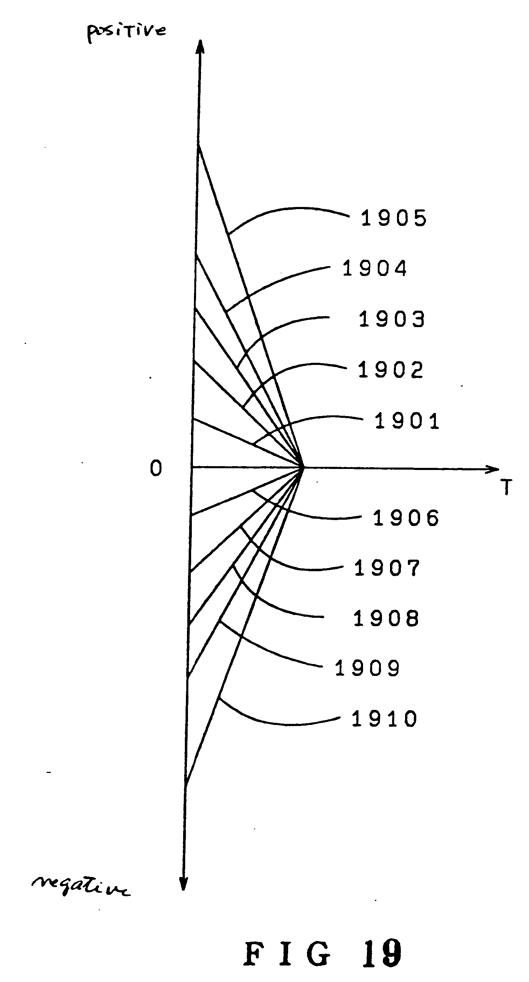

The compensation voltages V1 and V4 are generated from the function waveform generating circuits 1701 and 1706 respectively, in synchronism with the signal LP of the control signal 102. However, when the signal FR of the control signal 102 is switched, the voltages V1N and V4N are generated from the function waveform generating circuits 1705 and 1706 respectively, and not in synchronism with the signal LP of the control signal 102. In addition, the function waveform generating circuit 1705 outputs the voltage V1 comprising the voltage V1N and the voltage of the triangular waveform E (shown in Figure 19) which is similar to the exponential function obtained by the following equation: 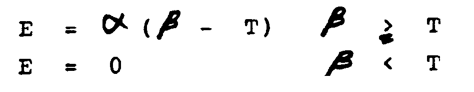
wherein α and β are constants and T is time.
Similarly, the function waveform generating circuit 1706 outputs the voltage V4 comprising the voltage V4N and the voltage of the triangular waveform E (shown in Figure 19) which is similar to the exponential function obtained by the following equation: 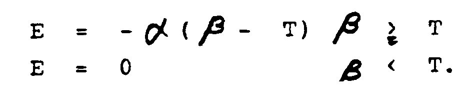
The sign α corresponds to either plus or minus for the sign signal 108 and, upon the state of sign, the direction where the voltage is applied is changed. Similarly, the absolute value of α is changed according to the strength signal 909, thereby making it possible to change the peak value of the waveform.

When the sign signal 108 is plus and the value of the strength signal 909 is gradually increased, the waveforms 1901, 1902, 1903, etc. and the waveforms 1906, 1907, 1908, etc. are gradually generated from the function waveform generating circuits 1705 and 1706 respectively. When the sign signal 108 is minus, the waveforms 1906, 1907, 1908, etc. and the waveforms 1901, 1902, 1903, etc. are gradually generated from the function waveform generating circuits 1705 and 1706 respectively.

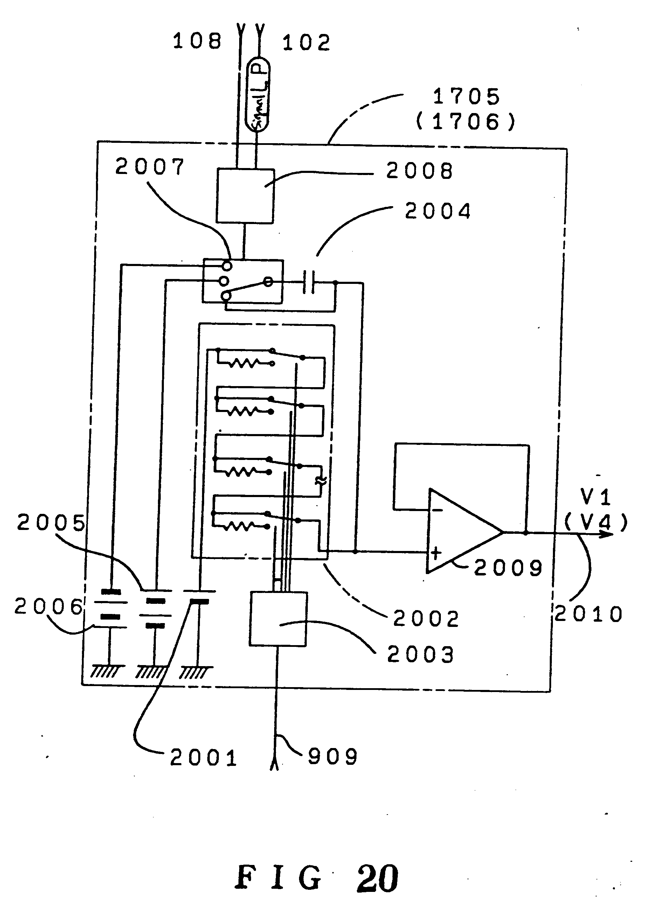

Reference will now be made to Figure 20, which shows in detail the construction of the respective function waveform circuits 1705 and 1706. In Figure 20, when the function generating circuit 1705 is utilised, the reference voltage 2001 is V1N, and when the function generating circuit 1706 is utilised, the reference voltage is V4N. A variable resistor 2002 comprises a plurality of resistors wherein the resistance value is increased in the exponential functions of r, 2r, 4r ... and 2^{m}r. Upon the input of the switches, the values of the resistors can be changed.

A circuit 2003 is for changing the value of the variable resistor 2002 upon the output of the strength signal 909. As the strength signal 909 is gradually increased, the value of the variable resistor 2002 is increased. A capacitor 2004 is provided to form a differential circuit together with the variable resistor 2002.

The voltage of a first switching power source 2005 is higher than the reference voltage 2001. In addition, instead of switching the power source 2005, the voltage V0 may be utilised in the function waveform generating circuit 1705. Further, the voltage V3 may be utilised in the function waveform generating circuit 1706.

The voltage of a second switching power source 2006 is lower than the reference voltage 2001. In this case, instead of using the switching power source 2001, the voltage V2 may be utilised in the function waveform generating circuit 1705. Further, the voltage V5 may be utilised in the function waveform generating circuit 1706.

A switch 2007 is switched by a switch control circuit 2008. The switch 2007 is connected to the opposing electrodes of the capacitor 2004. After the switch 2007 is switched to either the first switching power source 2005 or the second switching power source 2006 according to the condition of the sign signal 108, in synchronism with the signal LP of the control signal 102 (except the time when the signal FR of the control signal 102 is switched) by the switch control circuit 2008.

In the function waveform generating circuit 1705, when the sign signal 108 indicates plus, the switch 2007 is switched so as to be connected to the first switching power source 2005. When the sign signal 108 indicates minus, the switch 2007 is switched so as to be connected to the second switching power source 2006.

Similarly, in the function waveform generating circuit 1706, when the sign signal 108 indicates plus, the switch 2007 is switched so as to be connected to the second switching power source 2006. When the sign signal 108 indicates minus, the switch 2007 is switched so as to be connected to the first switching power source 2005. Then, prior to inputting the next signal LP of the control signal 102 to the switch control circuit 2008, the switch 2007 is switched to the opposing electrode of the capacitor 2004.

A voltage follower circuit 2009 having an operational amplifier is provided to reduce the impedance of the voltage applied to the non-inverted input terminal, and output the voltage waveform having the reduced impedance. An output voltage 2010 of the voltage follower circuit 2009 is output as V1 from the function waveform generating circuit 1705, and is output as V4 from the function waveform generating circuit 1706.

In the above mentioned circuit construction, since either the first switching power source 2005 or the second switching power source 2006 is connected to the differential circuit comprising the capacitor 2004 and the variable resistor 2002, the voltage waveform of the exponential function is generated at the non-inverted input terminal of the voltage follower circuit 2009. The voltage waveform has a value which is variable according to the capacitance of the capacitor 2004 and the resistance of the variable resistor 2002.
Therefore, the larger the strength signal 909, then the larger the resistance value of the variable resistor 2002 becomes, and the larger the voltage waveform becomes. In addition, the direction where the voltage is applied is determined by the output of the sign signal 108. The voltage follower circuit 2009 functions to reduce the impedance of the voltage applied to the non-inverted input terminal and output the voltage waveform having the reduced impedance. Further, the voltages V1 and V4 generated from the function waveform generating circuits 1705 and 1706 and the voltages V0 and V5 are combined as a Y power source 1601 and are output to the liquid crystal unit 101. Further, the voltages V0, V2, V3 and V5 are combined as a X power source 107 and are output to the liquid crystal unit 101. At this time, upon the input of the sign signal 108 and the strength signal 909 according to the value I, the voltage having the different direction and value of the exponential function waveform or the voltage having the trigonometric function waveform similar to the exponential function waveform is super-imposed and is applied to the non-selective voltage.

In the construction of the circuits according to the Example, when the selection is moved from its n-th common electrode to the (n+1)-th common electrode on the liquid crystal panel 201, the exponential function voltage waveform or the trigonometric function waveform similar to the exponential function voltage waveform which has a peak value according to the difference I between the values of ON dots on the n-th and (n+1)-th common electrode, is super-imposed onto the non-selective voltage of the Y power source 1606. The super-imposed voltage waveform has the reversed direction to that of the spiked shape noise waveform, and it has the same shape as that of the spike shaped noise waveform. By such a super-imposition, the spike shaped noise waveform is omitted substantially completely and the voltages applied to the respective display dots 204 are compensated. It is thus possible to provide an improved display quality without any zebra crosstalk.

Such a compensation is carried out by super-imposing the function waveform to the non-selective voltage that is hereinafter referred to as the function waveform compensation of the non-selective voltage.

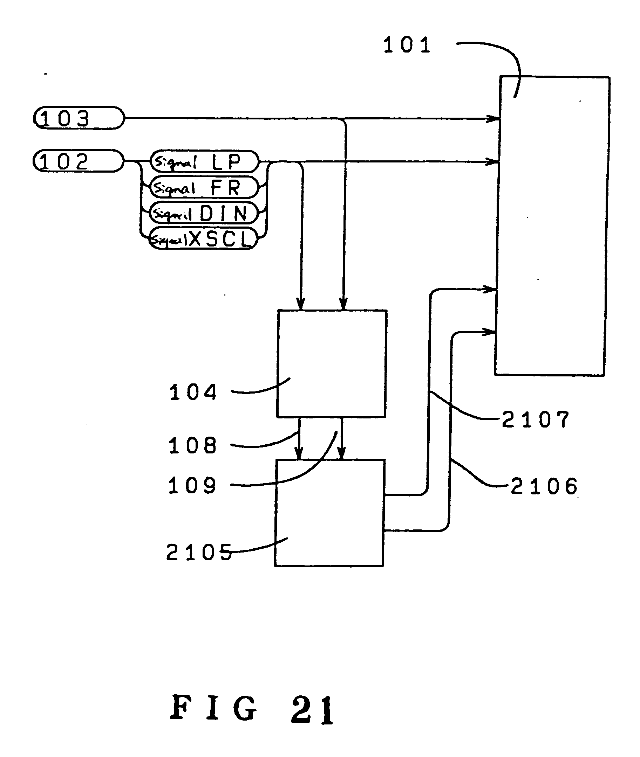

### EXAMPLE 5 (Figures 21 to 23)

In the circuits of the Examples 1 to 4, the non-selective voltages are compensated according to the value I. However, the same effects can be obtained by compensating the ON/OFF voltages according to the value I, and it is thus possible to provide an improved display quality without any zebra crosstalk.

Reference will now be made to Figure 21 which shows a circuit diagram of a circuit according to an embodiment of the present invention, for compensating for the time base where the voltage is applied to the ON/OFF voltages.

In Figure 21, all the constituents operate in the same way as in Figure 1, except the power circuit 2105, the Y power source 2106 generated from the power source circuit 2105, and the X power source 2107.

Upon the input of the sign signal 108 and the strength signal 109, the power source circuit 2105 outputs the X power source 2107 of which ON/OFF voltages are variable, and the Y power source 2106 of which the selective/non-selective voltages are not variable.

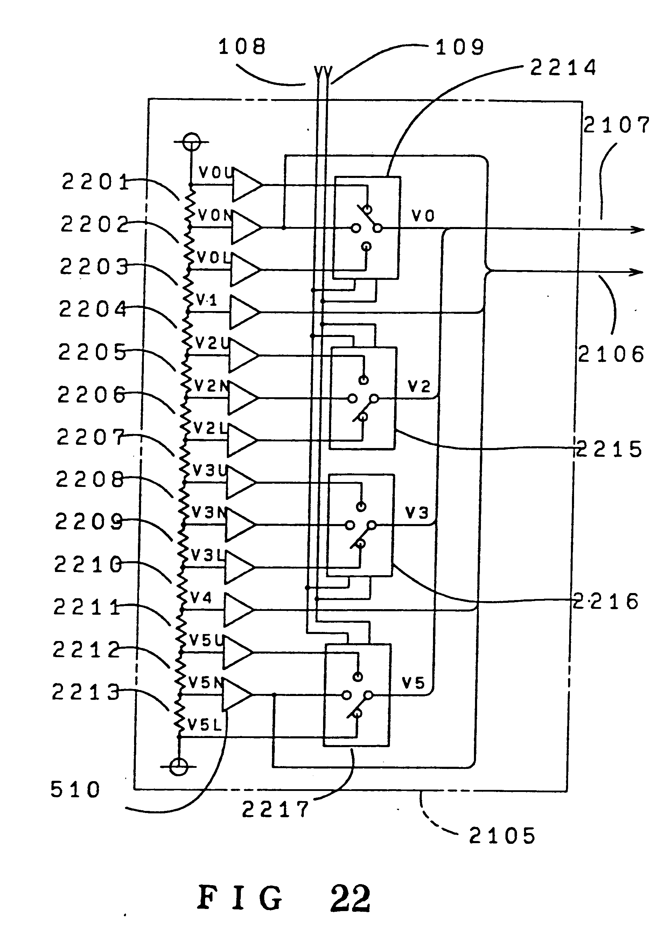

Referring now to Figure 22, there is shown a detailed circuit diagram of the power circuit 2105. In Figure 22, resistors 2201 to 2213 are connected in series at a time, and the voltages V0U and V5L are applied to both ends thereof. The voltages VOU, VON, VOL, V1, V2U, V2N, V2L, V3U, V3N, V3L, V4, V5U, V5N and V5L are the voltages generated at terminals of the respective resistors 2201 to 2213 and are predetermined so as to be expressed by the following equations: 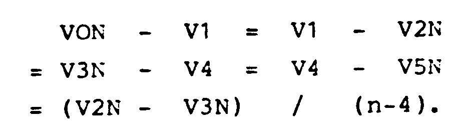
Further, 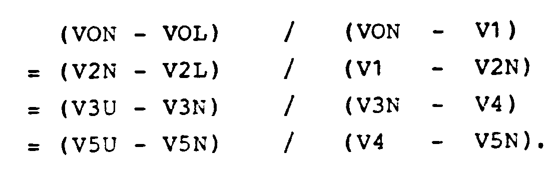
Further,

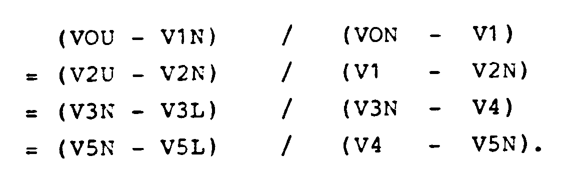

The voltages V0N - V5N are obtained by dividing the respective resistors 2201 to 2213 and they are stabilised by a voltage stabilising circuit 510 respectively, in the same way as in Figure 5. Switches 2214 to 2217 are switched upon the input of the sign signal 108 and the strength signal 109. When the strength signal 109 is active and the sign signal 108 is plus, the respective switches 2214 to 2217 are connected to the following voltages:
switch 2214 ..... voltage V0U
switch 2215 ..... voltage V2U
switch 2216 ..... voltage V3L
switch 2217 ..... voltage V5L.

When the sign signal 108 is minus, the respective switches 2214 to 2217 are connected to the following voltages:
switch 2214 ..... voltage V0L
switch 2215 ..... voltage V2L
switch 2216 ..... voltage V3U
switch 2217 ..... voltage V5U.

When the strength signal 109 is not active, the respective switches 2214 to 2217 are connected to the following voltages, irrespective of the condition of the sign signal 108:
switch 2214 ..... voltage V0N
switch 2215 ..... voltage V2N
switch 2216 ..... voltage V3N
switch 2217 ..... voltage V5N.

When the voltages are generated from the switches 2214 to 2217 are VO, V2, V3 and V5, the power circuit 2105 outputs the voltages combined with V0, V2, V3 and V5 as a X power source 2107, and outputs the voltages combined with V0N, V1, V4 and V5N as a Y power source 2106. The voltages of the Y power source 2016 and the X power source 2107 are applied to the liquid crystal unit 101 by either of the following ways. The first way is one in which the voltage VON of the Y power source 2106 is the selective voltage, the voltage V4 of the Y power source 2106 is the non-selective voltage, the voltage V5 of the X power source 2107 is the ON voltage, and the voltage V3 of the X power source 2107 is the OFF voltage. The second way is one in which the voltage V5N of the Y power source 2106 is the selective voltage, the voltage V1 of the Y power source 2106 is the non-selective voltage, the voltage V0 of the X power source 2107 is the ON voltage, and the voltage V2 of the X power source 2107 is the OFF voltage. Either of the two ways may be selected in the same manner as in the Example 1.

In the above construction, as for the common electrodes Y1 to Y6 on the liquid crystal panel 210, when the selection is moved from the n-th common electrode to the (n+1)-th common electrode, when the difference I between the numbers of the ON dots on both common electrodes is positive, the voltages VOU, V2U, V3L and V5L are applied from the X power source 2107 to the liquid crystal unit 101 for the period in accordance with the absolute value of the difference I as the voltages V0, V2, V3 and V5 from the X power source 2107. When the difference I is negative, the voltages V0L, V2L, V3U and V5U are applied to the liquid crystal unit 101 for the period according to the absolute value of the difference I as the voltages V0, V2, V3 and V5.

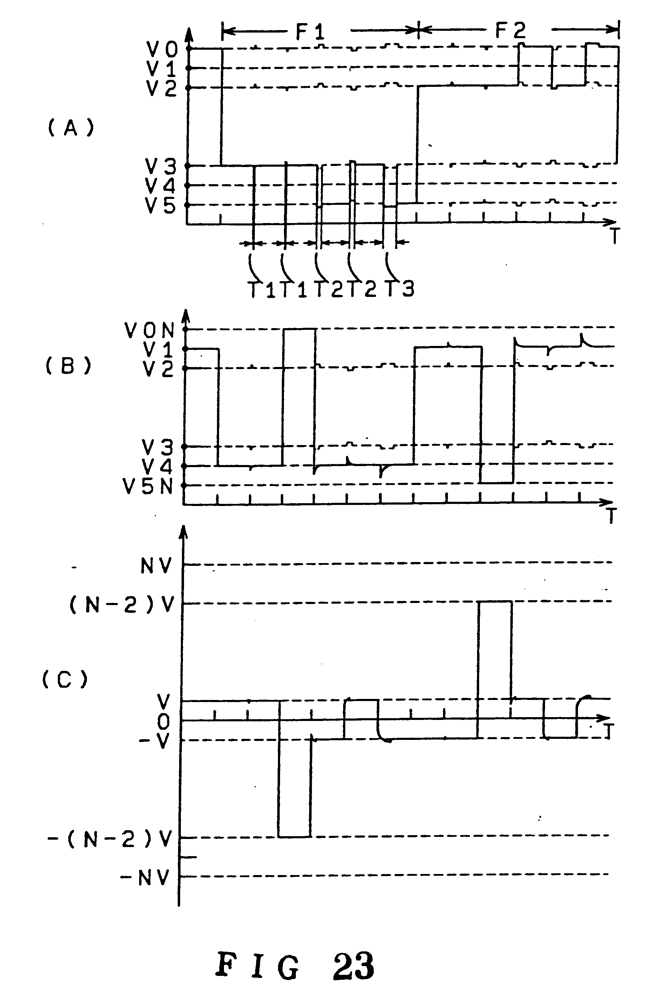

Referring again to Figure 6, there is shown one embodiment of the display pattern wherein the above construction is adapted to the liquid crystal panel 201. Figure 23 (A) shows a voltage waveform applied to the segment electrode X4 for forming the display dots 601 of Figure 6. Figure 23 (B) shows the voltage waveform applied to the common electrode Y3 for forming the display dots 601. Figure 23 (C) shows the voltage waveform applied to the display dots 601.

When the selection is moved from one common electrode to the next common electrode, the larger the difference I between the number of ON dots on the one common electrode and on the next common electrode are, then the larger the spike shaped noise waveform super-imposed to the non-selective voltage becomes. However, in Figure 23 (A), ON/OFF voltages are changed in the direction where the super-imposed spike shaped noise is generated, and the period where the ON/OFF voltages are changed are increased according to the difference I, as shown in T1, T2 and T3 of Figure 23 (A). With such a construction, it is possible to provide an excellent display without any zebra crosstalk by compensating the effective voltage.

The ON/OFF voltages are changed for the period according to the value I, so that the same effects as those of Examples 1 to 4 can be obtained. This method of compensation is hereinafter referred to as time base compensation of ON/OFF voltages.

### EXAMPLE 6

It is possible to compensate the voltage base, the time voltage base or the functional waveform of the ON/OFF voltages. In these cases, the same effects as those of Example 5 can be obtained. It is also possible to compensate the voltage base, the time voltage base or the functional waveform of non-selective voltage and either of ON/OFF voltages, or these three voltages. In addition, such constructions are easily achieved based on the above Examples and so a detailed description of such constructions will not be given.

In Examples 1 to 6, as for the common electrodes Y1 to Y6, when the selection is moved from one common electrode to the next common electrode, the non-selective voltage or the ON/OFF voltages are changed according to the difference I between the number of ON dots of the one and next selected common electrode, thereby making it possible to provide an improved display quality without zebra crosstalk.

It is to be appreciated that the means for compensating the voltage is not limited to what has been described in Examples 1 to 6. It is also possible to apply many means that can compensate the effective voltages applied to the display dots according to the difference I.

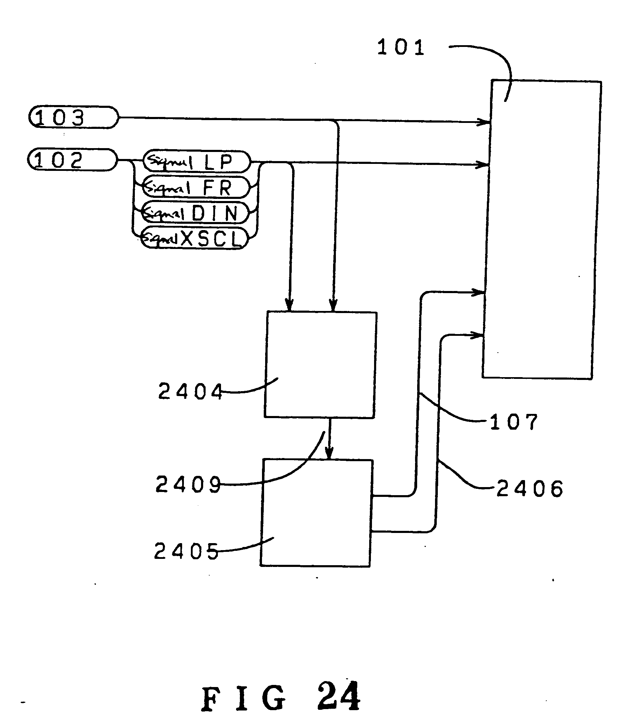

### EXAMPLE 7 (FIGURES 24 to 31)

Reference is now made to Figures 24 to 31 in connection with the provision of a display without horizontal crosstalk. As aforementioned, the degree of the horizontal crosstalk is determined by the number of the ON dots selected on the common electrode. Therefore it is necessary to compensate the waveform due to counting the value Z during operating the liquid crystal display device. Figure 24 shows a circuit diagram for compensating such voltage.

In Figure 24, a compensation circuit (a circuit for generating a compensating signal 2404) is provided to count the value of Z of ON dots on the next selected common electrode, and output the strength signal 2409 for the period according to the value Z in synchronism with the signal LP of the control signal 102. A power circuit 2405 receives the strength signal 2409, thereby forming a Y power source 2409 having a changeable selective voltage and a X power source 107. The changed voltage width of the selective voltage is uniform, and the period of the changed voltage width is defined by the strength signal 2409. The selective voltage is varied for the period according to the value Z. Thus, the selective voltage is compensated for the counted period according to the value Z by the compensation circuit 2404.

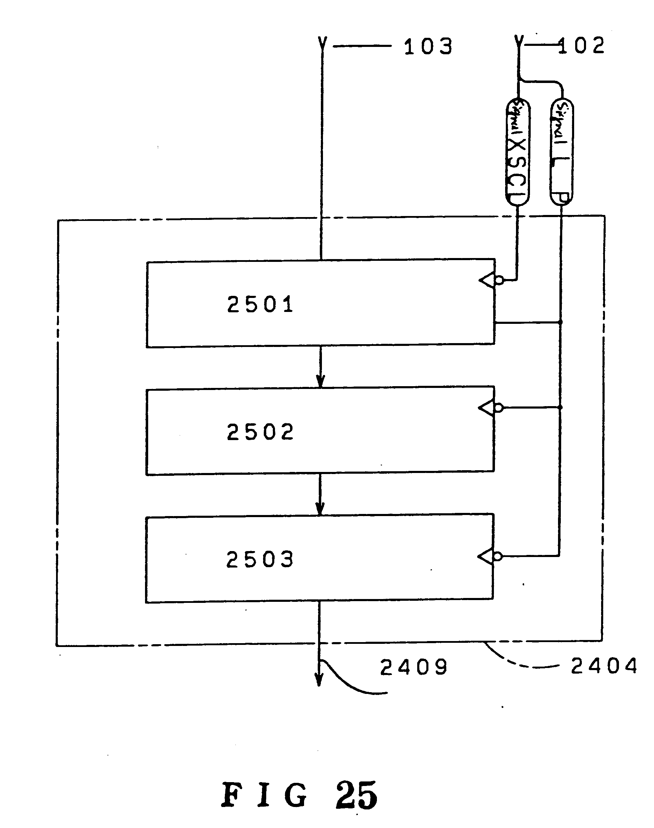

Figure 25 shows one example of a compensation circuit 2404 having counter circuit 2501 and a count holding circuit 2502. The counter circuit 2501 and the count holding circuit 2502 are operated in the same way as the counter circuit 401 and the count holding circuit 402. In Figure 25, the value M_{ON} of ON dots of the next selected common electrode is counted by the counter circuit 2501, and is output as the value Z into the count holding circuit 2502. A pulse width control circuit 2503 is provided to output the strength signal 2409 which is active for the period according to the value Z, in synchronism with the falling edge of the signal LP of the control signal 102.

The period W where the strength signal 2409 is active is represented by the following equation:${\text{W = Σa}}_{\text{K}} {\text{Z}}^{\text{1/K}} {\text{+ Σb}}_{\text{K}} {\text{Z}}^{\text{1/K}}$
wherein a_{K} and b_{K} are constants, and K is a natural number.

The period is represented by the following equation:${\text{W = a₀ + a₁ Z + a₂Z² + b₂Z}}^{\text{1/2}} \text{.}$

When the selection is moved from the n-th common electrode to the (n+1)-th common electrode, the strength signal 2409 is output for the period in accordance with the value Z of ON dots on the (n+1)-th common electrode.

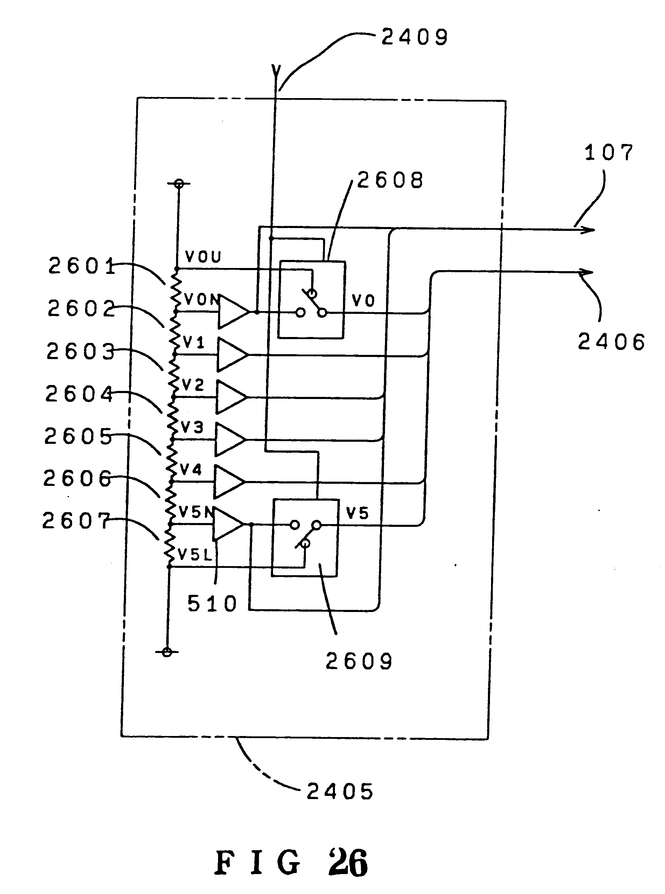

Reference is now made to Figure 26 which shows a power circuit 2405 having resistors 2601 to 2607. The resistors 2601 to 2607 are connected in series, and they are connected to voltages V0U and V5L at both ends thereof. The voltages V0U, V0N, V1, V2, V3, V4, V5N and V5L represent the voltages generated at terminals of the respective resistors 2601 to 2607, and the relations among the respective voltages are as follows: 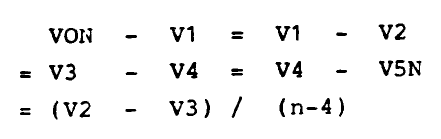
(wherein n is a constant).
Further, 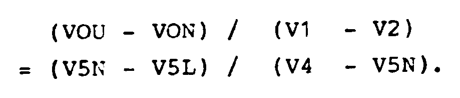
Further, the voltages V0N - V5N generated from the resistors 2601 to 2607 are stabilised by a voltage stabilising circuit 510 in the same way as in Figure 5.

Switches 2608 and 2609 are switched by the strength signal 2409. When the strength signal 2409 is active, the switches 2608 and 2609 are connected to the voltages V0U and V5L respectively. When the strength signal 2509 is not active, the switches 2608 and 2609 are connected to the voltages VON and V5N respectively. The voltages generated from the above switches 2608 and 2609 are generated as the voltages V0 and V5, and the voltages V0 and V5 and the voltages V1 and V2 are generated as a Y power source 2406. The voltages VON, V2, V3 and V5N are generated as a X power source 107. The power circuit 2405 has the above mentioned construction. On receiving the strength signal 2409 generated by the compensation circuit 2404, the voltages V0U and V5L are generated as the voltages V0 and V5 of the Y power source for the period that the strength signal is active. When the strength signal is not active, the voltages V0N and V5N are generated.

The selective voltage, non-selective voltage, ON voltage and OFF voltage are applied in two combinations from the Y power source 2406 and X power source 107 to the liquid crystal unit 101 in the same way as those of Examples 1 to 7. The selective voltage of the Y power source 2406 is varied in accordance with the value Z. In the above construction, when the selection is moved from the n-th common electrode to the (n+1)-th common electrode on the liquid crystal panel 201, instead of the voltages V0N and V5N, the voltages V0U and V6L are generated as the voltages V0 and V5 of the Y power source 2406 for the period in accordance with the value Z of ON dots on the (n+1)-th common electrode.

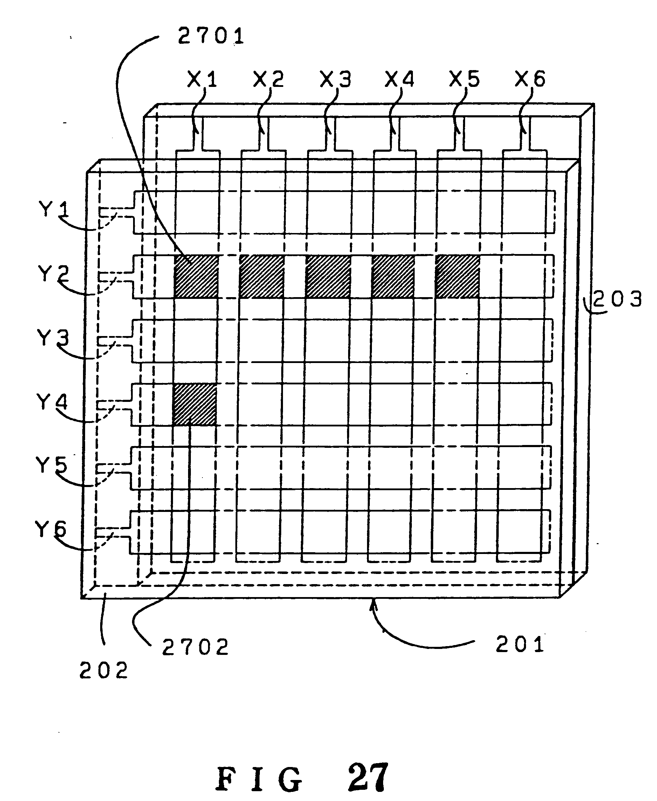

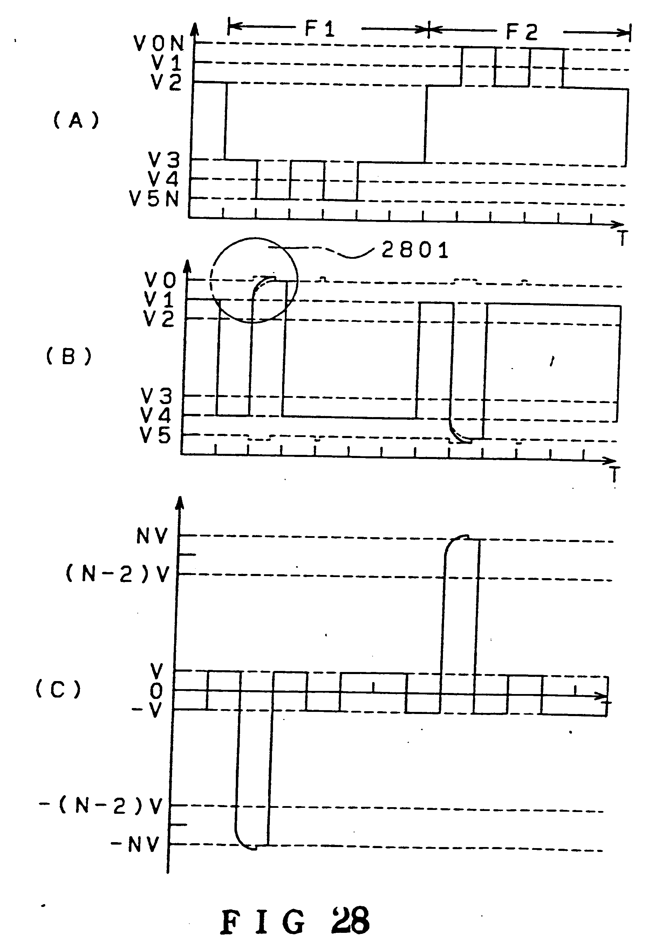

In Figure 27 there is shown an embodiment of the display pattern wherein the above construction is adapted to the liquid crystal panel 201. Figure 28 (A) shows the voltage waveform applied to the segment electrode X1 to form an ON dot 2701. Figure 28 (B) shows the voltage waveform applied to the common electrode Y2 to form the ON dot 2701. Figure 28 (C) shows the voltage waveform applied to the ON dot 2701.

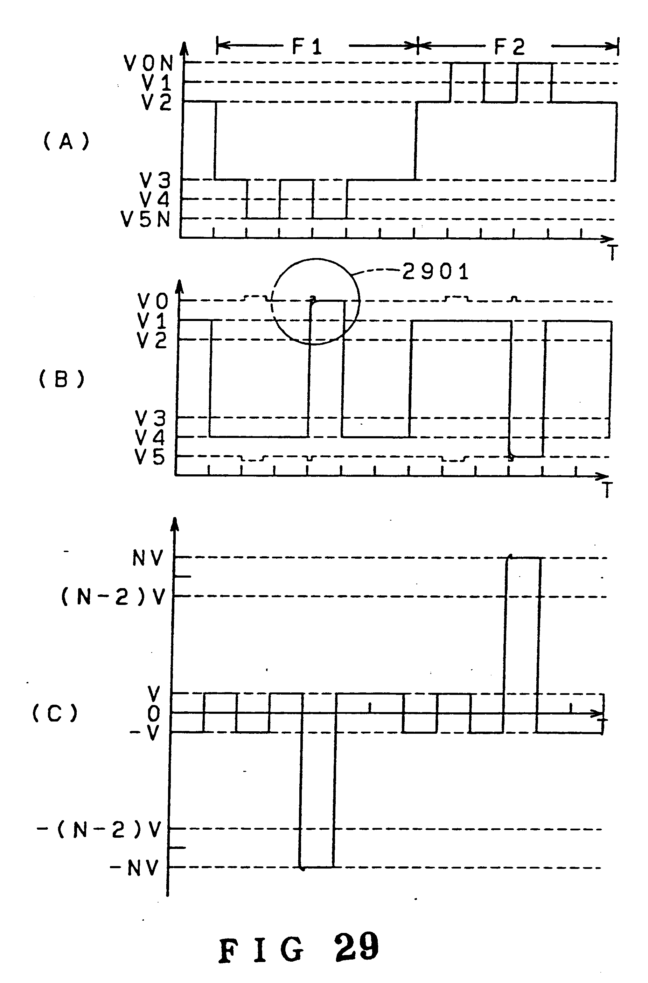

Similarly, Figure 29 (A) shows the voltage waveform applied to the segment electrode X1 to form an ON dot 2702. Figure 29 (B) shows the voltage waveform applied to the common electrode Y4 to form the ON dot 2702. Figure 29 (C) shows the voltage waveform applied to the ON dot 2702. The voltage shown by the dashed line is a voltage applied from the Y power source 2406 and the X power source 107.

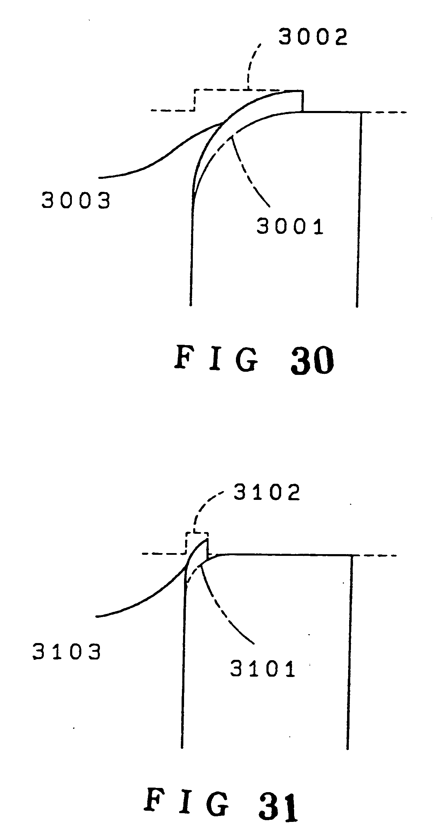

Figure 30 shows an exploded view of the portion surrounded with a circle in Figure 28 (B). In Figure 30, the reference numeral 3001 shows a curved waveform generated in the second common electrode Y2 at the time of being switched from the non-selective voltage to the selective voltage. The reference numeral 3002 shows the waveform of the selective voltage applied from the Y power source 2406. The reference numeral 3003 shows the waveform obtained by the combination of the waveforms 3001 and 3002, and is the voltage waveform applied to the second common electrode Y2.

Similarly, Figure 31 shows an exploded view of the portion surrounded with a circle in Figure 29 (B). The reference numeral 3101 shows a curved waveform generated in the fourth common electrode Y4 at the time of being switched from the non-selective voltage to the selective voltage. The reference numeral 3102 shows the waveform of the selective voltage applied from the Y power source 2406. The reference numeral 3013 shows the waveform obtained by the combination of the waveforms 3101 and 3102, and is the voltage waveform applied to the fourth common electrode Y4.

When the display pattern shown in Figure 27 is formed, the respective value Z of ON dots on the common electrode 202 are as follows:

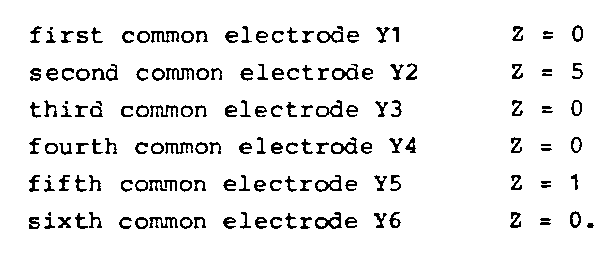

As will be apparent from the comparison between the waveform 3001 of Figure 30 and the waveform 3101 of Figure 31, a larger curved waveform may occur on the second common electrode Y2, rather than that of the fourth common electrode Y4, at the time of switching from non-selective voltage to the selective voltage.
However, the waveform 3002 of the selective voltage of Figure 30 is changed more promptly in the direction where the voltage on the common electrode is applied to the selective voltage, and for a longer time, than those of the waveform 3102 of Figure 31. By such a construction, the selective voltages are compensatively applied in accordance with the respective degrees of the curved waveforms 3001 and 3101 of Figures 30 and 31 respectively, resulting in no difference between the effective voltages applied to the ON dots 2701 and 2702 respectively. Therefore, it is possible to provide a superior display quality without any horizontal crosstalk.

As aforementioned, it is possible to provide an improved display without any horizontal crosstalk by compensating the period where the selective voltage is applied in accordance with the value Z of ON dots on the selected common electrode.

### EXAMPLE 8

It is also possible to compensate the voltage base, the time voltage base, or the functional waveform of the selective voltage in accordance with the value Z of the ON dots on the selected common electrode of Figure 2. In this case, the same effects as those of Example 7 may be obtained.

### EXAMPLE 9

It is possible to compensate the voltage, the time voltage base or the functional waveform of ON voltage and OFF voltage in accordance with the value Z of the ON dots on the selected common electrode 202.

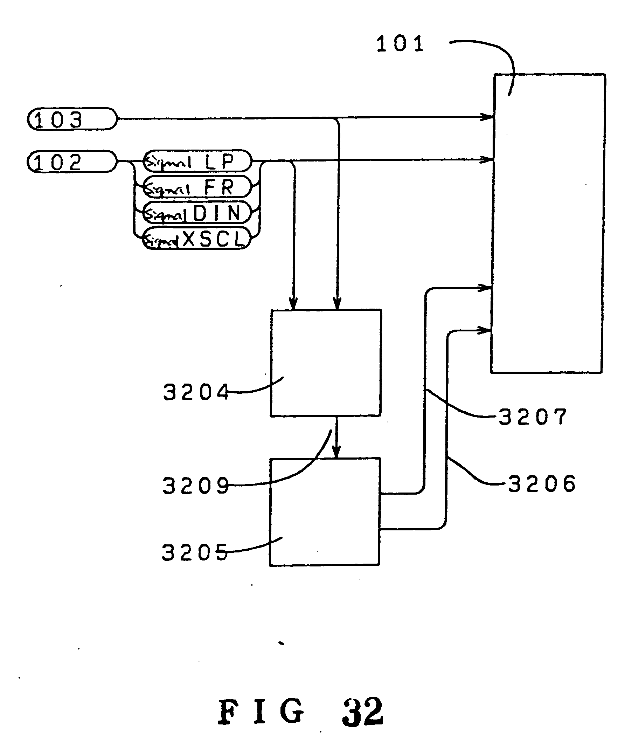

### EXAMPLE 10 (Figures 32 to 36)

This Example deals with a display which does not have vertical crosstalk. As mentioned above, the degree of vertical crosstalk is determined by the difference T′ between the number T of ON dots and the value L of OFF dots on the liquid crystal panel. Since the total of the values T and L is G which indicates the number of all the display dots on the liquid crystal panel, T′ is expressed by the following equation: 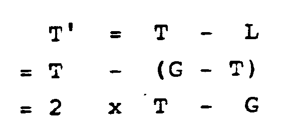
(wherein G is a constant).
Therefore, when the liquid crystal display device is operated, it is not necessary to count both the values T and L, but is necessary to count only the value T and then compensate the applied voltage in accordance with the value T.

Figure 32 shows a block diagram of Example 8. In Figure 32, the number of ON dots on the liquid crystal panel 201 is counted by a compensation circuit 3204 and is output to a power circuit 3205 as a strength signal 3209. Upon the strength signal 3209, the power circuit 3205 functions to shift the potential value of the non-selective voltage of the Y power source 3206 in accordance with the value of the strength signal. By such a construction, it is possible to prevent vertical crosstalk and provide a superior display.

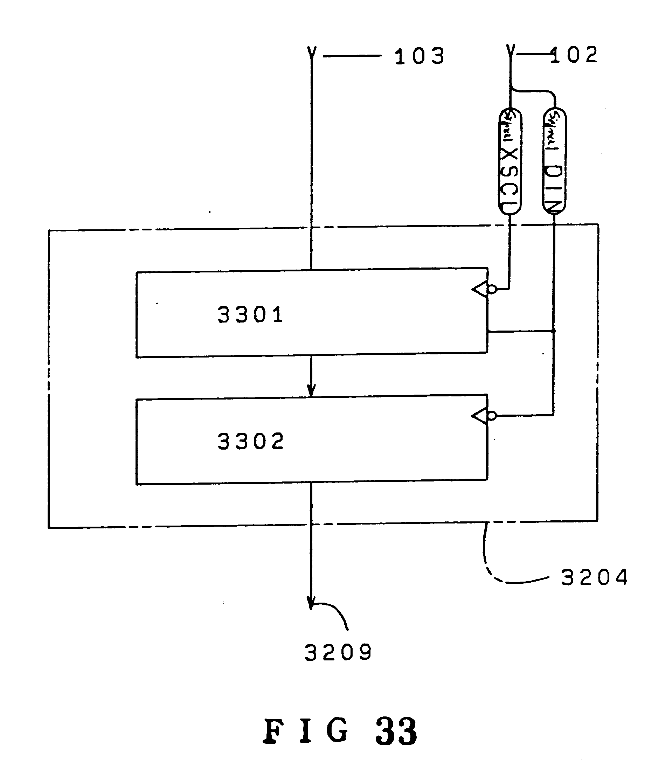

The construction of the compensation circuit 3204 will now be described in detail, with reference to Figure 33. In Figure 33 a counter circuit 3301 is provided to count the total number of ON dots on the liquid crystal panel 201, and more particularly, is provided to count the number of ON dots from a signal DIN till next signal DIN of the control signal 102 only when the data signal 103 is active at the falling edge of the signal XSCL and then, output the number counted by the next signal DIN to a counter holding circuit 3302, return the counted number to 0, and again count the number of next ON dots. By such a construction, it is possible to count the value T of the ON dots on the liquid crystal panel 201. In addition, it is not required to count the number very accurately without any error, and errors of approximately 5% of all the numbers of the display dots 204 on the liquid crystal panel 201 do not affect the quality of the display.

The counter holding circuit 3302 is provided to hold the value T generated from the counter circuit 3301, and the counted value T is output as a strength signal 3209.

The value T of ON dots on the liquid crystal panel 201 is output as the strength signal 3209.

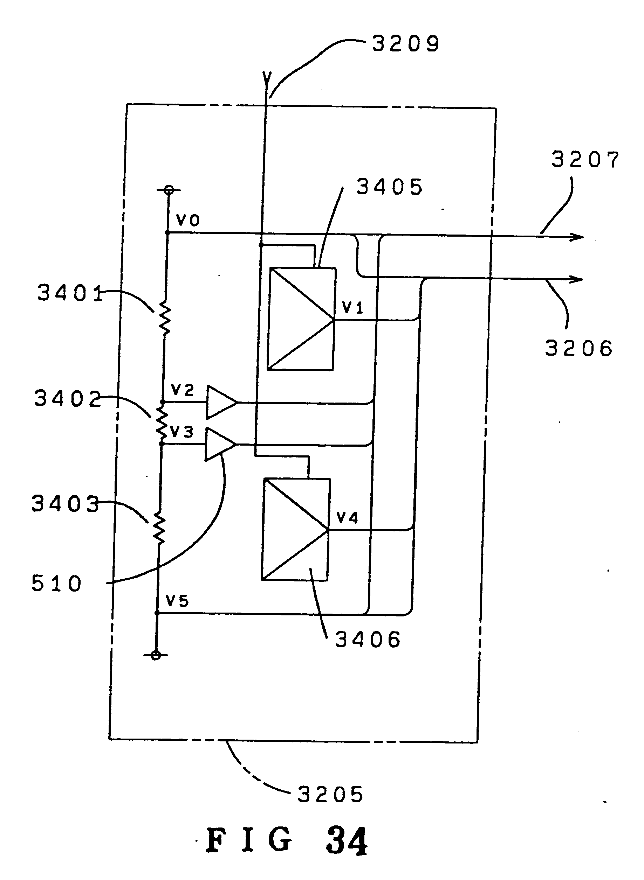

Reference will now be made to Figure 34 which shows the construction of the power circuit 3205. In Figure 34, resistors 3401 to 3403 are connected in series and voltages V0 and V5 are applied to both ends of the connected resistors 3401 to 3403. Voltages V0, V2, V3 and V5 represent the voltages generated at terminals of the respective resistors 3401 to 3403 and the respective values are predetermined so as to be formulated as follows:$\text{(VO - V2)/2 = (V3 - V5)/2.}$
In order to stabilise the voltages V2 and V3, a voltage stabilising circuit 510 is provided, in the same way as that of Figure 5.

The voltages V1N and V4N are defined as follows:$\text{V1N = (VO + V2)/2}$$\text{V4N = (V5 + V3)/2.}$
The voltages V1N and V4N are predetermined so as to be an intermediate voltage between the voltages V0 and V2, and an intermediate voltage between the voltages V3 and V5 respectively.

Voltage generating circuits 3405 and 3406 are provided to output voltages which are varied in accordance with the output of the strength signal 3209. The voltage generating circuits 3405 and 3406 each comprise a digital-to-analog converter. Herein, P is defined as follows:$\text{P = T - γ X G}$
G indicates the number of all the dots on the liquid crystal panel 201, γ is 1/2 or approximately 1/2 when T > G / 2, P > 0 and when T < G / 2, P < 0.

The voltage generating circuit 3405 is controlled to output the voltage which is shifted in accordance with the absolute value of the value P to the voltage V1N, toward the voltage V2 when the value T is larger (T > γ X G) and toward the voltage V0 when the value T is smaller (T < γ X G). Similarly, when the value T of the strength signal 3209 is large, the voltage generating circuit 3406 outputs the voltage which is shifted toward the voltage V3 to the voltage V4 according to the absolute value of the value P. When the value T of the strength signal 3209 is small, the voltage generating circuit 3406 outputs the voltage which is shifted toward the voltage V5 to the voltage V4 according to the absolute value of the value P. The voltages generated from the voltage generating circuits 3405 and 3406 serve as V1 and V4, and the voltages V1, V4 and the previous voltages V0 and V5 are generated from the power circuit 3205 as a Y power source 3206. The voltages V0, V2, V3 and V5 are generated from the power circuit 3205 as a X power source 3207. The Y power source 3206 and the X power source 3207 are applied to the liquid crystal panel 201 in either combination as mentioned above. The voltages V1 and V4 are non-selective voltages of the Y power source 3206 and their potential values are changed in accordance with the value T as mentioned above.

In the above construction, when a small number of dots on the liquid crystal panel 201 are in the ON state, the non-selective voltage of the Y power source 3206 goes to a value near the ON voltage. When a large number of dots on the liquid crystal panel 201 are in the ON state, the non-selective voltage goes to a value near the OFF voltage.

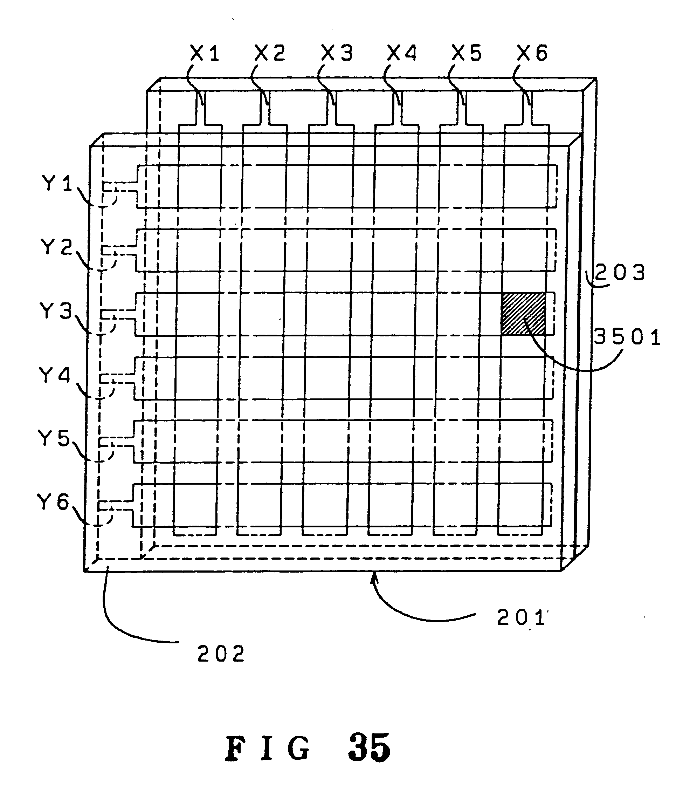

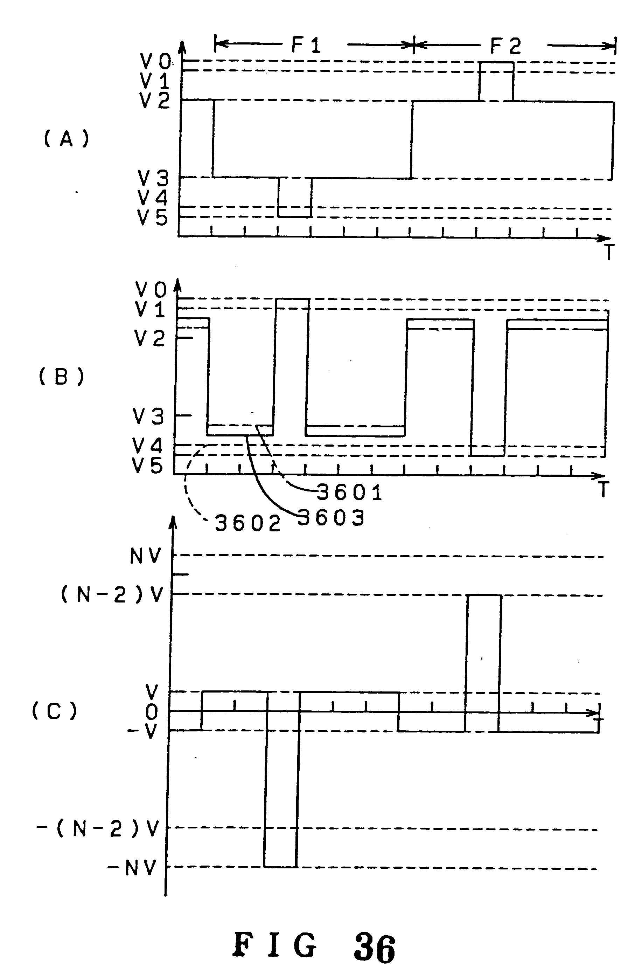

Reference will now be made to Figure 35 which shows one embodiment of the display pattern wherein the above construction is adapted to the liquid crystal panel 201. In Figure 35, the display pattern has a small number of ON dots. Figure 36 (A) shows the voltage waveform applied to the segment electrode X6 to form an ON dot 3501. Figure 36 (B) shows the voltage waveform applied to the common electrode Y3 to form the ON dot 3501. Figure 36 (C) shows the voltage waveform applied to the ON dot 2701.

In Figure 36 (B), the reference numeral 3601 is a voltage to be shifted on the common electrode, the reference numeral 3602 is a voltage of the non-selective voltage generated from the Y power source in Figure 34, and the reference numeral 3603 is a voltage on the common electrode obtained by the combination of the voltages 3601 and 3602.

Since the display pattern of Figure 35 has a small number of ON dots on the liquid crystal panel 201 (T < γ X G), the non-selective voltage on the common electrode is likely to be changed to the value near the non-selective voltage as shown in the voltage 3601 of Figure 36. However, since the display pattern has a small number of ON dots on the liquid crystal panel 201, the non-selective voltage generated from the Y power source 3206 is near the ON voltage, as shown in the voltage 3602 of Figure 36. By such a construction, the voltage 3603 is compensated to be an intermediate value between the ON/OFF voltages, resulting in no difference between the effective voltages applied to the display dots on the liquid crystal panel 201.

When the display pattern has a large number of ON dots on the liquid crystal panel 201 (T > γ X K), the non-selective voltage on the common electrode is likely to be changed to a value near the ON voltage. However, since the display pattern has a large number of ON dots on the liquid crystal panel 201, the M_{ON} selective voltage generated from the Y power source 3206 is near the OFF voltage. Therefore, the voltage is compensated in the same way.

The value of the non-selective voltage is changed in accordance with the value T of the ON dots on the liquid crystal panel 201, thereby making it possible to provide a display of good quality and without any vertical crosstalk.

### EXAMPLE 11

The value of the ON/OFF voltages are changed in accordance with the value T of the ON dots on the liquid crystal panel 201, and the same effects can be obtained. Namely, instead of compensating the value of the non-selective voltage, the ON/OFF voltages can be changed by the same value and in the same direction as the value and the direction where the non-selective voltage on the common electrode is likely to be changed. This makes it possible to provide a high quality display without any vertical crosstalk.

The means for compensating the voltage is not limited to that specifically described. It is possible to apply any means that can compensate the difference of the effective voltages generated in accordance with the value T of ON dots on the liquid crystal panel 201.

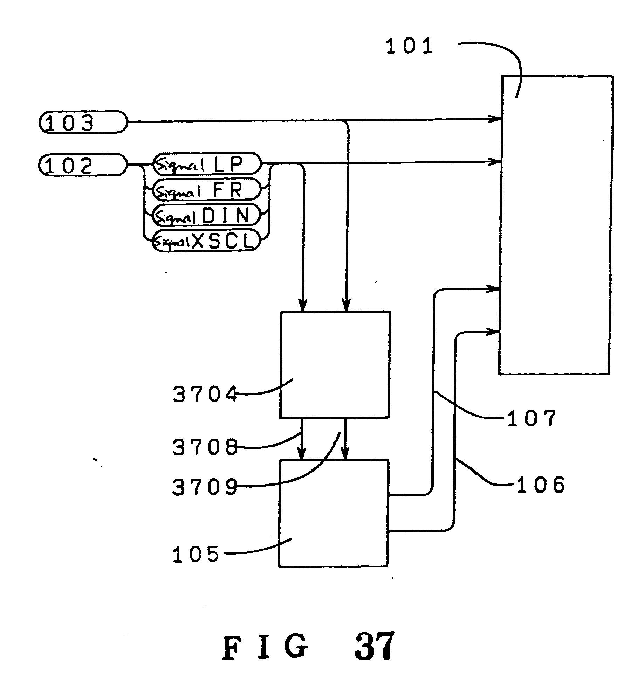

### EXAMPLE 12 (Figures 37 to 44)

This Example relates to the provision of a display without inversion crosstalk. As mentioned above, if the polarity is reversed at the time when the n-th common electrode is switched to the (n+1)-th common electrode, the degree of the inversion crosstalk is determined by the value F which is the difference between the sum of the display dots and the sum of the ON dots on both the n-th and the (n+1)-th common electrodes. Therefore, at the time of moving the liquid crystal display device, it is necessary to count the value F and compensate the voltage in accordance with the value F.

Referring now to Figure 37, there is shown a construction which is the same as that shown in Figure 1, except for a compensation circuit 3704, a sign signal 3708 and a strength signal 3709. In Figure 37, similar parts as in Figure 1 have been given the same reference numerals, and their precise construction and operation will not again be given.

Upon receipt of the control signal 102 and the data signal 103, the value F is counted by the compensation circuit 3704, and the sign of the value F is output as the sign signal 3708 from the compensation circuit 3704. Further, from the compensation circuit 3704, the strength signal 3709 which is generated for a period in accordance with the absolute value of the value F, is also output in synchronism with the signal LP at the time of the variation of the signal FR of the control signal 102. Upon receipt of the sign signal 3708 and the strength signal 3709, the non-selective voltage of Y power source 106 is changed in the power circuit 105 to compensate the applied voltage.

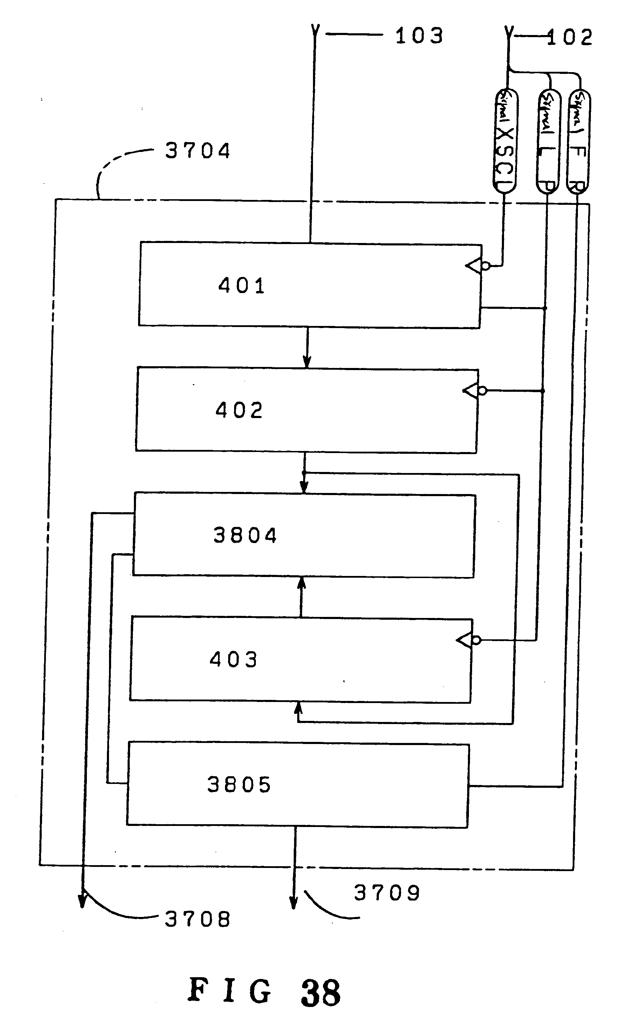

Figure 38 shows in detail the construction of the compensation circuit 3704. In Figure 38, a counter circuit 401, a first counter holding circuit 402 and a second counter holding circuit 403 are operated in the same way as those of Figure 4.

A numerically arithmetic circuit 3804 is provided to do the following calculation:${\text{F = -(N}}_{\text{ON}} {\text{+ M}}_{\text{ON}} \text{- Q)}$
wherein Q is a number near that of the segment electrodes X1 to X6. In this Example, Q is predetermined to be the number of the segment electrodes X1 to X6. The sign of the value F obtained by the numerically arithmetic circuit is output as a sign signal 3708, and the absolute value F is output to the pulse width control circuit 3805. From the pulse width control circuit 3805, the strength signal 3709, which is generated for a period according to the absolute value of the value F, is output in synchronism with the signal LP at the time of the variation of the signal FR of the control signal 102. The relation between the outputting period of the strength signal 3709 and the absolute value of the value F is the same as that of the pulse width control circuit 405 shown in Figure 4. Further, the sign signal 3708 and the strength signal 3709 generated from the compensation circuit 3704 are operated in the same way as those of the sign signal 108 and the strength signal 109 shown in Figure 1.

In the above construction, if the polarity is reversed at the time when the n-th common electrode is switched to the (n+1)-th common electrode, when the sum of the number of ON dots on the n-th and the (n+1)-th common electrodes is larger than the number of the segment electrodes X1 to X6, the non-selective voltage applied to the common electrodes Y1 to Y6 is changed for the period according to the difference between the numbers toward the direction of the OFF voltage. When the sum of the number of ON dots on the n-th and the (n+1)-th common electrodes is smaller than the number of the segment electrodes X1 to X6, the non-selective voltage is changed for the period according to the difference between the numbers toward the direction of the ON voltage.

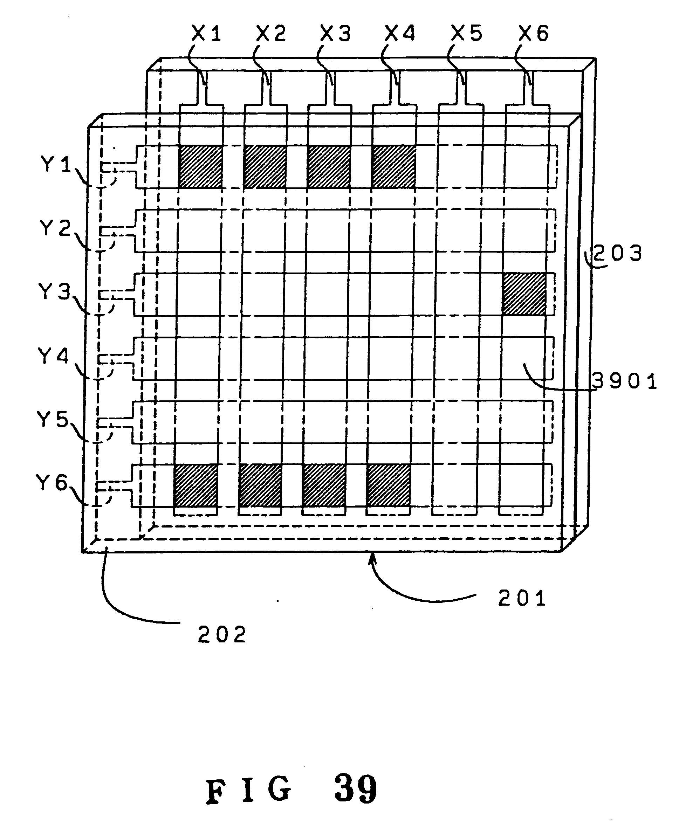

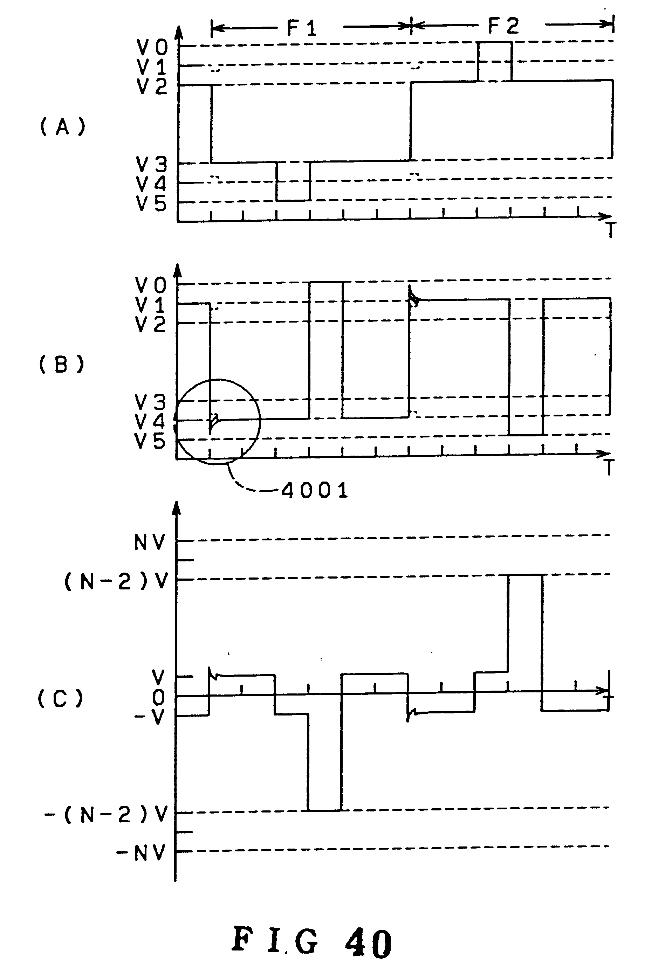

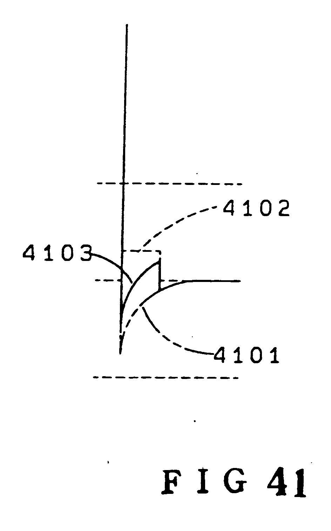

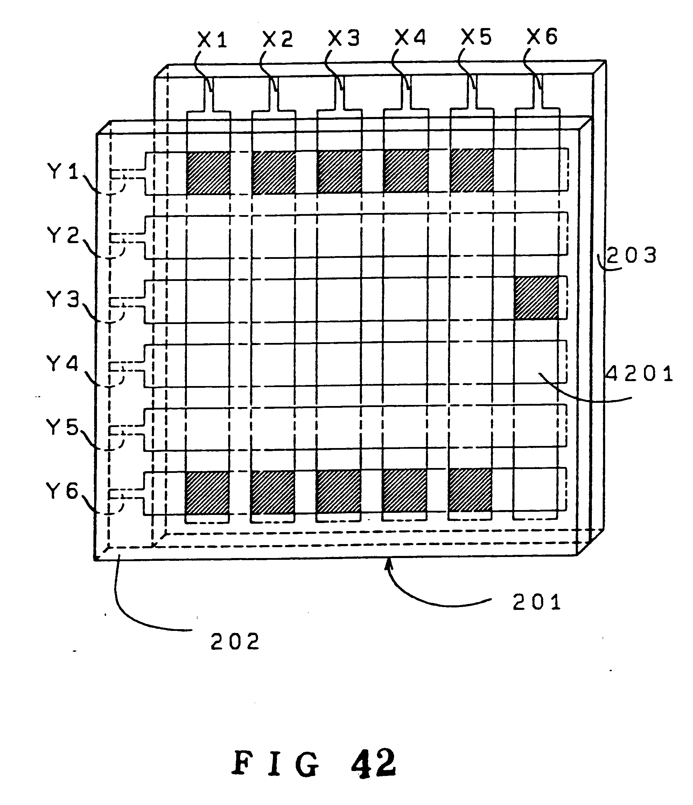

Referring now to Figures 39 and 42, there are shown other embodiments of the display pattern wherein the above construction is adapted to the liquid crystal panel 201. Figure 40 (A) shows the voltage waveform applied to the segment electrode X6 to form an ON dot 3901. Figure 40 (B) shows the voltage waveform applied to the common electrode Y4 to form the ON dot 3901. Figure 40 (C) shows the voltage waveform applied to the ON dot 3901. Figure 41 shows an enlarged view of the portion surrounded with a circle in Figure 40 (B).

In Figure 41, the reference numeral 4101 is a spike shaped noise waveform to be generated on the common electrode. The reference numeral 4102 shows the waveform of the selective voltage applied from the Y power source 107. The reference numeral 4103 is the waveform obtained by the combination of the waveforms 4101 and 4102, on the common electrode V.

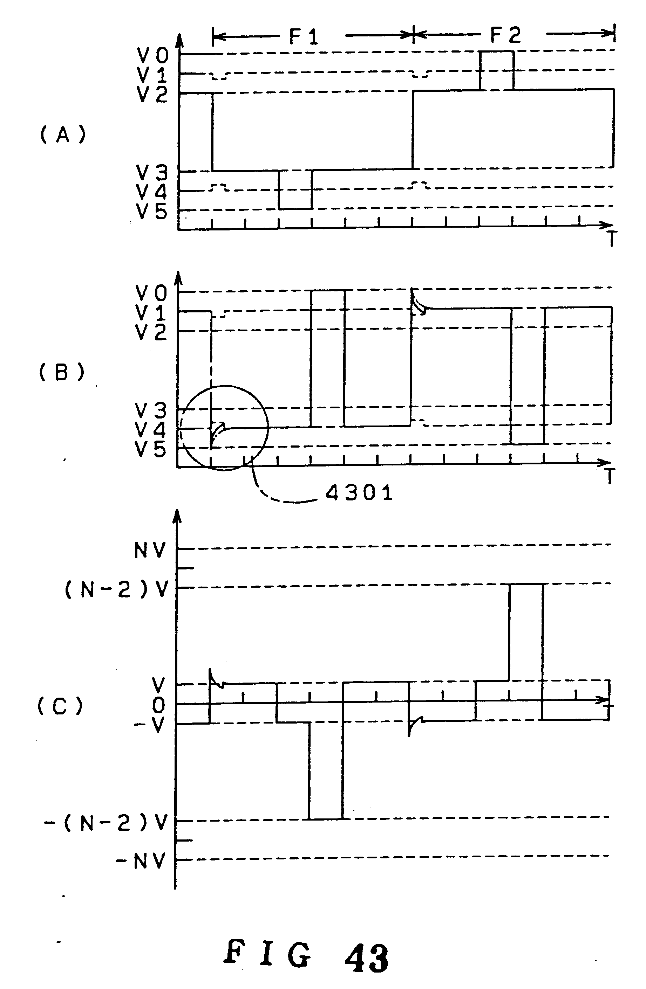

Figure 43 (A) is a voltage waveform applied to the segment electrode X6 to form the display dots 4201. Figure 43 (B) is a voltage waveform applied to the segment electrode Y4 to form the display dots 4201. Figure 43 (C) is the waveform of the voltage applied to the display dots 4201.

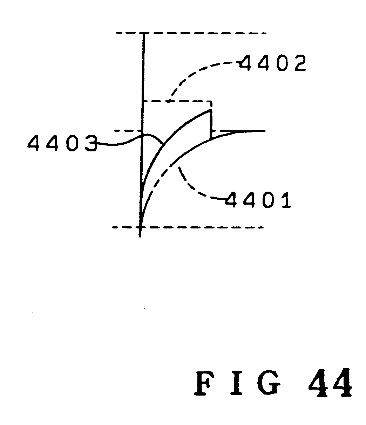

Figure 44 is an enlarged view of the portion surrounded with a circle in Figure 43 (B). In Figure 44, the reference numeral 4401 is a spike shaped noise waveform to be generated on the common electrode. The reference numeral 4402 is the waveform of the non-selective voltage of the Y power source 107 applied to the common electrode. The reference numeral 4403 is the waveform obtained by the combination of the waveform 4401 and 4402. In addition, Figures 41 and 44 are enlarged by the same amount.

In the case of Figure 39, the value F is -2. (F = -2). In the case of Figure 42, the value F is -4. (F = -4). The voltage of Figure 44 becomes a curved waveform 4401 which is larger than the waveform 4101 of the voltage of Figure 41. However, the non-selective voltage is compensatively changed and the voltage waveform 4402 is applied for a longer period than that of the voltage waveform 4102, in accordance with the value F to prevent any noise waveform. By such a construction, the non-selective voltage is compensated, and there exists no difference between the effective voltage applied to the display dots shown in Figures 40 (C) and 43 (C). As mentioned above, the period of the non-selective voltage is compensated in accordance with the value F, thereby making it possible to improve the display quality at the time of reversing the polarity.

### EXAMPLE 13

It is possible to compensate the voltage base, the time voltage base or the functional waveform of the non-selective voltage in accordance with the value F. In this case, the same effects as those of Example 12 can be obtained.

### EXAMPLE 14

It is also possible to compensate the voltage base, the time voltage base or the functional waveform of ON/OFF voltages in accordance with the value F. In this case, the same effects as those of Example 7 can be obtained.

The means for compensating the voltage is not limited to those specifically described. It is also possible to apply any means that can compensate the difference of the effective voltages on the display dots by changing the voltage and/or ON/OFF voltage according to the value F.

To provide an improved and excellent display quality without respective modes of crosstalk, various examples have been illustrated and described above. The values according to the kinds and degree of the crosstalk are not limited to the values I, Z, T and F mentioned above. For example, it has been explained that the horizontal crosstalk is determined by the number M_{ON} of ON dots on the selected common electrode, that is, the value Z. In particular, as a result of the analysis of the charge/discharge between the common and segment electrodes at the time of selecting the common electrodes, the value Z′ is expressed by the following equation:${\text{Z′ = M}}_{\text{ON}} {\text{+ δ X (M}}_{\text{ON}} {\text{- N}}_{\text{ON}} \text{),}$
( δ is a constant).
Z′ is defined by the relation between the display pattern and the crosstalk and in accordance with the value Z′ the voltage is compensated, thereby making it possible to provide an excellent display quality without horizontal crosstalk. In addition, the above equation, Z′ = M_{ON} + δ X (M_{ON} - N_{ON}) is calculated from the following equation:${\text{Z′ = M}}_{\text{ON}} \text{+ δ X (d - c).}$
Herein, c is the number of the segment electrodes which are switched from ON voltage to OFF voltage when the selection is moved to the next common electrode; and d is the number of the segment electrodes which are switched from OFF voltage to ON voltage.

When the voltage on the common electrode is changed from the non-selective voltage to the selective voltage, it is possible to prevent the voltage on the common electrode from being changed to the selective voltage by the value M according to the horizontal crosstalk, that is to increase the size of a curved waveform. The direction where the voltage is changed on the segment electrodes which are switched from ON voltage to OFF voltage is the reverse to the direction where the voltage is changed on the common electrodes. Therefore, it is possible to prevent the voltage on the common electrode from being changed to the selective voltage. Since the direction where the voltage is changed on the segment electrodes which are switched from OFF voltage to ON voltage is the same voltage and the direction where the voltage is changed on the common electrodes, the segment electrode serves to change the voltage on the common electrode to the selective voltage to some degree. Therefore, the degree of a round waveform is determined by the difference (d - c) between the number c of the segment electrodes which are switched from ON voltage to OFF voltage and the number d of the segment electrodes which are switched from OFF voltage to ON voltage, when the voltage on the common electrodes is changed to the selective voltage.

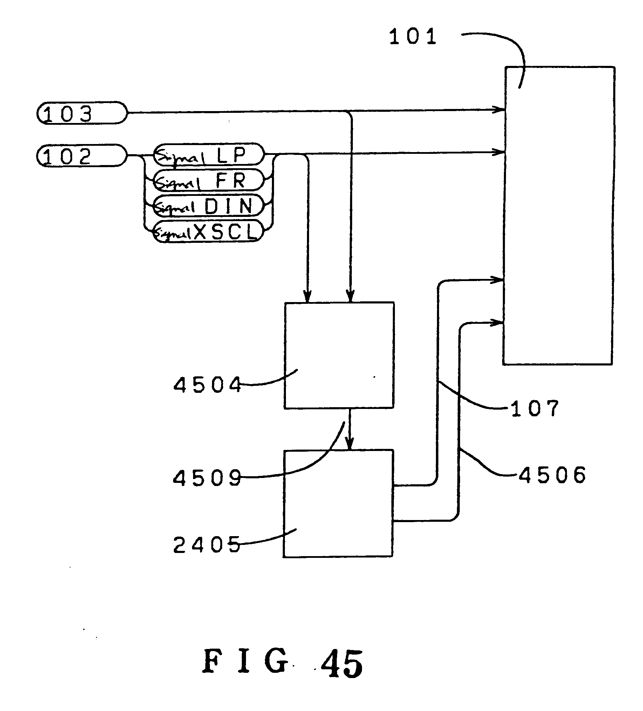

### EXAMPLE 15 (Figure 45 to 50)

Reference is made to Figure 45 in order to illustrate the compensation of crosstalk according to the value Z′. In Figure 45, the various parts are operated in the same way as those shown in Figure 24, except for a compensation circuit 4504, a strength signal 4509 generated from the compensation circuit 4504, and a Y power source 4506 generated from the power circuit 2405.

Upon receipt of the control signal 102 and the data signal 103, the compensation circuit 4504 counts the value Z′. From the compensation circuit 4504, the strength signal 4509 which is active for a period according to the absolute value Z′ is output in synchronism with the signal LP of the control signal 102. Upon receipt of the strength signal 4509, the selective voltage of a Y power source generated from the power circuit 2405 is changed to compensate the applied voltage.

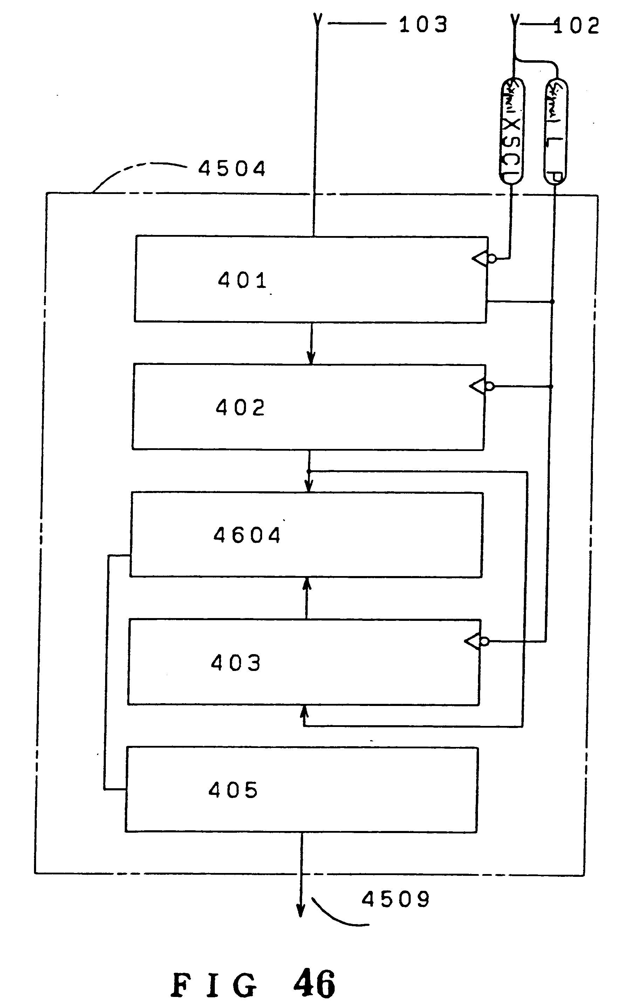

Figure 46 shows in detail the construction of the compensation circuit 4504. In Figure 46, a counter circuit 401, a first counter holding circuit 402 and a second counter holding circuit 403 are operated in the same way as those of Figure 4. An operative circuit 4604 is provided to do the following calculation:${\text{Z′ = M}}_{\text{ON}} {\text{+ δ X (M}}_{\text{ON}} {\text{- N}}_{\text{ON}} \text{).}$
The value Z′ obtained by the above equation is output to the pulse width control circuit 405. Upon the input of the value Z′ from the numerically arithmetic circuit 4604, the strength signal 4509 which is active for the period according to both the value Z′ and the constant s is output from the pulse width control circuit 405. In addition, the constant s is defined as the number which is obtained by multiplying the number of the segment electrodes X1 to X6 on the liquid crystal panel 201 by δ, within the range that the value Z′ is not minus.

Since the circuit according to the embodiment has the above construction, the selective voltage is changed for the period according to the value Z′ at the time of selecting the n-th common electrode.

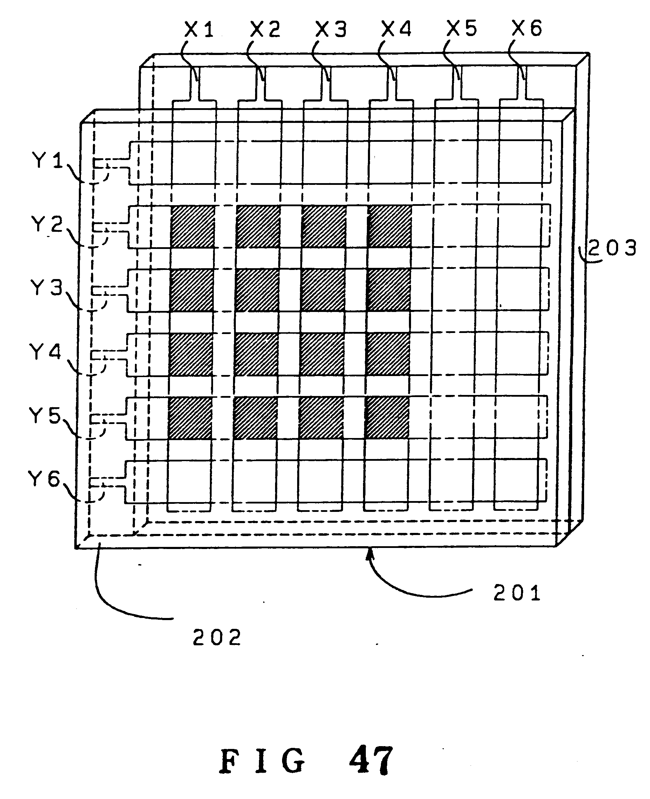

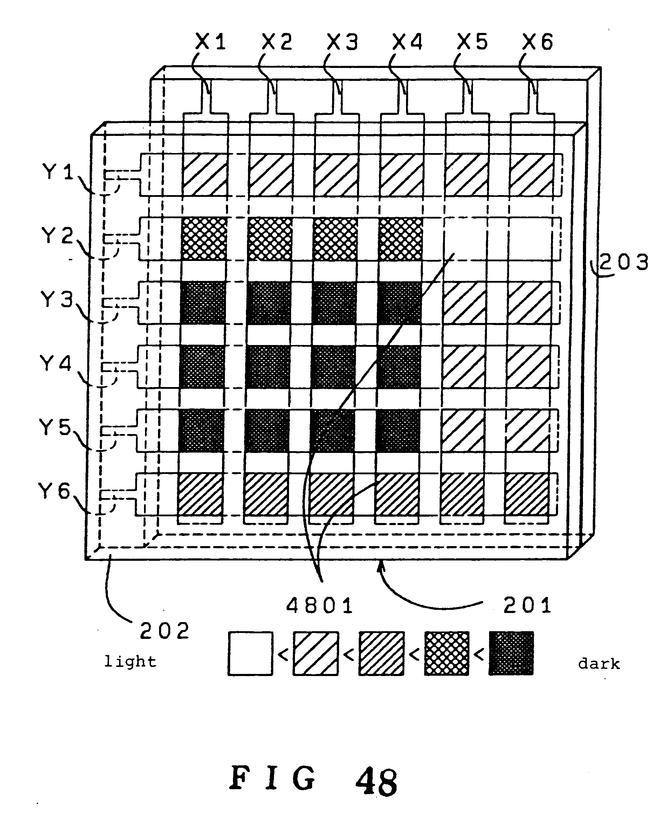

Referring now to Figure 47, there is shown an embodiment of a display pattern wherein the above construction is adapted to the liquid crystal panel 201. Further, Figure 48 shows the display condition after compensating the applied voltage according to the above construction to prevent the horizontal crosstalk. In Figure 48, the reference numeral 4801 indicates a remaining crosstalk (hereinafter referred to as a fine horizontal crosstalk) on the liquid crystal panel after compensating the applied voltage according to the above construction. The fine horizontal crosstalk occurs on the common electrodes disposed at the boundary of ON/OFF dots, as shown in Figure 48.

When the display pattern shown in Figure 47 is formed, the respective values Z′ are as follows:

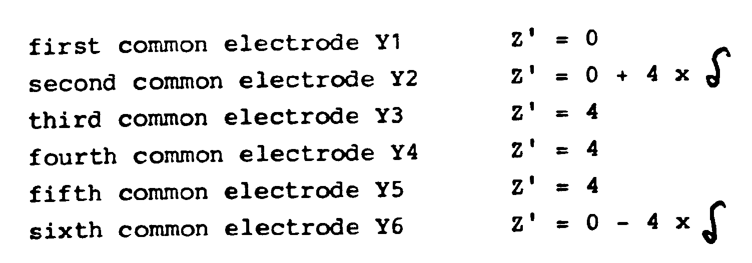

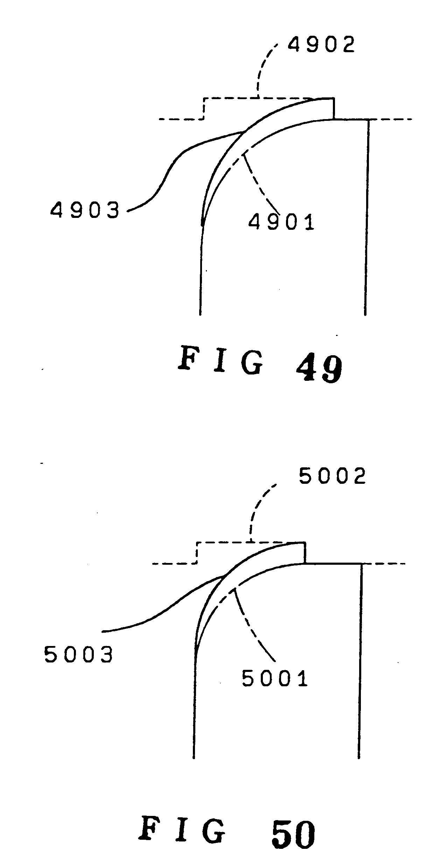

Figures 49 and 50 are enlarged views of the waveforms of the second common electrode Y2 and the fourth common electrode Y4 at the time when they are changed from the non-selective voltage to the selective voltage respectively.

In Figure 49, the reference numeral 4901 shows a curved waveform to be generated in the second common electrode Y2. The reference numeral 4902 shows a changed waveform of the applied selective voltage. The reference numeral 4903 shows the waveform obtained by the combination of the waveforms 4901 and 4902, and is the waveform of the voltage applied to the second common electrode Y2.

Similarly, in Figure 50 the reference numeral 5001 shows a curved waveform to be generated in the fourth common electrode Y4. The reference numeral 5002 shows a changed waveform of the applied selective voltage. The reference numeral 5003 shows the waveform obtained by the combination of the waveforms 5001 and 5002, and is the waveform of the voltage applied to the fourth common electrode Y4.

In Figure 47, when the selection is moved from the first common electrode Y1 to the third common electrode Y3, a curved waveform 4901 may be generated in accordance with the number Z (= 4) of ON dots on the second common electrode Y2 and the difference (= 4) between the numbers of ON dots on the first common electrode Y1 and the second common electrode Y2, as shown in Figure 49. Similarly, in Figure 47 when the selection is moved from the third common electrode Y3 to the fourth common electrode Y4, a curved waveform 5001 may be generated in accordance with the number Z (= 4) of ON dots on the third common electrode Y3 and the difference (= 0) between the number of ON dots on the second common electrode Y2 and the third common electrode Y3, as shown in Figure 50. As will be apparent from a comparison between the waveform 4901 of Figure 49 and the waveform 5001 of Figure 50, the waveform 4901 may be curved and larger than that of the waveform 5001 by the difference of the number of ON dots. However, the waveform 4902 of the selective voltage of Figure 49 is changed for a longer time than those of the waveform 5002 of Figure 50. By such a construction, the waveform 4903 of Figure 49 and the waveform 5003 of Figure 50 are compensated, resulting in the provision of an improved display without any fine horizontal crosstalk.

As mentioned above, there is a charge/discharge analysis between the common and segment electrodes which are generated according to the display pattern on the liquid crystal panel 201. Based on the analysis, the differences of the effective voltages applied to the display dots are compensated according to changing the voltages applied to the common electrodes Y1 to Y6 and the segment electrodes X1 to X6, resulting in providing an improved display.

There is also a charge/discharge analysis between the adjacent segment electrodes X1 to X6 through the common electrodes Y1 to Y6 and charge/discharge between the adjacent segment electrodes Y1 to Y6 through the common electrodes X1 to X6. Based on the analysis, the difference of the effective voltages applied to the display dots are compensated by changing the voltages applied to the common electrodes Y1 to Y6 and the segment electrodes X1 to X6, resulting in the provision of an improved display.

Instead of ON dots, when OFF dots are counted, the same effects can be obtained. Furthermore, it is also possible to eliminate any crosstalk by weighting respective positions of ON dots at the time of counting the number of ON dots. It is also possible to combine several of the above mentioned embodiments to prevent any several kind of crosstalks.

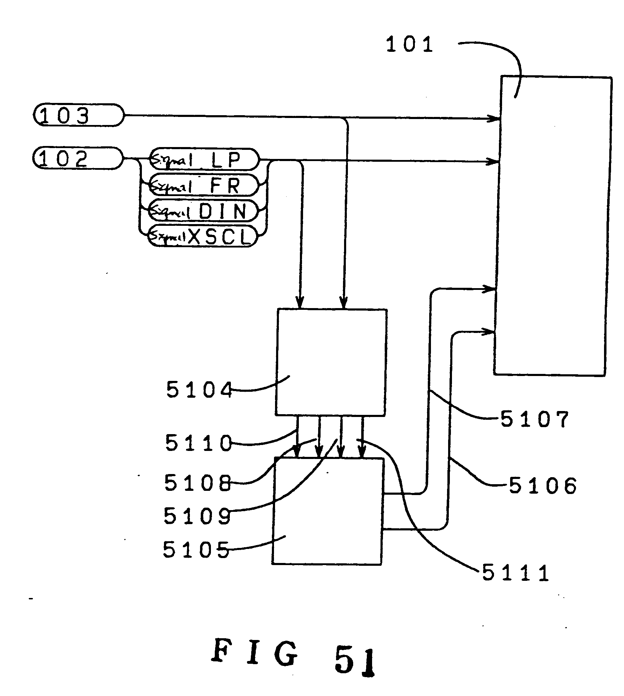

### EXAMPLE 16 (Figures 51 to 53)

Reference is made in this Example to the construction of preferred embodiments according to the present invention wherein the several kinds of the above mentioned embodiments are combined to eliminate zebra crosstalk, horizontal crosstalk, vertical crosstalk and inversion crosstalk.

Figure 51 shows the construction of one such embodiment. In this embodiment, to prevent zebra crosstalk, the time base compensation of non-selective voltage is carried out according to the value I. To prevent horizontal crosstalk, the time base compensation of the selective voltage is carried out by the value Z. To prevent vertical crosstalk, the voltage base compensation of the non-selective voltage is carried out according to the value T. To prevent inversion crosstalk, the time base compensation is carried out according to value F. In Figure 51, there is shown a compensation circuit 5104, a power circuit 5105, and reference numerals 5106 and 5107 which are Y and X power sources of the power circuit 5105. There are also shown a sign signal 5108, a first strength signal 5109, a second strength signal 5110 and a third strength signal 5111.

The compensation circuit 5104 functions to count the value I, output the sign (plus or minus) of the value I, and output the signal which is active for the period according to the absolute value of the value I as the first strength signal 5109, in synchronism with the signal LP of the control signal 102. When the signal FR is changed, the strength signal 5109 is not output. When the FR signal is changed, the compensation circuit 5104 functions to count the value F, output the sign (plus or minus) of the value F as a sign signal 5108 and output the signal which is active for the period predetermined by the absolute value of the value F as the first strength signal 5109, in synchronism with the signal LP of the control signal 102. The compensation circuit 5104 simultaneously functions to count the value T, and output the counted value as a second strength signal 5110. The compensation circuit 5104 functions to count the value Z, and output the signal which is active for the period according to the value Z as a third strength signal 5111, in synchronism with the signal LP of the control signal 102.

The power circuit 5105 functions to change at least one of the Y power source 5106 and the X power source 5107 by the first, the second and the third strength signals 5109 to 5111, and the sign signal 5108 thereby making it possible to eliminate any crosstalk.

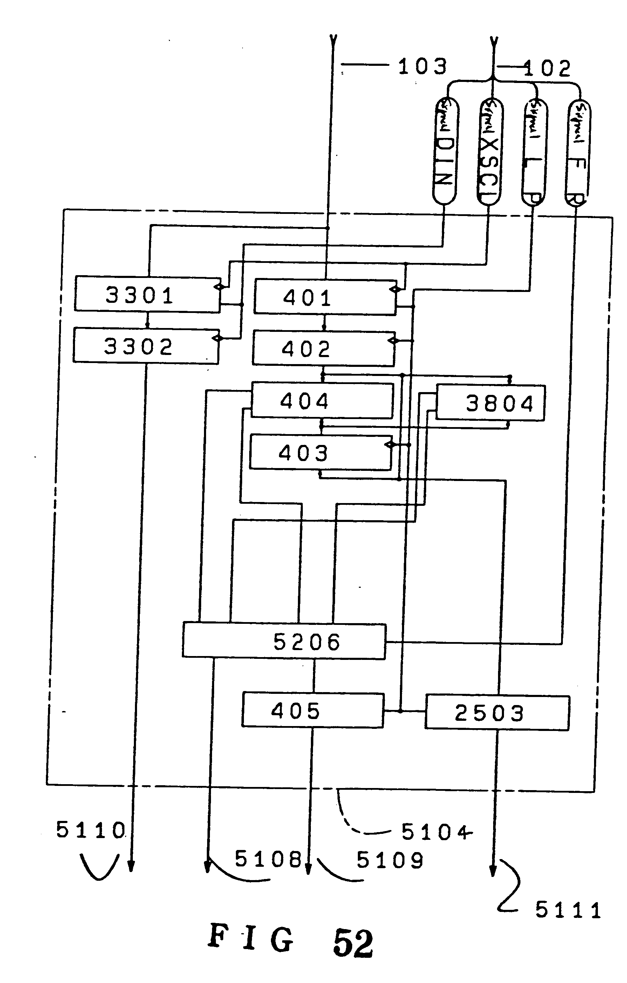

Figure 52 shows in detail a compensation circuit according to one embodiment of the present invention. In Figure 52, the counter circuit 401, the first counter holding circuit 402, a second counter holding circuit 403 and an operative circuit 404 are operated in the same way as those of Figure 4. The counter circuit 401 is provided to count the number of ON dots, the first counter holding circuit 402 is provided to hold the value M_{ON}, and the second counter holding circuit 403 is provided to hold the value N_{ON}. The value I is calculated by the operative circuit 404.

A numerically arithmetic circuit 3804 is provided to count the value F from the value M stored in the first counter holding circuit 402, and the value N stored in the second counter holding circuit 403. A switching circuit 5206 functions to pick up the sign of the value and the absolute value of the value which is generated from either the numerically arithmetic circuit 404 or the numerically arithmetic circuit 3804. When the signal FR of the control signal 102 is not changed, the switching circuit 5206 functions to pick up the value I of the numerically arithmetic circuit 404. When the signal FR is changed, the switching circuit 5206 functions to pick up the value F of the numerically arithmetic circuit 3804.

The switching circuit 5206 functions to output the sign of the value I or F as a sign signal 5108, and to output the value I or F to a pulse width control circuit 405. The pulse width control circuit 405 is operated in the same way as that of Figure 4, that is it functions to output the signal which is active for the period according to the absolute value of the value I or F as the first strength signal 5109. Therefore, the sign signal 5108 and the first strength signal 5109 indicate the amount of the compensated voltage to prevent zebra and inversion crosstalk.

In Figure 52, the counter circuit 3301 and the counter holding circuit 3302 are operated in the same way as those of Figure 33. The counter circuit 3301 functions to count the value T and to output the counted value as a second strength signal 5110 from the counter holding circuit 3302. Therefore, the second strength signal 5110 indicates the amount of the compensated voltage to prevent vertical crosstalk.

The pulse width control circuit 2503 is operated in the same way as that of Figure 25, and outputs the signal which is active for the period according to the value M_{ON} of the first counter holding circuit 402, that is the value Z as a third strength signal 5111. Therefore, the third strength signal 5111 indicates the amount of the compensated voltage to prevent horizontal crosstalk.

Since the compensation circuit 5109 has the above mentioned construction, the respective amount of the compensated voltage for preventing the respective crosstalks are output as respective compensated signals.

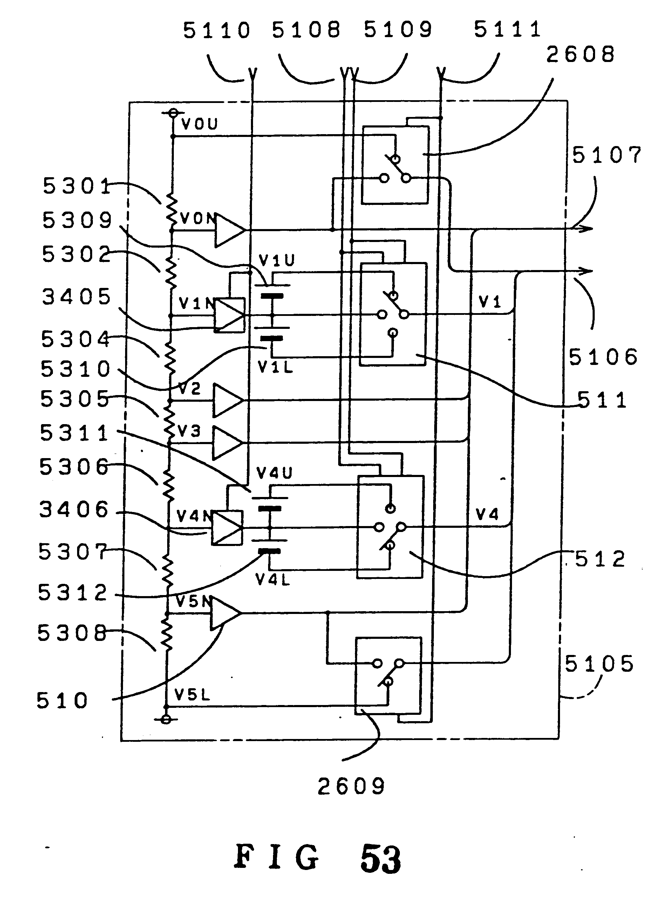

Reference will now be made to Figure 53 which shows the power circuit 5105 of one embodiment according to the present invention. In Figure 53, resistors 5301 to 5308 are connected in series and are connected to voltages V0U and V5L at both ends thereof.

The voltages VOU, VON, V1, V2, V3, V4N, V5N, V5L represent the voltages generated at terminals of the respective resistors 5301 to 5308, and the respective values are predetermined so as to be formulated as follows: 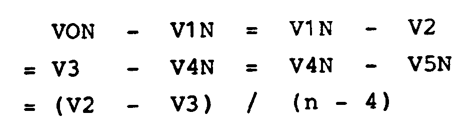
(wherein n is a constant).
Further, 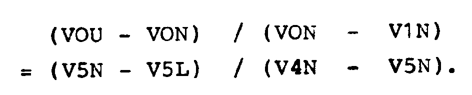
Further, the voltages V0N - V5N are stabilised by a voltage stabilising circuit 510. Voltage generating circuits 3405 and 3406 are operated in the same way as those of Figure 34 and the voltage generated from the voltage generating circuits 3405 and 3406 are changed by the second strength signal 5110.

The reference numerals 5309 to 5312 are reference voltages. The absolute value of the reference voltage 5309 is the same as that of the reference voltage 5312. These reference voltages have the opposite signs on the basis of the voltages V1N and V5N respectively.

Similarly, the reference voltages 5310 and 5311 have the same absolute values, and have the opposing signs (plus or minus) on the basis of the voltages V1N and V4N. At this time, the voltages 5310 and 5311 are defined as V1L and V4L. The switches 511 and 512 are operated in the same way as those of Figure 5 and are switched by the sign signal 5108 and the first strength signal 5109. More specifically, one of the voltages V1U, V1N and V1L is selected by the switch 511, and one of the voltages V4U, V4N and V4L is selected by the switch 512. The voltages generated from the switches 511 and 512 are defined as the voltages V1 and V4 respectively.

The switches 2608 and 2609 are operated in the same way as those of Figure 26, and are switched by the third strength signal 5111. More specifically, one of the voltages V0U and V0N is selected by the switch 2608 and one of the voltages V5U and V5N is selected by the switch 2609. The voltages generated from the switches 2608 and 2609 are defined as the voltages V0, V5 respectively. The reference numeral 5106 is a Y power source, the selective voltage of the Y power source 5106 is changed by the third strength signal 5111, and the non-selective voltage is changed by the sign signal 5108, the first strength signal 5109 and the second strength signal 5110. The reference numeral 5107 is a X power source. The selective/non-selective voltages of the Y power source are changed by the compensating signals comprising the sign signal, and the first, second and third strength signals for the above mentioned respective compensations. Any zebra crosstalk is compensated for by the non-selective voltage at the time when the signal FR of the control signal 102 is not changed. Any inversion crosstalk is compensated for by the non-selective voltage at the time when the signal FR is changed. Any horizontal crosstalk is compensated for by the selective voltages. Any vertical crosstalk is compensated for by changing the voltages V1N and V4N of the non-selective voltage. Therefore, the means of compensating the various modes of crosstalk are substantially independent and can easily be combined.

### EXAMPLE 17

In Example 16, the period of the applied voltages are compensated according to the values I, Z and F. However, in addition to the means of compensating the voltage waveforms which is described in Example 16, when the other compensating means are combined, the same effects can be obtained.

### EXAMPLE 18

When the degree of crosstalk is small in Example 16, it is possible to omit the means for compensating the voltage waveforms and to simplify the construction of the circuits. For example, when the degree of a vertical crosstalk is so little as not to affect the display quality, in order to simplify the construction of the circuits it is possible to omit the counter circuit 3301 and the counter holding circuit 3302 so as not to generate the second strength signal 5110 shown in Figure 52. It is also possible to substitute the voltage generating circuits 3405 and 3406 for the stabilising circuit 510.

It is to be appreciated that the embodiments of the invention described above with reference to the Examples and the drawings have been given by way of example only, and that modifications may be effected. Thus, the present invention is also applicable to a liquid crystal display device performing any other display such as grey scale display wherein the voltage applied to the segment electrodes is switched to ON/OFF voltages for the period when the segment electrodes are selected. In this case, the same effects can be obtained. Generally, the present invention extends to any liquid crystal display device in which at least one of the voltage waveforms of the common electrodes and the voltage waveforms of the segment electrodes is compensated, based on the conversion of the display patterns of drawings or characters, thereby making it possible to provide a remarkably improved display quality without any crosstalks. It is further to be understood that the present invention includes any novel integer or step, or combination of integers or steps herein disclosed and/or shown in the accompanying drawings.

## Claims

1. A matrix liquid crystal display device for displaying characters or a pattern, comprising a plurality of common electrodes (Y) formed on a first substrate (202), a plurality of segment electrodes (X) formed on a second substrate (203), a liquid crystal layer sandwiched between the first and second substrate (202, 203), the common and segment electrodes (Y, X) intersecting to form a matrix having a dot (204; 601) at each intersection, multiplex driving means for providing common voltage waveforms including a selective voltage and a non-selective voltage to the common electrodes (Y), for sequentially switching the selective voltage among the common electrodes (Y), and for providing segment voltage waveforms including an ON voltage and an OFF voltage to the segment electrodes (X), the dots (204, 601) being in an ON state or an OFF state depending upon the voltage applied to intersecting common and segment electrodes, characterised by compensation means to reduce crosstalk by variation of at least a common voltage waveform or a segment voltage waveform, responsive to data signals (103) representative of the character or pattern to be displayed, the compensation means (104; 904) including count means (401, 402, 403) receiving data signal (103) to count the number of dots in the ON state on successive common electrodes (Y), arithmetic means (404) to receive counts and to produce a value I substantially equal to the difference between the successive counts, a sign signal (108) indicative of an increase or decrease in count, and a strength signal (109; 909) based at least in part on the absolute value of I, and the multiplex driving means (105; 905; 1405; 1605; 2105) providing common voltage waveforms (106; 906; 1406; 1606; 2106) or segment voltage waveforms (107; 2107) having size and direction based at least in part upon the strength and sign signals (108, 109; 909).

2. A device as claimed in claim 1, modified in that the compensation means (3704) includes count means (401, 402, 403) receiving the data signals (103) to count the number of dots in the ON state on successive common electrodes (Y), arithmetic means (3804) to receive counts and to produce a value F therefrom substantially equal to the difference between the sum of the two counts and the number of dots on a common electrode, a sign signal (3708) indicative of that difference being negative or positive and a strength signal based at least in part of the absolute value of F, and the multiplex driving means (105) providing common voltage waveforms (106) or segment voltage waveforms (107) having direction and size based at least in part upon the sign and strength signals (3708, 3709).

3. A device as claimed in claim 1, modified in that the compensation means (4504) includes count means (401, 402, 403) receiving data signals (103) to count the number of dots in the ON state on successive common electrodes (Y), arithmetic means (4604) to receive counts and to produce a value Z' therefrom substantially equal to the sum of the number of dots in the ON state on the next selected common electrode and the product of a constant and the difference between the successive counts, a strength signal (109) based at least in part on the value of Z', and the multiplex driving means (2405) providing common voltage waveforms (4506) or segment voltage waveforms (107) having size based at least in part upon the strength signals.

4. A device as claimed in claim 1, modified in that the compensation means (5104) includes count means (401, 402, 403, 3301, 3302) to count the dots in the ON state on successive common electrodes (Y), arithmetic means (404) to receive counts and to produce therefrom a value I substantially equal to the difference between successive counts, a first sign signal indicative of an increase or decrease in count and first strength signal (5109) based at least in part on the absolute value of I, arithmetic means (3804) to receive counts and to produce a second sign signal and a second strength signal (5110) representative of a value F substantially equal to the difference between the sum of the counts on successive common electrodes and the number of dots on a common electrode, a third strength signal (5111) representative of a value T equal to the number of dots in the ON state on all common electrodes, and a fourth strength signal representative of a value Z substantially equal to the number of dots in the ON state on the next selected common electrode, and the multiplex driving means (5105) providing a voltage output for compensating the non-selective voltage during alternate periods in response to the first strength and first sign signals and the second strength and second sign signals and further in response to the third strength signal, and for compensating the selective voltage in response to the fourth strength signal.

5. A device as claimed in any one of claims 1, 2, 3 or 4, characterised in that the compensation means (104; 2404; 3704; 4504; 5104) includes a pulse width control circuit (405; 2503; 3805) for receiving the value I, Z, F or Z' and producing the strength signal (1091; 2409; 3709; 4509; 5109).

6. A device as claimed in any one of claims 1, 2, 3, 4 or 5, characterised in that the compensation means (104; 904; 3704; 4504; 5104) includes first counter means (402) for storing and, when a next count is received from count means (401), outputting the first stored count to the arithmetic means (3804) and to a second counter means (403) for storing and, when a next count is received from the first counter means (402), outputting the second stored count to the arithmetic means (404; 3804; 4604) receiving the first and second stored counts.

## Patentansprüche

1. Matrix-Flüssigkristallanzeigevorrichtung zum Anzeigen von Zeichen oder eines Musters, umfassend eine Mehrzahl auf einem ersten Substrat (202) ausgebildeter gemeinsamer Elektroden (Y), eine Mehrzahl auf einem zweiten Substrat (203) ausgebildeter Segmentelektroden (X), eine zwischen dem ersten und zweiten Substrat (202, 203) sandwichartig angeordnete Flüssigkristallschicht, wobei sich die gemeinsamen Elektroden und die Segmentelektroden (Y, X) unter Bildung einer Matrix schneiden, welche einen Punkt (204; 601) an jeder Schnittstelle aufweist, Multiplextreibermittel zum Liefern von eine Auswahlspannung und eine Nichtauswahlspannung umfassenden gemeinsamen Spannungswellenformen an die gemeinsamen Elektroden (Y), zum sequentiellen Umschalten der Auswahlspannungunter den gemeinsamen Elektroden (Y) und zum Liefern von eine EIN-Spannung und eine AUS-Spannung umfassenden Segmentspannungswellenformen an die Segmentelektroden (X), wobei sich die Punkte (204, 601) abhängig von der an sich schneidende gemeinsame Elektroden und Segmentelektroden angelegten Spannung in einem EiN-Zustand oder einem AUS-Zustand befinden,
**gekennzeichnet** **durch**
ein auf Datensignale (103), welche für das anzuzeigende Zeichen oder Muster repräsentativ sind, ansprechendes Kompensationsmittel zur Verminderung des Nebensprechens durch Veränderung zumindest einer gemeinsamen Spannungswellenform oder einer Segmentspannungswellenform, wobei das Kompensationsmittel (104; 904) umfaßt: Datensignal (103) empfangende Zählmittel (401, 402, 403) zum Zählen der Anzahl im EIN-Zustand befindlicher Punkte auf aufeinanderfolgenden gemeinsamen Elektroden (Y), Arithmetikmittel (404) zum Empfang von Zählungen und zur Erzeugung eines der Differenz zwischen den aufeinanderfolgenden Zählungen im wesentlichen gleichen Werts I, ein einen Anstieg oder eine Abnahme in der Zählung anzeigendes Vorzeichensignal (108) sowie ein zumindest zum Teil auf dem Absolutwert von I basierendes Stärkesignal (109; 909), und wobei die Multiplextreibermittel (105; 905; 1405; 1605; 2105) gemeinsame Spannungswellenformen (106; 906; 1406; 1606: 2106) oder Segmentspannungswellenformen (107; 2107) liefern, welche eine zumindest zum Teil auf den Stärke- und Vorzeichensignalen (108, 109; 909) basierende Größe und Richtung haben.

2. Vorrichtung nach Anspruch 1, dadurch modifiziert, daß das Kompensationsmittel (3704) umfaßt: die Datensignale (103) empfangende Zählmittel (401, 402, 403) zum Zählen der Anzahl im EIN-Zustand befindlicher Punkte auf aufeinanderfolgenden gemeinsamen Elektroden (Y), Arithmetikmittel (3804) zum Empfang von Zählungen und zur Erzeugung eines der Differenz zwischen der Summe der zwei Zählungen und der Anzahl von Punkten auf einer gemeinsamen Elektrode im wesentlichen gleichen Werts F daraus, ein Vorzeichensignal (3708), das anzeigt, ob diese Differenz negativ oder positiv ist, sowie ein zumindest zum Teil auf dem Absolutwert von F basierendes Stärkesignal, und wobei die Multiplextreibermittel (105) gemeinsame Spannungswellenformen (106) oder Segmentspannungswellenformen (107) liefern, welche zumindest zum Teil auf den Vorzeichen- und Stärkesignalen (3708, 3709) basierende Richtung und Größe haben.

3. Vorrichtung nach Anspruch 1, dadurch modifiziert, daß das Kompensationsmittel (4504) umfaßt: Datensignale (103) empfangende Zählmittel (401, 402, 403) zum Zählen der Anzahl im EIN-Zustand befindlicher Punkte auf aufeinanderfolgenden gemeinsamen Elektroden (Y), Arithmetikmittel (4604) zum Empfang von Zählungen und zur Erzeugung eines der Summe der Anzahl im EIN-Zustand befindlicher Punkte auf der nächsten ausgewählten gemeinsamen Elektrode und des Produkts einer Konstanten und der Differenz zwischen den aufeinanderfolgenden Zählungen im wesentlichen gleichen Werts Z′ daraus, ein zumindest zum Teil auf dem Wert von Z′ basierendes Stärkesignal (109), und wobei die Multiplextreibermittel (2405) gemeinsame Spannungswellenformen (4506) oder Segmentspannungswellenformen (107) liefern, welche zumindest zum Teil auf den Stärkesignalen basierende Größe haben.

4. Vorrichtung nach Anspruch 1, dadurch modifiziert, daß das Kompensationsmittel (5104) umfaßt: Zählmittel (401, 402, 403, 3301, 3302) zum Zählen der im EIN-Zustand befindlichen Punkte auf aufeinanderfolgenden gemeinsamen Elektroden (Y), Arithmetikmittel (404) zum Empfang von Zählungen und zur Erzeugung eines der Differenz zwischen aufeinanderfolgenden Zählungen im wesentlichen gleichen Werts I daraus, ein einen Anstieg oder eine Abnahme in der Zählung anzeigendes erstes Vorzeichensignal und ein zumindest zum Teil auf dem Absolutwert von I basierendes erstes Stärkesignal (5109), Arithmetikmittel (3804) zum Empfang von Zählungen und zur Erzeugung eines zweiten Vorzeichensignals sowie eines zweiten Stärkesignals (5110), das für einen Wert F repräsentativ ist, der im wesentlichen gleich der Differenz zwischen der Summe der Zählungen an aufeinanderfolgenden gemeinsamen Elektroden und der Anzahl von Punkten auf einer gemeinsamen Elektrode ist, ein drittes Stärkesignal (5111), das für einen Wert T repräsentativ ist, der der Anzahl im EIN-Zustand befindlicher Punkte auf allen gemeinsamen Elektroden gleich ist, und ein viertes Stärkesignal, das für einen wert Z repräsentativ ist, der im wesentlichen gleich der Anzahl im EIN-Zustand befindlicher Punkte auf der nächsten ausgewählten gemeinsamen Elektrode ist, und wobei die Multiplextreibermittel (5105) eine Spannungsausgabe zum Kompensieren der Nichtauswahlspannung während abwechselnder Perioden nach Maßgabe des ersten Stärke- und ersten Vorzeichensignals sowie des zweiten Stärke- und zweiten Vorzeichensignals und ferner nach Maßgabe des dritten Stärkesignals und zum Kompensieren der Auswahlspannung nach Maßgabe des vierten Stärkesignals liefert.

5. Vorrichtung nach einem der Ansprüche 1, 2, 3 oder 4,
dadurch gekennzeichnet,
daß das Kompensationsmittel (104; 2404; 3704; 4504; 5104) eine Pulsweitensteuerschaltung (405; 2503; 3805) zum Empfangen des Werts I, Z, F oder Z′ und Erzeugen des Stärkesignals (1091; 2409; 3709; 4509, 5109) umfaßt.

6. Vorrichtung nach einem der Anspruche 1, 2, 3, 4 oder 5,
dadurch gekennzeichnet,
daß das Kompensationsmittel (104; 904; 3704; 4504; 5104) erste Zählermittel (402) zum Speichern und, wenn eine nächste Zählung von Zählmitteln (401) empfangen wird, Ausgeben der ersten gespeicherten Zählung an die Arithmetikmittel (3804) und an ein zweites Zählermittel (403) zum Speichern und, wenn eine nächste Zählung von den ersten Zählermitteln (402) empfangen wird, Ausgeben der zweiten gespeicherten Zählung an die Arithmetikmittel (404; 3804; 4604), welche die ersten und zweiten gespeicherten Zählungen empfangen.

## Revendications

1. Dispositif d'affichage à matrice de cristaux liquides pour présenter des caractères ou un dessin, comprenant une pluralité d'électrodes communes (Y) formées sur un premier substrat (202), une pluralité de segments d'électrodes (X) formés sur un second substrat (203), une couche de cristaux liquides prise en sandwich entre le premier et le second substrats (202, 203), les électrodes communes et les segments d'électrodes (X, Y) se coupant pour former une matrice ayant un point (204 ; 601) à chaque intersection, des moyens de commande de multiplexage pour appliquer des signaux de tension commune comprenant une tension sélective et une tension non-sélective aux électrodes communes (Y), afin de commuter séquentiellement la tension sélective entre les électrodes communes (Y), et pour appliquer des signaux de tension de segment comprenant une tension MARCHE et une tension ARRET aux segments d'électrodes (X), les points (204 ; 601) étant à l'état de MARCHE ou à l'état d'ARRET selon la tension appliquée à l'électrode commune et au segment d'électrode qui se coupent, caractérisé par des moyens de compensation destinés à réduire la diaphotie en faisant varier, au moins, un signal de tension commune ou un signal de tension de segment, en réponse à des signaux de données (103) représentant le caractère ou le dessin à afficher, les moyens de compensation (104 ; 904) comprenant des moyens de comptage (401, 402, 403) qui reçoivent le signal de données (103) pour compter le nombre des points à l'état de MARCHE sur des électrodes communes successives (Y), des moyens arithmétiques (404) pour recevoir les comptes successifs et produire : une valeur I sensiblement égale à la différence entre les comptes successifs, un signal de signe (108) indiquant une augmentation ou une diminution du compte, et un signal d'intensité (109 ; 909) fonction, au moins partiellement, de la valeur absolue de I ; et des moyens de commande par multiplexage (105 ; 905 ; 1405 ; 1605 ; 2105) délivrant des signaux de tension commune (106 ; 906 ; 1406 ; 1606 ; 2106) ou des signaux de tension de segment (107 ; 2107) ayant une dimension et une direction, fonctions au moins, en partie, du signal d'intensité et signal de signe (108, 109 ; 909).

2. Dispositif selon la revendication 1, modifié en ce que les moyens de compensation (3704) comprennent des moyens de comptage (401, 402, 403), recevant des signaux de données (103), pour compter le nombre des points à l'état de MARCHE sur les électrodes communes successives (Y), des moyens arithmétiques (3804) pour recevoir les comptes et en déduire : une valeur F sensiblement égale à la différence entre la somme de deux comptes et le nombre des points d'une électrode commune, un signal de signe (3708) indiquant si cette différence est négative ou positive et un signal d'intensité, fonction, en partie au moins, de la valeur absolue F, et des moyens de commande par multiplexage (105) délivrant des signaux de tension commune (106) ou des signaux de tension de segment (107) ayant une direction et une dimension, fonctions, en partie au moins, des signaux de signe et d'intensité (3708, 3709).

3. Dispositif selon la revendication 1, modifié en ce que les moyens de compensation (4504) comprennent des moyens de comptage (401, 402, 403) qui reçoivent les signaux de données (103) et comptent le nombre des points à l'état de MARCHE sur des électrodes communes successives (Y), des moyens arithmétiques (4604) qui reçoivent les comptes et en déduisent : une valeur Z′ sensiblement égale à la somme du nombre des points à l'état de MARCHE sur l'électrode commune sélectionnée suivante et le produit d'une constante et de la différence entre les comptes successifs, un signal d'intensité (109) fonction, en partie au moins, de la valeur de Z′ et les moyens de commande par multiplexage (2405) formant des signaux de tension commune (4506) ou des signaux de tension de segments (107) ayant une dimension, fonction, en partie au moins, des signaux d'intensité.

4. Dispositif selon la revendication 1, modifié en ce que les moyens de compensation (5104) comprennent des moyens de comptage (401, 402, 403 ; 3301, 3302) pour compter les points à l'état de MARCHE sur des électrodes communes successives (Y), des moyens arithmétiques (404) pour recevoir des comptes et en déduire : une valeur I sensiblement égale la différence entre des comptes successifs, un premier signal de signe indiquant un compte en augmentation ou en diminution et un premier signal d'intensité (5109) fonction, au moins en partie, de la valeur absolue de I, des moyens arithmétiques (3804) qui reçoivent des comptes et forment un second signal de signe et un second signal d'intensité (5110) représentatif d'une valeur F, sensiblement égale à la différence entre la somme des comptes existant sur des électrodes communes successives et le nombre des points d'une électrode commune, un troisième signal d'intensité (5111) représentant une valeur T égale au nombre des points à l'état de MARCHE sur toutes les électrodes communes, et un quatrième signal d'intensité, représentatif d'une valeur Z sensiblement égale au nombre des points à l'état de MARCHE sur la prochaine électrode commune sélectionnée, et les moyens de commande par multiplexage (5105) délivrant une tension destinée à compenser la tension non sélective pendant des périodes alternées en réponse au premier signal d'intensité au premier signal de signe, au second signal d'intensité, et au second signal de signe et en réponse encore au troisième signal d'intensité et pour compenser la tension sélective en réponse au quatrième signal d'intensité.

5. Dispositif selon l'une quelconque des revendications 1, 2, 3 ou 4, caractérisé en ce que les moyens de compensation (104 ; 2404 ; 3704 ; 4504 ; 5104) comprennent un circuit (405 ; 2503 ; 3805) de commande de largeur d'impulsion qui reçoit la valeur I, Z, F ou Z′ et produit le signal d'intensité (1091 ; 2409 ; 3709 ; 4509 ; 5109).

6. Dispositif selon l'une quelconque des revendications 1, 2, 3, 4 ou 5, caractérisé en ce que les moyens de compensation (104 ; 904 ; 3704 ; 4504 ; 5104) comprennent un premier moyen de comptage (402) pour garder en mémoire et, quand un compte suivant est reçu du moyen de comptage (401) délivrer le premier compte, gardé en mémoire, aux moyens arithmétiques (3804) et à un second moyen de comptage (403) qui le garde en mémoire et, quand un compte suivant arrive du premier moyen de comptage (402) délivre le second compte gardé en mémoire, aux moyens arithmétiques (403 ; 3804 ; 4604) recevant le premier et le second comptes, gardés en mémoire.
